# EUROPEAN PATENT APPLICATION

(11) **EP 4 611 411 A1**
(43) Date of publication of application: **03.09.2025**
(21) Application number: 23885034.1
(22) Date of filing: 02.11.2023
(51) Int. Cl.: H04W 12/041

(54) **COMMUNICATION METHOD AND COMMUNICATION APPARATUS**

(30) Priority: 04.11.2022 CN 202211379655
(71) Applicant: Huawei Technologies Co., Ltd., Shenzhen, Guangdong 518129 (CN)
(72) Inventor: LIU, Wenfeng, Shenzhen, Guangdong 518129 (CN); LI, He, Shenzhen, Guangdong 518129 (CN); LEI, Ao, Shenzhen, Guangdong 518129 (CN); WU, Yizhuang, Shenzhen, Guangdong 518129 (CN); GUO, Tao, Shenzhen, Guangdong 518129 (CN)
(74) Representative: Isarpatent
(86) International application number: PCT/CN2023/129280
(87) International publication number: WO 2024/094108

(57) **Abstract**

Embodiments of this application provide a communication method and a communication apparatus. The method includes: A first communication apparatus determines whether a first remote user key needs to be updated, and when determining that the first remote user key does not need to be updated, initiates a proximity-based service authentication request. An authentication server function network element obtains the first remote user key and a subscription permanent identifier of the first communication apparatus, and when determining that the first communication apparatus has permission to use a relay service, generates a first proximity-based service key, where the first proximity-based service key is used by the first communication apparatus to establish a security connection to a second communication apparatus, to provide a proximity-based service. In this application, an update mechanism for the first remote user key is added, and when it is determined that the first remote user key does not need to be updated, an authorization check performed by the authentication server function network element or a proximity-based service anchor function network element to determine whether the first communication apparatus is authorized to use a proximity-based service is added. In addition, the first remote user key may continue to be used only after the authorization check succeeds. This improves user experience when ensuring secure network communication on a proximity-based service control plane.

## Description

This application claims priority to Chinese Patent Application No. 202211379655.5, filed with the China National Intellectual Property Administration on November 4, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In a communication system, such as a 5th generation (5th generation, 5G) communication system, wide use of data services increases a user's demand for a bandwidth. For example, in a proximity-based service (proximity-based service, ProSe) control plane (control plane, CP) process, when a user is outside coverage of a network or a communication signal between the user and the network is poor, a remote user to relay user to network communication manner is established, to support a remote user to obtain a network service.

To ensure network security, identity authentication and authorization need to be performed on a terminal device that accesses a network. The terminal device can access a 3rd generation partnership project (3rd generation partnership project, 3GPP) network only after being authenticated and authorized, and the terminal device further requests to establish a protocol data unit (protocol data unit, PDU) session to access various services on a data network (data network, DN).

However, there is a security risk in communication between a remote user and a relay user. This may cause key leakage, sensitive information leakage, and malicious monitoring or tampering on a running status. How to ensure network communication security is a problem that needs to be currently resolved.

### SUMMARY

This application provides a communication method and a communication apparatus, to ensure network communication security of a proximity-based service.

According to a first aspect, a communication method is provided. The method may be performed by a remote terminal device (for example, remote UE), or may be performed by a chip or a circuit used in the remote UE. This is not limited in this application. For ease of description, the following uses an example in which the remote UE performs the method for description.

The method includes: A first communication apparatus determines whether a first remote user key needs to be updated; when determining that the first remote user key needs to be updated, the first communication apparatus sends a proximity-based service authentication request message to an authentication server function network element through a second communication apparatus, where the proximity-based service authentication request message includes a subscription concealed identifier of the first communication apparatus and relay service code, and the relay service code indicates the first communication apparatus to establish a security connection to the second communication apparatus; and the first communication apparatus generates a second remote user key.

According to the solution provided in this application, an update mechanism that is for the first remote user key and that is executed by the first communication apparatus is added, to avoid a security risk caused by long-term use of the first remote user key, and improve user experience when ensuring network communication security on a proximity-based service control plane.

With reference to the first aspect, in some implementations of the first aspect, that a first communication apparatus determines whether a first remote user key needs to be updated includes: The first communication apparatus determines, according to a local policy, whether the first remote user key needs to be updated.

With reference to the first aspect, in some implementations of the first aspect, that the first communication apparatus generates a second remote user key includes: The first communication apparatus generates the second remote user key based on a subscription permanent identifier of the first communication apparatus, the relay service code, and a root key of the authentication server function network element.

With reference to the first aspect, in some implementations of the first aspect, when determining that the first remote user key does not need to be updated, the first communication apparatus sends the proximity-based service authentication request message to the authentication server function network element through the second communication apparatus, where the proximity-based service authentication request message includes an identifier of the first remote user key and the relay service code.

According to a second aspect, a communication method is provided. The method may be performed by an authentication server function (for example, an AUSF (remote)) network element of a remote terminal device, or may be performed by a chip or a circuit for the AUSF (remote). This is not limited in this application. For ease of description, the following uses an example in which the AUSF (remote) performs the method for description.

The method includes: The authentication server function network element obtains a first remote user key of a first communication apparatus; and when determining that the first communication apparatus has permission to use a relay service, the authentication server function network element generates a first proximity-based service key based on the first remote user key, where the first proximity-based service key is used by the first communication apparatus to establish a security connection to a second communication apparatus.

According to the solution provided in this application, when the first remote user key continues to be used, an authorization check performed by the authentication server function network element to determine whether the first communication apparatus is authorized to use a proximity-based service is added, the first remote user key may continue to be used only after the authorization check succeeds, and the first proximity-based service key is further generated. This improves user experience when ensuring secure network communication on a proximity-based service control plane.

With reference to the second aspect, in some implementations of the second aspect, that an authentication server function network element obtains a first remote user key includes: The authentication server function network element receives a proximity-based service authentication request message from the first communication apparatus through the second communication apparatus, where the proximity-based service authentication request message includes an identifier of the first remote user key and relay service code, and the relay service code indicates the first communication apparatus to establish a security connection to the second communication apparatus; the authentication server function network element sends a key query request message to a proximity-based service anchor function network element, where the key query request message includes the identifier of the first remote user key and the relay service code; and the authentication server function network element receives a key query response message from the proximity-based service anchor function network element, where the key query response message includes the first remote user key and a subscription permanent identifier of the first communication apparatus.

With reference to the second aspect, in some implementations of the second aspect, the authentication server function network element determines whether the first communication apparatus has permission to use the relay service.

With reference to the second aspect, in some implementations of the second aspect, that the authentication server function network element determines whether the first communication apparatus has permission to use the relay service includes: The authentication server function network element sends an authorization check request message to a unified data management network element, where the authorization check request message includes the subscription permanent identifier of the first communication apparatus; the authentication server function network element receives an authorization check response message from the unified data management network element, where the authorization check response message includes an authorization check result; and the authentication server function network element determines, based on the authorization check result, whether the first communication apparatus has permission to use the relay service.

With reference to the second aspect, in some implementations of the second aspect, that the authentication server function network element receives a key query response message from the proximity-based service anchor function network element includes: When the proximity-based service anchor function network element determines that the first communication apparatus has permission to use the relay service, the authentication server function network element receives the key query response message from the proximity-based service anchor function network element; and the authentication server function network element determines, based on the first remote user key carried in the key query response message, that the first communication apparatus has permission to use the relay service.

With reference to the second aspect, in some implementations of the second aspect, when the proximity-based service anchor function network element determines that the first communication apparatus has permission to use the relay service, the key query response message further includes indication information; and the authentication server function network element determines, based on the indication information, that the first communication apparatus has permission to use the relay service.

With reference to the second aspect, in some implementations of the second aspect, before the authentication server function network element determines whether the first communication apparatus has permission to use a relay service, the method further includes: The authentication server function network element determines whether the first remote user key needs to be updated.

With reference to the second aspect, in some implementations of the second aspect, that the proximity-based service anchor function network element, determines whether the first remote user key needs to be updated includes: The authentication server function network element determines, according to a local policy, whether the first remote user key needs to be updated.

With reference to the second aspect, in some implementations of the second aspect, that the authentication server function network element determines whether the first communication apparatus has permission to use a relay service includes: When determining that the first remote user key does not need to be updated, the authentication server function network element determines whether the first communication apparatus has permission to use the relay service.

In a current PC5 security connection establishment process on a ProSe control plane, a generated PC5 security key is a key used for a long time, and it is difficult to ensure use security of a 5GPRUK. This may cause a network security risk, such as key leakage and hacker attack. According to a 5GPRUK update mechanism provided in the technical solution of this application, each of remote UE, an AUSF, or a PAnF actively triggers to update the 5GPRUK on the ProSe control plane. This improves user experience when ensuring D2D network security.

According to a third aspect, a communication method is provided. The method may be performed by a proximity-based service anchor function (for example, a PAnF (remote)) network element of a remote terminal device, or may be performed by a chip or a circuit for the PAnF (remote). This is not limited in this application. For ease of description, the following uses an example in which the PAnF (remote) performs the method for description.

The method includes: The proximity-based service anchor function network element obtains a first remote user key of a first communication apparatus; and when determining that the first communication apparatus has permission to use a relay service, the proximity-based service anchor function network element sends the first remote user key to an authentication server function network element.

According to the solution provided in this application, when the first remote user key is obtained, an authorization check performed by the proximity-based service anchor function network element to determine whether the first communication apparatus is authorized to use a proximity-based service is added, the first remote user key may continue to be used only after the authorization check succeeds, and a first proximity-based service key is further generated. This improves user experience when ensuring secure network communication on a proximity-based service control plane.

With reference to the third aspect, in some implementations of the third aspect, that a proximity-based service anchor function network element obtains a first remote user key includes: The proximity-based service anchor function network element receives a key query request message from the authentication server function network element, where the key query request message includes an identifier of the first remote user key and relay service code; and the proximity-based service anchor function network element obtains the first remote user key and a subscription permanent identifier of the first communication apparatus through local query based on the identifier of the first remote user key and the relay service code.

With reference to the third aspect, in some implementations of the third aspect, the proximity-based service anchor function network element determines whether the first communication apparatus has permission to use the relay service.

With reference to the third aspect, in some implementations of the third aspect, that the proximity-based service anchor function network element determines whether the first communication apparatus has permission to use the relay service includes: The proximity-based service anchor function network element sends an authorization check request message to a unified data management network element, where the authorization check request message includes the subscription permanent identifier of the first communication apparatus; the proximity-based service anchor function network element receives an authorization check response message from the unified data management network element, where the authorization check response message includes an authorization check result; and the proximity-based service anchor function network element determines, based on the authorization check result, whether the first communication apparatus has permission to use the relay service.

With reference to the third aspect, in some implementations of the third aspect, that the proximity-based service anchor function network element determines whether the first communication apparatus has permission to use the relay service includes: The proximity-based service anchor function network element obtains proximity-based service authorization information through local query based on the subscription permanent identifier of the first communication apparatus; and the proximity-based service anchor function network element determines, based on the proximity-based service authorization information, whether the first communication apparatus has permission to use the relay service.

With reference to the third aspect, in some implementations of the third aspect, the proximity-based service anchor function network element receives the proximity-based service authorization information from the authentication server function network element.

With reference to the third aspect, in some implementations of the third aspect, before the proximity-based service anchor function network element determines whether the first communication apparatus has permission to use the relay service, the method further includes: The proximity-based service anchor function network element determines whether the first remote user key needs to be updated.

With reference to the third aspect, in some implementations of the third aspect, that the proximity-based service anchor function network element determines whether the first remote user key needs to be updated includes: The proximity-based service anchor function network element determines, according to a local policy, whether the first remote user key needs to be updated.

With reference to the third aspect, in some implementations of the third aspect, that the proximity-based service anchor function network element determines whether the first remote user key needs to be updated includes: The proximity-based service anchor function network element determines, based on whether relay service code is locally stored, whether the first remote user key needs to be updated.

With reference to the third aspect, in some implementations of the third aspect, that the proximity-based service anchor function network element determines whether the first communication apparatus has permission to use the relay service includes: When determining that the first remote user key does not need to be updated, the proximity-based service anchor function network element determines whether the first communication apparatus has permission to use the relay service.

According to the method disclosed in this application, when remote UE establishes a PC5 security connection on a ProSe control plane, the remote UE determines whether to update a 5GPRUK #1, that is, a 5GPURK update procedure triggered by the remote UE is added, and an SUCI is sent to indicate to update a 5GPRUK. In addition, in the technical solution of this application, when it is determined to continue to use the 5GPRUK #1, and an AUSF (remote) receives the 5GPRUK #1 or a PAnF (remote) receives a 5GPRUK ID #1, a check on whether the remote UE has permission to use a 5G ProSe relay service is added. In addition, a 5GPRUK #1 may continue to be used only after the check succeeds. This improves user experience when ensuring secure network communication.

According to a fourth aspect, a communication method is provided. The method includes: A first communication apparatus determines whether a first remote user key needs to be updated; when determining that the first remote user key does not need to be updated, the first communication apparatus sends a first proximity-based service authentication request message to an authentication server function network element through a second communication apparatus, where the first proximity-based service authentication request message includes an identifier of the first remote user key and relay service code, and the relay service code indicates the first communication apparatus to establish a security connection to the second communication apparatus; the authentication server function network element receives the first proximity-based service authentication request message from the first communication apparatus, and the authentication server function network element obtains the first remote user key and a subscription permanent identifier of the first communication apparatus based on the identifier of the first remote user key; and when determining that the first communication apparatus has permission to use a relay service, the authentication server function network element generates a first proximity-based service key based on the first remote user key, where the first proximity-based service key is used by the first communication apparatus to establish a security connection to the second communication apparatus.

According to the solution provided in this application, an update mechanism for the first remote user key is added, and when it is determined that the first remote user key does not need to be updated, an authorization check performed by the authentication server function network element or the proximity-based service anchor function network element to determine whether the first communication apparatus is authorized to use a proximity-based service is added. In addition, the first remote user key may continue to be used only after the authorization check succeeds. This improves user experience when ensuring secure network communication on a proximity-based service control plane.

With reference to the fourth aspect, in some implementations of the fourth aspect, that the authentication server function network element obtains the first remote user key and a subscription permanent identifier of the first communication apparatus based on the identifier of the first remote user key includes: The authentication server function network element sends a key query request message to a proximity-based service anchor function network element, where the key query request message includes the identifier of the first remote user key and the relay service code; the proximity-based service anchor function network element receives the key query request message from the authentication server function network element, and the proximity-based service anchor function network element obtains the first remote user key and the subscription permanent identifier of the first communication apparatus through local query based on the identifier of the first remote user key and the relay service code; the proximity-based service anchor function network element sends a key query response message to the authentication server function network element, where the key query response message includes the first remote user key and the subscription permanent identifier of the first communication apparatus; and the authentication server function network element receives the key query response message from the proximity-based service anchor function network element.

With reference to the fourth aspect, in some implementations of the fourth aspect, the authentication server function network element determines whether the first communication apparatus has permission to use the relay service.

With reference to the fourth aspect, in some implementations of the fourth aspect, that the authentication server function network element determines whether the first communication apparatus has permission to use the relay service includes: The authentication server function network element sends an authorization check request message to a unified data management network element, where the authorization check request message includes a subscription permanent identifier of the first communication apparatus; the unified data management network element receives the authorization check request message from the authentication server function network element, and the unified data management network element performs an authorization check on the first communication apparatus based on the subscription permanent identifier of the first communication apparatus; the unified data management network element sends authorization check response message to the authentication server function network element, where the authorization check response message includes an authorization check result; and the authentication server function network element receives the authorization check response message from the unified data management network element, and the authentication server function network element determines, based on the authorization check result, whether the first communication apparatus has permission to use the relay service.

With reference to the fourth aspect, in some implementations of the fourth aspect, the proximity-based service anchor function network element obtains proximity-based service authorization information through local query based on the subscription permanent identifier of the first communication apparatus; and the proximity-based service anchor function network element determines, based on the proximity-based service authorization information, whether the first communication apparatus has permission to use the relay service.

With reference to the fourth aspect, in some implementations of the fourth aspect, before the proximity-based service anchor function network element sends a key query response message to the authentication server function network element, the method further includes: The proximity-based service anchor function network element sends the authorization check request message to the unified data management network element, where the authorization check request message includes the subscription permanent identifier of the first communication apparatus; the unified data management network element receives the authorization check request message from the proximity-based service anchor function network element, and the unified data management network element performs an authorization check on the first communication apparatus based on the subscription permanent identifier of the first communication apparatus; the unified data management network element sends the authorization check response message to the proximity-based service anchor function network element, where the authorization check response message includes an authorization check result; and the proximity-based service anchor function network element receives the authorization check response message from the unified data management network element, and the proximity-based service anchor function network element determines, based on the authorization check result, whether the first communication apparatus has the permission to use the relay service.

With reference to the fourth aspect, in some implementations of the fourth aspect, that the proximity-based service anchor function network element sends a key query response message to the authentication server function network element includes: When determining that the first communication apparatus has permission to use the relay service, the proximity-based service anchor function network element sends the key query response message to the authentication server function network element; and the authentication server function network element receives the key query response message from the proximity-based service anchor function network element.

That the authentication server function network element determines whether the first communication apparatus has permission to use the relay service includes: The authentication server function network element determines, based on the first remote user key, that the first communication apparatus has permission to use the relay service.

With reference to the fourth aspect, in some implementations of the fourth aspect, when it is determined that the first remote user key needs to be updated, the first communication apparatus sends a second proximity-based service authentication request message to the authentication server function network element through the second communication apparatus, where the second proximity-based service authentication request message includes a subscription concealed identifier of the first communication apparatus and the relay service code; the authentication server function network element receives the second proximity-based service authentication request message from the first communication apparatus, and the authentication server function network element performs proximity-based service authentication on the first communication apparatus based on the subscription concealed identifier of the first communication apparatus; and when determining that the proximity-based service authentication succeeds, the authentication server function network element generates a second remote user key, and the first communication apparatus generates the second remote user key.

According to the method disclosed in this application, when remote UE establishes a PC5 security connection on a ProSe control plane, the remote UE determines whether to update a 5GPRUK #1, that is, a 5GPURK update procedure triggered by the remote UE is added, and an SUCI is sent to indicate to update a 5GPRUK. In addition, in the technical solution of this application, when it is determined to continue to use the 5GPRUK #1, and an AUSF (remote) receives the 5GPRUK #1 or a PAnF (remote) receives a 5GPRUK ID #1, a check on whether the remote UE has permission to use a 5G ProSe relay service is added. In addition, a 5GPRUK #2 may continue to be used only after the check succeeds. This improves user experience when ensuring secure network communication.

According to a fifth aspect, a first communication apparatus, for example, remote UE, is provided. The apparatus includes: a processing unit, configured to determine whether a first remote user key needs to be updated; and a transceiver unit, configured to: when it is determined that the first remote user key needs to be updated, send a proximity-based service authentication request message to an authentication server function network element through a second communication apparatus, where the proximity-based service authentication request message includes a subscription concealed identifier of the first communication apparatus and relay service code, and the relay service code indicates the first communication apparatus to establish a security connection to the second communication apparatus; and the processing unit is further configured to:
generate a second remote user key when determining that proximity-based service authentication succeeds.

According to the solution provided in this application, an update mechanism that is for the first remote user key and that is executed by the first communication apparatus is added, to avoid a security risk caused by long-term use of the first remote user key, and improve user experience when ensuring network communication security on a proximity-based service control plane.

The transceiver unit may perform receiving and sending processing in the first aspect, and the processing unit may perform processing other than receiving and sending in the first aspect.

According to a sixth aspect, an authentication server function network element, for example, an AUSF (remote), is provided. The network element includes: a transceiver unit, configured to obtain a first remote user key of a first communication apparatus, for example, a receiving unit, configured to receive a key query response message from a proximity-based service anchor function network element, where the key query response message includes the first remote user key; and a processing unit, configured to: when it is determined that the first communication apparatus has permission to use a relay service, generate a first proximity-based service key based on the first remote user key, where the first proximity-based service key is used by the first communication apparatus to establish a security connection to a second communication apparatus.

According to the solution provided in this application, when the first remote user key continues to be used, an authorization check performed by the authentication server function network element to determine whether the first communication apparatus is authorized to use a proximity-based service is added, the first remote user key may continue to be used only after the authorization check succeeds, and the first proximity-based service key is further generated. This improves user experience when ensuring secure network communication on a proximity-based service control plane.

The transceiver unit may perform receiving and sending processing in the second aspect, and the processing unit may perform processing other than receiving and sending in the second aspect.

According to a seventh aspect, a proximity-based service anchor function network element, for example, a PAnF, is provided. The network element includes: a processing unit, configured to: obtain a first remote user key of a first communication apparatus; and a transceiver unit, configured to: when it is determined that the first communication apparatus has permission to use a relay service, send the first remote user key to an authentication server function network element.

According to the solution provided in this application, when the first remote user key is obtained, an authorization check performed by the proximity-based service anchor function network element to determine whether the first communication apparatus is authorized to use a proximity-based service is added, the first remote user key may continue to be used only after the authorization check succeeds, and a first proximity-based service key is further generated. This improves user experience when ensuring secure network communication on a proximity-based service control plane.

The transceiver unit may perform receiving and sending processing in the third aspect, and the processing unit may perform processing other than receiving and sending in the third aspect.

According to an eighth aspect, a communication apparatus is provided, including a transceiver, a processor, and a memory. The processor is configured to control the transceiver to receive/send a signal, the memory is configured to store a computer program, and the processor is configured to invoke and run the computer program from the memory, to enable the communication apparatus to perform the method in any one of the first aspect to the fourth aspect and the possible implementations thereof.

Optionally, there are one or more processors, and there are one or more memories.

Optionally, the memory may be integrated with the processor, or the memory and the processor are separately disposed.

Optionally, the communication apparatus further includes a transmitter device (transmitter) and a receiver device (receiver).

According to a ninth aspect, a communication system is provided, including one or more of the foregoing first communication apparatus (remote UE), the second communication apparatus (relay UE), the authentication server function network element AUSF (remote), and the proximity-based service anchor function network element PAnF (remote).

According to a tenth aspect, a computer-readable storage medium is provided. The computer-readable storage medium stores a computer program or code, and when the computer program or the code is run on a computer, the computer is enabled to perform the method in any one of the first aspect to the fourth aspect and the possible implementations thereof.

According to an eleventh aspect, a chip is provided, including at least one processor. The at least one processor is coupled to a memory, the memory is configured to store a computer program, and the processor is configured to invoke and run the computer program from the memory, to enable a communication apparatus on which a chip system is installed to perform the method in any one of the first aspect to the fourth aspect and the possible implementations thereof.

The chip may include an input circuit or interface configured to send information or data, and an output circuit or interface configured to receive information or data.

According to a twelfth aspect, a computer program product is provided. The computer program product includes computer program code, and when the computer program code is run by a communication apparatus, the communication apparatus is enabled to perform the method in any one of the first aspect to the fourth aspect and the possible implementations thereof.

### BRIEF DESCRIPTION OF DRAWINGS

FIG. 1 is a schematic diagram of a network architecture 100 to which an embodiment of this application is applicable;
FIG. 2A, FIG. 2B, and FIG. 2C are a schematic diagram of a PC5 security connection establishment procedure 200 on a control plane;
FIG. 3A and FIG. 3B are an example flowchart of a communication method 300 according to an embodiment of this application;
FIG. 4A, FIG. 4B, FIG. 4C, and FIG. 4D are an example flowchart of a communication method 400 according to an embodiment of this application;
FIG. 5A, FIG. 5B, FIG. 5C, and FIG. 5D are an example flowchart of a communication method 500 according to an embodiment of this application;
FIG. 6A, FIG. 6B, FIG. 6C, and FIG. 6D are an example flowchart of a communication method 600 according to an embodiment of this application;
FIG. 7A, FIG. 7B, FIG. 7C, and FIG. 7D are an example flowchart of a communication method 700 according to an embodiment of this application;
FIG. 8 is a schematic diagram of a structure of a communication apparatus 1000 according to an embodiment of this application;
FIG. 9 is a schematic diagram of a structure of a communication apparatus 2000 according to an embodiment of this application; and
FIG. 10 is a schematic diagram of a structure of a chip system 3000 according to an embodiment of this application.

### DESCRIPTION OF EMBODIMENTS

The following describes technical solutions of this application with reference to accompanying drawings.

Technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or other communication systems.

In a communication system, a part operated by an operator may be referred to as a public land mobile network (public land mobile network, PLMN), or may be referred to as an operator network, or the like. The PLMN is a network established and operated by a government or an operator approved by the government to provide a land mobile communication service for the public, and is mainly a public network in which a mobile network operator (mobile network operator, MNO) provides a mobile broadband access service for a user. A PLMN described in embodiments of this application may be specifically a network that complies with a requirement of a 3rd generation partnership project (3rd generation partnership project, 3GPP) standard, which is referred to as a 3GPP network for short. The 3GPP network generally includes but is not limited to a 5G network, a 4th generation mobile communication (4^{th} generation, 4G) network, and another future communication system, for example, a 6th generation (6^{th} generation, 6G) network.

For ease of description, a 5G network is used as an example for description in embodiments of this application.

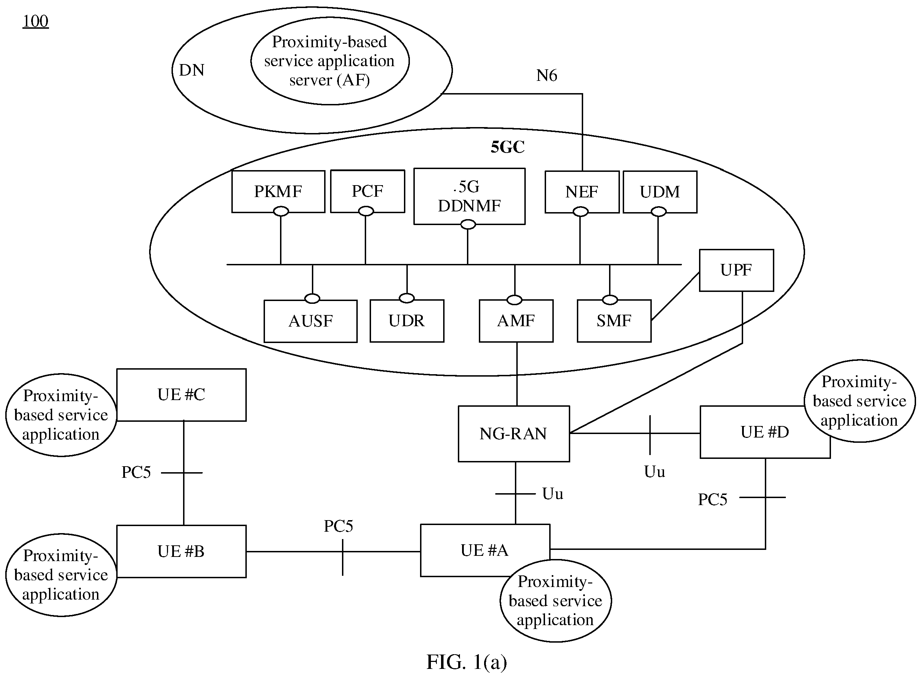

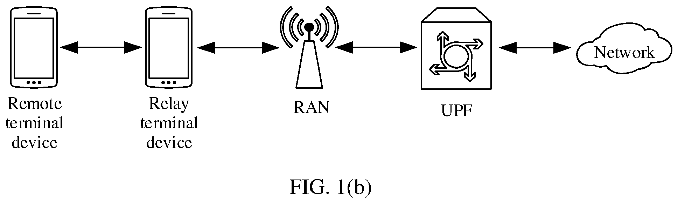

FIG. 1 is a schematic diagram of a network architecture 100 to which an embodiment of this application is applicable. As shown in (a) in FIG. 1, the network architecture may specifically include the following network elements:
1. User equipment (user equipment, UE): User equipment may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, a PDA), a handheld device with a wireless communication function, a computing device or another processing device connected to a wireless modem, a vehicle-mounted device, an unmanned aerial vehicle, a wearable device, a terminal device in a 5G network, a terminal device in an evolved PLMN, or the like. This is not limited in embodiments of this application. The UE may be connected to a next generation radio access network (next generation radio access network, NG-RAN) device through a Uu interface. For example, UE #A and UE #D shown in (a) in FIG. 1 are connected to an NG-RAN through a Uu interface.
   Compared with UE for conventional cellular network communication, UEs that can be used for ProSe communication need to have a proximity-based service application (proximity-based service application, ProSe application) function. Two UEs that have a proximity-based service application (ProSe application) function may also be connected through a PC5 interface. For example, the UE #A and UE #B shown in (a) in FIG. 1 are connected through a PC5 interface, the UE #B and UE #C are connected through a PC5 interface, and the UE #A and the UE #D are connected through a PC5 interface.
2. Access network (access network, AN): An access network provides a network access function for an authorized user in a specific area, and can use transmission tunnels with different quality based on levels of users, service requirements, and the like. The access network may be an access network using different access technologies. Current access network technologies include a radio access network technology used in a 3rd generation (3rd generation, 3G) system, a radio access network technology used in a 4G system, or an NG-RAN technology (such as a radio access technology used in a 5G system) shown in (a) in FIG. 1.

An access network that implements an access network function based on a wireless communication technology may be referred to as a radio access network (radio access network, RAN). The radio access network can manage radio resources, provide an access service for a terminal, and further complete forwarding of a control signal and user data between the terminal and a core network.

A radio access network device may be, for example, a base station (NodeB), an evolved NodeB (evolved NodeB, eNB or eNodeB), or a next generation node base station (next generation node base station, gNB) in a 5G mobile communication system, for example, a base station in a mobile communication system or an access point (access point, AP) in a Wi-Fi wireless hotspot (Wi-Fi) system, may be a radio controller in a cloud radio access network (cloud radio access network, CRAN) scenario, or the radio access network device may be a relay station, an access point, a vehicle-mounted device, an unmanned aerial vehicle, a wearable device, a network device in a 5G network, a network device in an evolved PLMN, or the like. A specific technology and a specific device form that are used by the radio access network device are not limited in embodiments of this application.

3. Access management network element: An access management network element is mainly used for mobility management and access management, is responsible for transferring a user policy between user equipment and a policy control function (policy control function, PCF) network element, and may be configured to implement another function other than session management in functions of a mobility management entity (mobility management entity, MME), for example, an access authorization (or authentication) function.

An access and mobility management function (access and mobility management function, AMF) network element performs a NAS connection to UE, and has a same 5G NAS security context as the UE. The 5G NAS security context includes a NAS layer key, identifier information corresponding to the NAS layer key, UE security capability, and uplink and downlink NAS COUNT values. The NAS layer key includes a NAS encryption key and a NAS integrity protection key that are respectively used to protect confidentiality and integrity of a NAS message.

In a 5G communication system, the access management network element may be an AMF network element. In a future communication system, the access management network element may still be an AMF network element, or may have another name. This is not limited in this application.

4. Session management network element: A session management network element is mainly for session management, allocation and management of an internet protocol (internet protocol, IP) address of user equipment, selection and management endpoints of interfaces of a user plane function, a policy control function, and a charging function, downlink data notification, and the like.

In a 5G communication system, the session management network element may be a session management function (session management function, SMF) network element. In a future communication system, the session management network element may still be an SMF network element, or may have another name. This is not limited in this application.

5. User plane network element: A user plane network element is used to perform functions such as packet routing and forwarding, quality of service (quality of services, QoS) processing on user plane data, completing of user plane data forwarding, session/flow-level based charging statistics, bandwidth limiting, and the like.

In a 5G communication system, the user plane network element may be a user plane function (user plane function, UPF) network element. In a future communication system, the user plane network element may still be a UPF network element, or may have another name. This is not limited in this application.

6. Data network network element: A data network network element is used to provide a network for data transmission.

In a 5G communication system, the data network network element may be a data network (data network, DN) network element. In a future communication system, the data network network element may still be a DN network element, or may have another name. This is not limited in this application.

7. Policy control network element: A policy control network element is used to provide guidance on a unified policy framework for network behavior, provide policy rule information for a control plane function network element (for example, an AMF or SMF network element), and the like.

In a 4G communication system, the policy control network element may be a policy and charging rules function (policy and charging rules function, PCRF) network element. In a 5G communication system, the policy control network element may be a policy control function (policy control function, PCF) network element. In a future communication system, the policy control network element may still be a PCF network element, or may have another name. This is not limited in this application.

8. Data management network element: A data management network element is used for user equipment identifier processing, access authentication, registration, mobility management, and the like.

In a 5G communication system, the data management network element may be a unified data management (unified data management, UDM) network element. In a 4G communication system, the data management network element may be a home subscriber server (home subscriber serve, HSS) network element. In a future communication system, the data management network element may still be a UDM network element, or may have another name. This is not limited in this application.

9. Data repository network element: A data repository network element is responsible for a function of storing types of data such as subscription data, policy data, and application data.

In a 5G communication system, the data repository network element may be a unified data repository (unified data repository, UDR) network element. In a future communication system, the data repository network element may still be a UDR network element, or may have another name. This is not limited in this application.

10. Network exposure function entity: A network exposure function (network exposure function, NEF) entity is configured to securely expose, to the outside, a service, a capability, and the like provided by a 3GPP network function.

11. ProSe application server (application server, AS): A ProSe application server may be an application function (application function, AF) of a DN, or may be an AS that provides a ProSe service. An AF with a ProSe application server function has all functions of the AF defined in Release 23.501 R-15 and has related functions for the ProSe service. In other words, in a user plane architecture, the ProSe application server performs user plane communication with UE by using a UE-RAN-UPF-AF path. Alternatively, the ProSe application server may communicate with another network function (network function, NF) in a 5G core network (5G core network, 5GC) in a control plane architecture by using an NEF. For example, the ProSe application server may communicate with a PCF by using the NEF. If the ProSe application server is an AF of a DN, and the AF is arranged by an operator of a 5GC, the ProSe application server may further directly communicate with another NF in the 5GC in a control plane architecture without using an NEF, for example, directly communicate with a PCF.

12. 5G direct communication discovery name management function (direct discovery name management function, DDNMF): A 5G direct discovery name management function has a function of allocating and processing a mapping relationship between a proximity-based service application identifier (ProSe application identifier) and proximity-based service application code (ProSe application code) for open proximity-based service discovery (open ProSe discovery). In restricted ProSe direct discovery (restricted ProSe direct discovery), the 5G DDNMF may communicate with a proximity-based service application server through a PC2 interface, to process authorization of a discovery request (discovery request), and also has a function of allocating and processing a mapping relationship between an application identifier (application identifier) and code used in a restricted proximity-based service. The code used in the restricted proximity-based service includes proximity-based service restricted code (ProSe restricted code), proximity-based service query code (ProSe query code), and proximity-based service response code (ProSe response code).

In a current standard, it is defined that the 5G DDNMF is at a PLMN granularity, that is, one PLMN has only one 5G DDNMF. One 5G DDNMF may be uniquely determined by using mobile country code (mobile country code, MCC) and mobile network code (mobile network code, MNC).

13. Authentication server function (authentication server function, AUSF): After receiving an authentication request initiated by a subscribed user, an AUSF may authenticate and/or authorize the subscribed user based on authentication information and/or authorization information stored in a UDM, or generate authentication information and/or authorization information of the subscribed user by using the UDM. The AUSF may feed back the authentication information and/or the authorization information to the subscribed user.

14. Proximity-based service key management function (ProSe key management function, PKMF): A Proximity-based service key management function may be responsible for generating and distributing, for UE that uses a proximity-based service, a key for a PC5 interface connection, and the UE needs to interact with the PKMF through a control plane to obtain the key for the PC5 interface connection.

15. Proximity-based service anchor function (ProSe anchor function, PAnF) network element: A Proximity-based service anchor function network element is configured to store a ProSe security context of UE and a 5GPRUK key, so that after the PAnF subsequently receives a key obtaining request of an AUSF, the PAnF retrieves an associated 5GPRUK based on a 5GPRUK ID.

It may be understood that the foregoing network elements or functions may be network elements in a hardware device, may be software functions running on dedicated hardware, or may be virtualization functions instantiated on a platform (for example, a cloud platform). The foregoing network elements or functions may be implemented by one device, may be jointly implemented by a plurality of devices, or may be one functional module in one device. This is not specifically limited in embodiments of this application.

It should be further understood that the foregoing network architecture that is applicable to embodiments of this application and that is shown in FIG. 1 is merely an example for description, and a network architecture applicable to embodiments of this application is not limited thereto. Any network architecture that can implement functions of the foregoing network elements is applicable to embodiments of this application.

For example, in some network architectures, network function network element entities such as an AMF network element, an SMF network element, a PCF network element, and a UDM network element are all referred to as network function NF network elements. Alternatively, in some other network architectures, a set of network elements such as an AMF network element, an SMF network element, a PCF network element, and a UDM network element may be referred to as a control plane function network element. Because UE needs to interact with a PKMF and a DDNMF through a user plane, network elements such as the PKMF and the DDNMF may be referred to as user plane network elements.

In (b) in FIG. 1, when a remote terminal device (remote UE) is outside a network coverage area or signal quality between the remote terminal device and an access network device is poor (for example, the signal quality is lower than a preset threshold), the remote terminal device may be assisted by a relay terminal device (relay UE), and communication between the remote terminal device and the access network device is implemented through communication between the remote terminal device and the relay terminal device and communication between the relay terminal device and the access network device. As shown in (b) in FIG. 1, in a user plane architecture, the remote terminal device may perform user plane communication by using a UE-RAN-UPF-AF path, that is, the remote terminal device may communicate with a RAN through the relay terminal device.

With rapid development of mobile communication, universal use of new service types, for example, data services such as video chat and virtual reality (virtual reality, VR)/augmented reality (augmented reality, AR), increases a bandwidth requirement of a user. D2D communication allows direct communication between UEs, and the UEs may share a spectrum resource with a cell user under control of a cell network, thereby effectively improving utilization of the spectrum resource. Currently, D2D communication has been applied to 4G and 5G network systems, and is collectively referred to as proximity-based service (proximity-based service, ProSe) communication.

The D2D communication includes one-to-many communication (one to many communication) and one-to-one communication (one to one communication). One-to-many communication corresponds to multicast and broadcast communication, and one-to-one communication corresponds to unicast communication. In one-to-one communication, if transmitter UE is located in a short range of receiver UE, the transmitter UE and the receiver UE may directly communicate with each other after mutual discovery. In D2D communication, UEs communicate with each other through a PC5 interface, and the communication may be used for data plane and signaling plane information transmission.

When UE is outside network coverage or a communication signal between the UE and a RAN is poor, remote UE (remote UE) may be assisted by relay UE (relay UE) to perform communication. To be specific, the remote UE obtains a service through communication between the remote UE and the relay UE and communication between the relay UE and a mobile network. A remote UE-to-relay UE-to-network communication manner is established, so that communication between the UE that is outside the network coverage range and the network may be also supported.

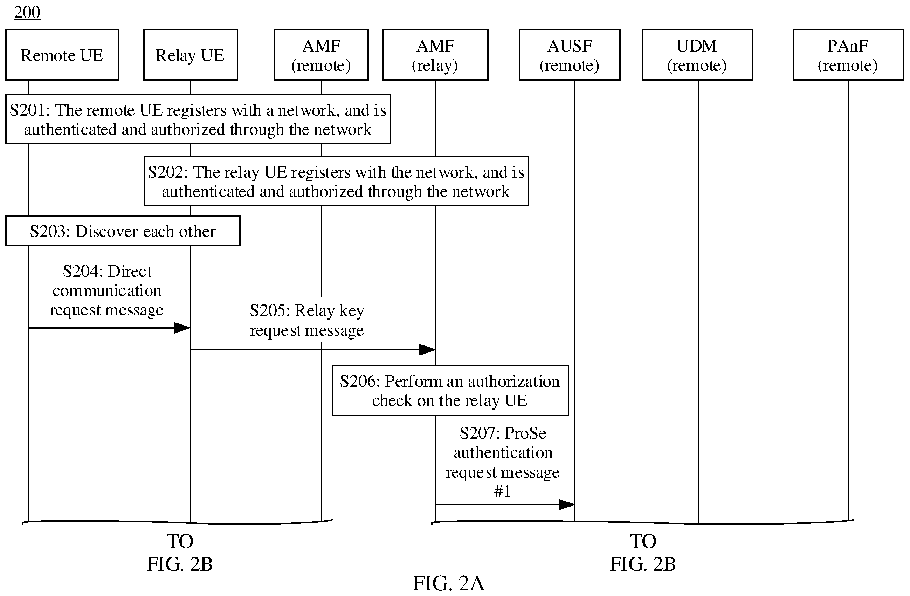

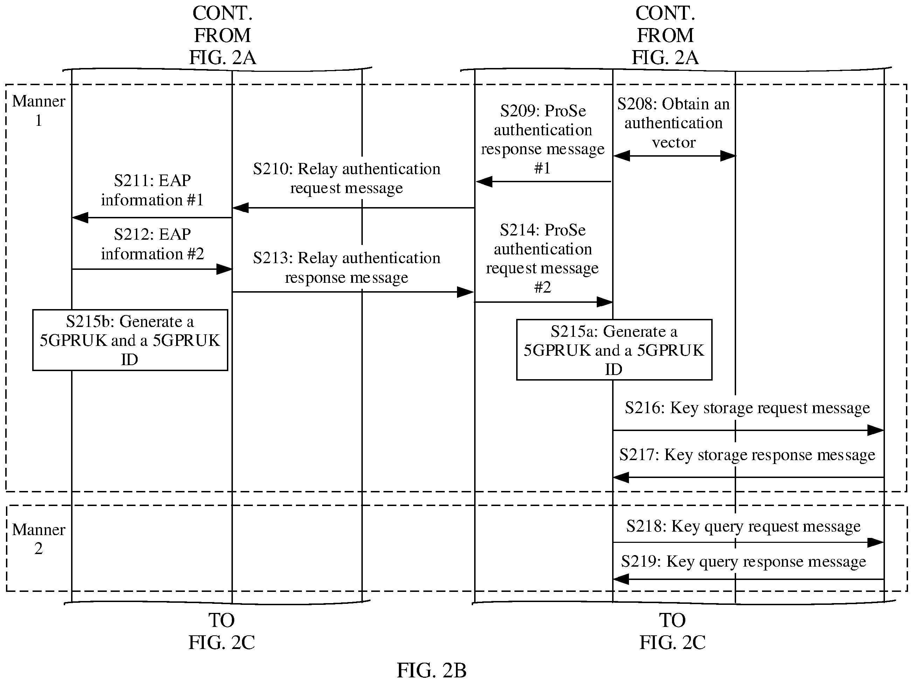

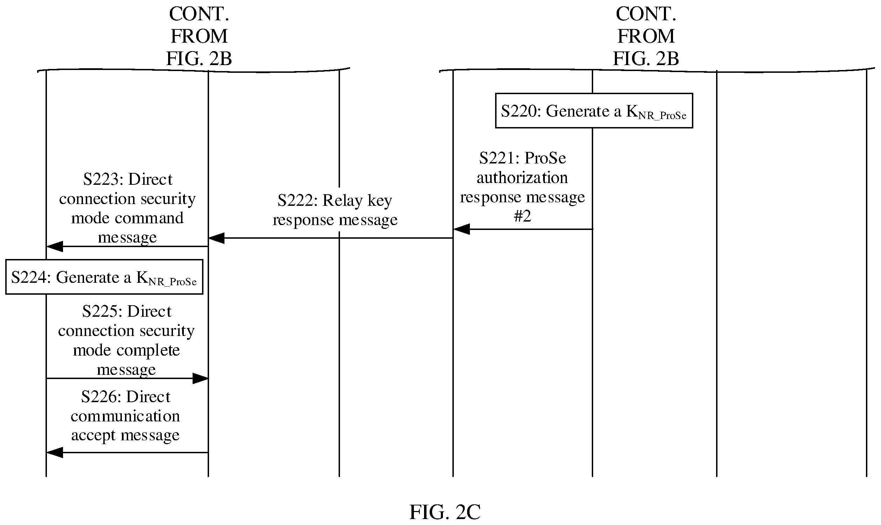

The following describes a PC5 security connection establishment procedure 200 on a ProSe control plane (control plane, CP) with reference to FIG. 2A, FIG. 2B, and FIG. 2C. The procedure on the CP refers to a process in which remote UE obtains, by using a NAS message of relay UE, a key for establishing PC5 security with the relay UE. It should be noted that, in a flowchart of the method 200, an AMF (remote) refers to an AMF corresponding to the remote UE, and the AMF may also be denoted as a remote AMF; and similarly, an AMF (relay) refers to an AMF corresponding to the relay UE, and the AMF may also be denoted as a relay AMF. Other network elements may be explained in a similar manner, and are not described one by one herein. The following uses an example to describe the procedure on the CP with reference to steps in the method 200. For a part not described in detail, refer to a conventional protocol.

S201: Remote UE registers with a network, and is authenticated and authorized through the network.

The remote UE may obtain a ProSe parameter of the remote UE from a network side, and the ProSe parameter includes a discovery parameter, an access relay UE parameter, and the like.

S202: The relay UE registers with the network, and is authenticated and authorized through the network.

S203: The remote UE and the relay UE discover each other.

For example, when preparing to access the network by using a 5G ProSe relay service mode, the remote UE first needs to perform user discovery, that is, search for available relay UE.

S204: The remote UE sends a direct communication request message to the relay UE.

Correspondingly, the relay UE receives the direct communication request message from the remote UE.

For example, the direct communication request message may be a direct communication request message.

The direct communication request message is used to request to establish a PC5 unicast link between secure relay UE and the remote UE, and the direct communication request message carries a subscription concealed identifier (subscription concealed identifier, SUCI) of the remote UE, or a remote user key identifier (5G ProSe remote user key identifier, 5GPRUK ID), relay service code (relay service code, RSC), a random number Nounce_1, and the like.

Specifically, the 5GPRUK ID is a 5G proximity-based service remote user key identifier. The SUCI is obtained through a permanent identity SUPI of the remote UE. The SUCI of the remote UE is used by a UDM to obtain the real identity SUPI of the remote UE. The RSC is used for mutual discovery between the remote UE and the relay UE. For example, the RSC indicates service information that can be provided by the relay UE for the remote UE. In addition, the RSC is further used by a key to generate a root key. Optionally, the RSC is delivered by the network side to the relay UE and the remote UE, or the RSC is a configuration from a USIM card. Nounce_1 is used to generate a sub-key.

It should be noted that, in the technical solutions of this application, a 5GPRUK may be referred to as a proximity-based service remote user key or a remote user key, or the 5GPRUK may be referred to as a CP-PRUK that represents a remote user key that is on the control plane and that is used for a proximity-based service. The foregoing names are merely example names, and a specific name of the key is not limited in this application.

It should be noted that, in a conventional solution, whether the direct communication request message carries the SUCI or the 5GPRUK ID depends on whether the remote UE locally owns the remote user key 5GPRUK. Specifically, if the remote UE stores the 5GPRUK, the direct communication request message includes the 5GPRUK ID; and if the remote UE does not store the 5GPRUK, the direct communication request message includes the SUCI that is of the remote UE and that indicates to create the key 5GPRUK.

S205: The relay UE sends a relay key request message to an AMF (relay).

Correspondingly, the AMF (relay) receives the relay key request message from the relay UE.

For example, the relay key request message may be a relay key request message.

The relay key request message is a NAS message. The AMF is an AMF corresponding to the relay UE, or the AMF is an AMF that provides an access service for the relay UE. The relay key request message includes a transaction identifier (transaction identifier) between the relay UE and the AMF (relay), the SUCI or the 5GPRUK ID of the remote UE, the RSC, Nounce_1, and the like.

S206: The AMF (relay) performs an authorization check on the relay UE (authorize relay UE).

For example, the AMF checks whether the relay UE is authorized to provide a 5G ProSe relay service for the remote UE. In other words, the AMF checks whether the relay UE can be used as a relay device. If the AMF can be used as a relay device, subsequent procedures are performed.

S207: The AMF (relay) sends a ProSe authentication request message #1 to an AUSF (remote).

Correspondingly, the AUSF (remote) receives the ProSe authentication request message #1 from the AMF (relay).

For example, the ProSe authentication request message #1 may be a Nausf_UEAuthentication_ ProseAuthenticate Request message.

The AUSF corresponds to the remote UE, and the ProSe authentication request message #1 carries the SUCI or the 5GPRUK ID of the remote UE, the RSC, Nounce_1, and the like.

Then, the AUSF (remote) determines, based on whether the received ProSe authentication request message #1 carries the SUCI or the 5GPRUK ID of the remote UE, to perform the following Manner 1 or Manner 2. That is, when the ProSe authentication request message #1 carries the SUCI of the remote UE, Manner 1 is performed, that is, steps S208 to 217 are performed; and when the ProSe authentication request message #1 carries the 5GPRUK ID, Manner 2 is performed, that is, steps S218 and S219 are performed. Further, after Manner 1 or Manner 2 is performed, the AUSF performs a step S220.

### Manner 1:

It should be understood that this manner indicates that the remote UE does not locally store the 5GPRUK. Therefore, the network side needs to authenticate the remote UE and create the key 5GPRUK.

S208: The AUSF (remote) obtains an authentication vector (authentication vector, AV) through a UDM (remote).

For example, the AUSF sends an authentication vector request message to the UDM, to request to obtain the authentication vector. Correspondingly, the UDM returns the authentication vector to the AUSF based on the request of the AUSF. It should be understood that the authentication vector is a four-tuple and includes KAUSF_P.

An interaction message between the AUSF and the UDM may be Nudm_UEAuthentication_GetProseAV (AV requied).

It should be noted that, in the step S208, the UDM (remote) checks whether the remote UE is authorized to use a 5G ProSe relay service. Specifically, the UDM (remote) first obtains the permanent identity SUPI of the UE, and the UDM determines, based on subscription data corresponding to the SUPI, whether the remote UE has permission to use a ProSe service. After the authorization check on the remote UE succeeds, a subsequent ProSe authentication procedure is performed.

In addition, the AUSF (remote) sends the SUCI of the remote UE to the UDM (remote), and the UDM (remote) converts the SUCI of the remote UE into the SUPI of the remote UE and returns the SUPI to the AUSF (remote).

Further, after obtaining the authentication vector, the AUSF (remote) triggers the ProSe authentication procedure of the remote UE. That is, the AUSF (remote) performs ProSe authentication on the remote UE through the relay UE. A specific procedure is shown in steps S209 to S214. For a part not described in detail, refer to a conventional protocol. Details are not described herein again.

S209: The AUSF (remote) sends a ProSe authentication response message #1 to the AMF (relay).

Correspondingly, the AMF (relay) receives the ProSe authentication response message #1 from the AUSF (remote).

For example, the ProSe authentication response message #1 may be a Nausf_UEAuthentication_ ProseAuthenticate Response message.

The ProSe authentication response message #1 includes EAP information #1, and the EAP information #1 includes the authentication vector that is used to request to perform ProSe authentication on the remote UE.

S210: The AMF (relay) sends a relay authentication request message to the relay UE.

Correspondingly, the relay UE receives the relay authentication request message from the AMF (relay).

For example, the relay authentication request message may be a Rely Auth Request message.

The relay authentication request message is a NAS message. The relay authentication request message includes the EAP information #1 and the transaction identifier (transaction identifier) between the relay UE and the AMF (relay).

S211: The relay UE sends the EAP information #1 to the remote UE through a PC5 interface.

Correspondingly, the remote UE receives the EAP information #1 from the relay UE.

For example, the remote UE obtains, through derivation and calculation, an information value based on the EAP information #1.

S212: The remote UE sends EAP information #2 to the relay UE through the PC5 interface.

Correspondingly, the relay UE receives the EAP information #2 from the remote UE.

The EAP information #2 is in response to the EAP information #1. The EAP information #2 includes the information value.

S213: The relay UE sends a relay authentication response message to the AMF (relay).

Correspondingly, the AMF (relay) receives the relay authentication response message from the relay UE.

For example, the relay authentication response message may be a Rely Auth Response message.

The relay authentication response message is a NAS message. The relay authentication response message includes the EAP information #2 and the transaction identifier (transaction identifier) between the relay UE and the AMF (relay).

S214: The AMF (relay) sends a ProSe authentication request message #2 to the AUSF (remote).

Correspondingly, the AUSF (remote) receives the ProSe authentication request message #2 from the AMF (relay).

For example, the ProSe authentication request message #2 may be a Nausf_UEAuthentication_ ProseAuthenticate Request message.

The ProSe authentication request message #2 includes the EAP information #2.

S215a: The AUSF (remote) generates a 5GPRUK and a 5GPRUK ID.

For example, the AUSF (remote) verifies the information value carried in the EAP information #2, and when authentication succeeds, determines to generate the 5GPRUK and the 5GPRUK ID.

Specifically, the AUSF (remote) may generate, through derivation, the 5GPRUK and the 5GPRUK ID by using the RSC (refer to the step S207), the SUPI (refer to the step S208), and KAUSF_P (which is an AUSF key for a proximity-based service) as input parameters.

S215b: The remote UE generates a 5GPRUK and a 5GPRUK ID.

For example, the remote UE generates the 5GPRUK based on the SUPI of the remote UE, KAUSF_P generated by the remote UE, and the random number Nonce_1. Details are not described herein.

S216: The AUSF (remote) sends a key storage request message to a PAnF (remote).

Correspondingly, the PAnF (remote) receives the key storage request message from the AUSF (remote).

For example, the key storage request message may be an Npanf_ProseKey_Register_Request message.

The key storage request message includes the 5GPRUK, the 5GPRUK ID, the SUPI, and the RSC.

S217: The PAnF (remote) sends a key storage response message to the AUSF (remote).

Correspondingly, the AUSF (remote) receives the key storage response message from the PAnF (remote).

For example, the key storage response message may be an Npanf_ProseKey_Register_Response message.

### Manner 2:

It should be understood that this manner indicates that the remote UE locally stores a remote user key 5GPRUK. Therefore, the network side does not need to re-authenticate the remote UE, and does not need to create the key 5GPRUK.

S218: The AUSF (remote) sends a key query request message to a PAnF (remote).

Correspondingly, the PAnF (remote) receives the key query request message from the AUSF (remote).

For example, the key query request message may be an Npanf_ProseKey_get_Request message.

The key query message includes the 5GPRUK ID and the RSC.

S219: The PAnF (remote) sends a key query response message to the AUSF (remote).

Correspondingly, the AUSF (remote) receives the key query response message from the PAnF (remote).

For example, the key query response message may be an Npanf_ProseKey_ get_Response message.

The key query response message includes a 5GPRUK.

S220: The AUSF (remote) generates a key KNR_ProSe.

For example, the AUSF (remote) generates, through derivation, the key KNR_ProSe based on the 5GPRUK obtained in the step S215a or S219, randomly generated Nonce_2, and Nonce_1 (refer to the step S207) sent from a UE side.

S221: The AUSF (remote) sends a ProSe authorization response message #2 to the AMF (relay).

Correspondingly, the AMF (relay) receives the ProSe authorization response message #2 from the AUSF (remote).

For example, the ProSe authorization response message #2 may be a Nausf_UEAuthentication_ ProseAuthenticate Response message.

The ProSe authorization response message #2 includes the KNR_ProSe, Nounce_2, and the like.

Optionally, when Manner 1 is executed, the ProSe authorization response message #2 further includes EAP success.

S222: The AMF (relay) sends a relay key response message to the relay UE.

Correspondingly, the relay UE receives the relay key response message from the AMF (relay).

For example, the relay key response message may be a Relay Key Response message.

The relay key response message includes the KNR_ProSe, Nounce_2, and the like.

Optionally, when Manner 1 is executed, the relay key response message further includes the EAP success.

S223: The relay UE stores the KNR_ProSe, and sends a direct connection security mode command message to the remote UE.

Correspondingly, the remote UE receives the direct connection security mode command message from the relay UE.

For example, the direct connection security mode command message may be a Direct Security mode command message.

The direct connection security mode command message includes Nounce_2 and the like.

Optionally, when Manner 1 is executed, the direct connection security mode command message further includes the EAP success.

S224: The remote UE generates a KNR_ProSe.

A specific implementation is similar to that in the step S220. For example, the remote UE generates, through derivation, the key KNR_ProSe based on the 5GPRUK in the step S215b or the locally stored 5GPRUK, Nonce_2 received in the step S223, and locally stored Nonce_1.

S225: The remote UE sends a direct connection security mode complete message to the relay UE.

Correspondingly, the relay UE receives the direct connection security mode complete message from the remote UE.

For example, the direct connection security mode complete message may be a Direct Security Complete message.

The direct connection security mode complete message is used to indicate that construction of a secure environment between the remote UE and the relay UE is completed.

S226: The relay UE sends a direct communication accept message to the remote UE.

Correspondingly, the remote UE receives the direct communication accept message from the relay UE.

For example, the direct communication accept message may be a Direct Communication Accept message.

That is, based on the foregoing steps S223 to S226, the remote UE and the relay UE interact with each other, to derive parameters such as KNR_ProSe, Krelay-sess, and Krelay-enc, and enable a direct communication security mode. After determining that the direct communication security mode is enabled, the relay UE returns the direct communication accept message to the remote UE, to complete a PC5 security connection establishment process between the remote UE and the relay UE. Then, the remote UE may access a data network through the relay UE.

According to the foregoing method 200 in which the remote UE and the relay UE obtain a PC5 security key by using the PC5 security connection establishment procedure on the ProSe control plane, security communication can be performed between the remote UE and the relay UE, thereby effectively improving spectrum resource utilization.

However, when the 5GPRUK ID is carried in the step S204, the AUSF (remote) directly queries the 5GPRUK from the PAnF (remote), and does not check whether the remote UE still has permission to use a 5G ProSe relay service. In this case, if the remote UE no longer has permission to use the 5G ProSe relay service due to a reason of the remote UE or another reason, and subsequent processes continue to be performed, network security cannot be ensured.

In view of this, this application provides a communication method and a communication apparatus. In a PC5 security connection establishment process on a ProSe control plane, when the AUSF (remote) receives the 5GPRUK ID, a check on whether the remote UE still has permission to use the 5G ProSe relay service is added, and the 5GPRUK may continue to be used in the PC5 security connection establishment process only after the check on the remote UE succeeds. This can improve user experience when ensuring secure PC5 network communication.

For ease of understanding embodiments of this application, the following points are further described.

First, in this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In descriptions of this application, the character "/" usually indicates an "or" relationship between the associated objects. "At least one of the following items (pieces)" or a similar expression thereof refers to any combination of these items, including any combination of singular items (pieces) or plural items (pieces). For example, at least one item (piece) of a, b, and c may represent a, b, c, a and b, a and c, b and c, or a, b, and c. Each of a, b, and c may be singular or plural.

Third, in this application, "first", "second", and various numeric numbers (for example, #1 and #2) are merely used for differentiation for ease of description, and are not used to limit the scope of embodiments of this application. For example, "first", "second", and the various numeric numbers are used to distinguish different messages, and are not used to describe a particular order or sequence. It should be understood that objects described in such a way are interchangeable in a proper circumstance, so that solutions other than embodiments of this application can be described. It should be noted that a number of each step in embodiments of this application is merely a number, and does not represent an execution sequence. A specific execution sequence is described in words.

Fourth, in this application, descriptions such as "when...", "in a case of...", and "if" all mean that a device performs corresponding processing in an objective case, and are not intended to limit time. The descriptions do not require the device to perform a determining action during implementation, and do not mean another limitation.

Fifth, terms "include", "have" and any other variants thereof in this application are intended to cover non-exclusive inclusion. For example, a process, method, system, product, or device that includes a series of steps or units are not limited to those steps or units that are clearly listed, but may include other steps or units that are not clearly listed or are inherent to such a process, method, system, product, or device.

Sixth, in this application, "indicating" may include direct indicating and indirect indicating. When a piece of indication information indicates A, the indication information may directly indicate A or indirectly indicate A, but it does not indicate that the indication information definitely carries A.

The indication manner in this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in this application may be an explicit indication, that is, the indication information is directly indicated through signaling, or the indication information is obtained through derivation based on a parameter indicated by signaling and another rule or another parameter. Alternatively, the indication information may be implicitly indicated, that is, obtained through derivation based on a rule, a relationship, or another parameter. This is not specifically limited in this application.

Seventh, in this application, a "protocol" may be a standard protocol in the communication field, for example, may include a 5G protocol, an NR protocol, and a related protocol applied to a future communication system. This is not limited in this application. "Preconfigured" may include pre-defined, for example, defined in a protocol. "Predefined" may be implemented by pre-storing, in a device, corresponding code, a table, or another format that may indicate related information. A specific implementation of "predefined" is not limited in this application.

Eighth, in this application, "storing" may mean storing in one or more memories. The one or more memories may be separately disposed, or may be integrated into an encoder, a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

Ninth, in this application, "communication" may alternatively be described as "data transmission", "information transmission", "data processing", or the like. "Transmission" includes "sending" and "receiving". This is not limited in this application.

Tenth, in this application, dotted lines in the accompanying drawings of the specification represent optional steps.

The technical solutions provided in this application are described in detail below with reference to the accompanying drawings.

First, the following uses an example to describe an execution body in this application. For example, a first communication apparatus may be remote UE, a second communication apparatus may be relay UE, an authentication server function network element may be an AUSF (remote), a proximity-based service anchor function network element may be a PAnF (remote), and a unified data management network element may be a UDM (remote). A first remote user key may be a 5GPRUK #1, an identifier of the first remote user key may be a 5GPRUK ID #1, a second remote user key may be a 5GPRUK #2, an identifier of the second remote user key may be a 5GPRUK ID #2, relay service code may be RSC, a subscription permanent identifier may be referred to as a subscriber permanent identifier SUPI, and a first proximity-based service user key may be a K_{NR_ProSe}, is generated based on the first remote user key 5GPRUK #1, and corresponds to the first remote user key 5GPRUK #1.

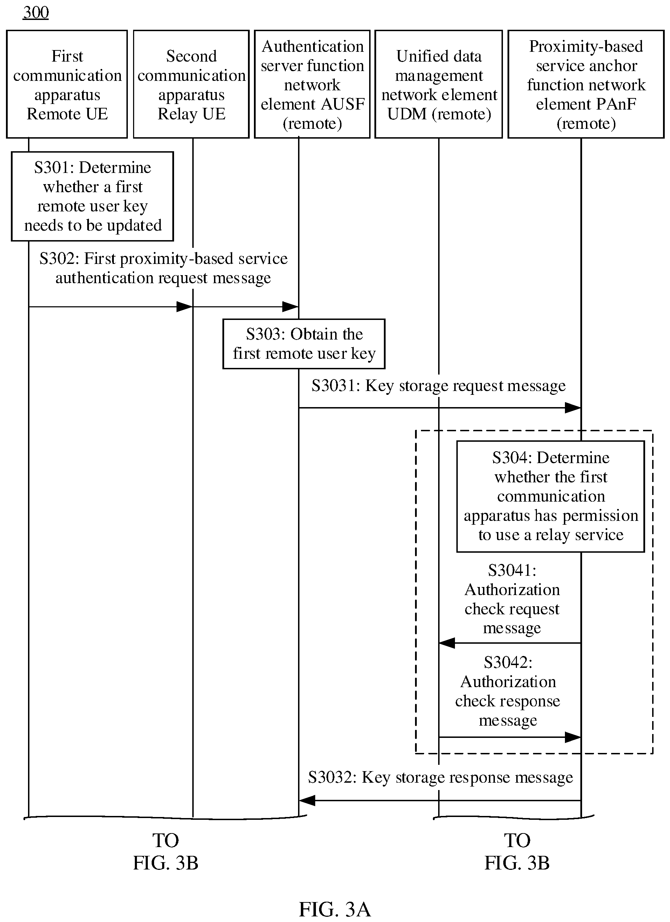

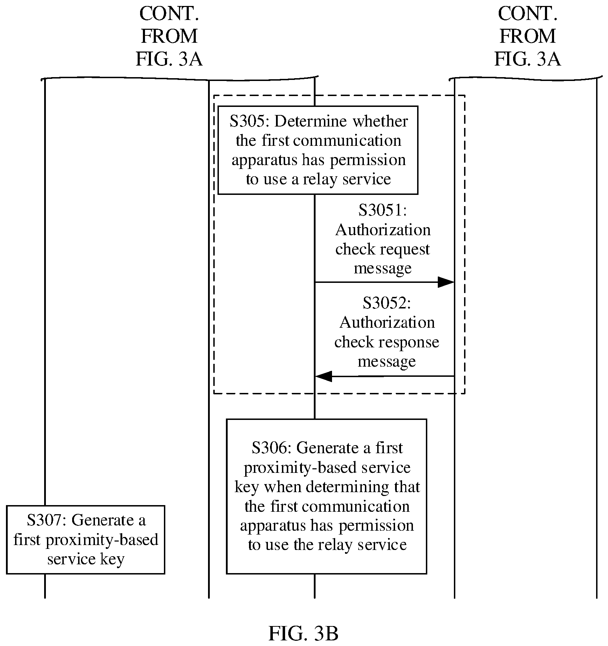

FIG. 3A and FIG. 3B are an example flowchart of a communication method 300 according to an embodiment of this application. The method 300 may be applied to the network architecture shown in FIG. 1. As shown in FIG. 3A and FIG. 3B, the method includes the following steps.

S301: A first communication apparatus determines whether a first remote user key needs to be updated.

In a possible implementation, the first communication apparatus determines, according to a local policy, whether the 5GPRUK #1 needs to be updated. For example, the local policy is a local timer. After the timer expires or returns to zero, the first communication apparatus needs to update the 5GPRUK #1. For another example, the local policy includes: When a relay service code RSC-related configuration changes, the first communication apparatus needs to update the 5GPRUK #1. The RSC-related configuration may be from a network side, and the RSC-related configuration may be content such as QoS information. It should be understood that RSC corresponds to a remote user key 5GPRUK.

In another possible implementation, when the first communication apparatus locally stores the 5GPRUK #1, remote UE determines, according to a security policy received from the network side and local information (for example, location information, cell ID information, and PLMN information) of the first communication apparatus, whether the locally stored 5GPRUK #1 needs to be updated, that is, whether a 5GPRUK #2 needs to be regenerated.

In still another possible implementation, when receiving the RSC-related configuration from the network side, the first communication apparatus needs to delete content of a related configuration of RSC corresponding to the old key 5GPRUK #1, and the first communication apparatus further deletes the 5GPRUK #1 or sets the 5GPRUK #1 to invalid. For example, when determining to set the 5GPRUK #1 to invalid, the first communication apparatus determines to update the 5GPRUK #1. It should be noted that deleting of the 5GPRUK #1 by the first communication apparatus due to an RSC-related configuration update may also be considered as a key update determining manner.

In other words, based on the foregoing determining process, if the first communication apparatus determines that the 5GPRUK #2 does not need to be regenerated, the first communication apparatus continues to use the old 5GPRUK #1, and a 5GPRUK ID #1 is carried in a step S302; and if the first communication apparatus determines that the 5GPRUK #1 needs to be updated, the first communication apparatus adds an SUCI to a step S302, or adds the 5GPRUK #1 and a key update indication to the step S302.

The following specifically describes a case in which the first communication apparatus determines that the 5GPRUK #1 does not need to be updated. For a case in which the 5GPRUK #1 needs to be updated, details are not described herein again. For details, refer to related descriptions of the following method 400.

S302: The first communication apparatus (remote UE) sends a first proximity-based service authentication request message to an authentication server function (AUSF) network element through a second communication apparatus (relay UE).

Correspondingly, the authentication server function network element receives the first proximity-based service authentication request message from the first communication apparatus through the second communication apparatus.

For example, when determining that the first remote user key does not need to be updated, the first communication apparatus sends the first proximity-based service authentication request message to the authentication server function network element through the second communication apparatus. The first proximity-based service authentication request message includes the identifier 5GPRUK ID #1 of the first remote user key and relay service code RSC.

S303: The authentication server function network element obtains the first remote user key of the first communication apparatus.

In a possible implementation, the authentication server function network element obtains the first remote user key of the first communication apparatus from a proximity-based service anchor function network element, that is, steps S3031 and S3032 are performed.

S3031: The authentication server function network element sends a key query request message to the proximity-based service anchor function network element.

Correspondingly, the proximity-based service anchor function network element receives the key query request message from the authentication server function network element.

The key query request message includes the identifier of the first remote user key and the relay service code that are carried in the step S302.

S3032: The authentication server function network element receives a key query response message from the proximity-based service anchor function network element.

It should be noted that whether the key query response message carries the 5GPRUK #1 and whether the key query response message further carries the SUPI depend on whether the PAnF performs an authorization check and a result of the authorization check. For example, if the PAnF does not perform the authorization check, the key query response message carries the 5GPRUK #1 and the SUPI; if the PAnF performs the authorization check and the check succeeds, the key query response message carries the 5GPRUK #1; if the PAnF performs the authorization check and the check fails, the key query response message does not carry the 5GPRUK #1 and the SUPI; and if the PAnF does not perform the authorization check and the PAnF determines to update the key 5GPRUK #1, the key query response message carries the SUPI. For details, refer to the following descriptions.

Optionally, before the step S3032 is performed, the method may further include the following.

S304: The proximity-based service anchor function network element determines whether the first communication apparatus has permission to use a relay service. This step specifically includes but is not limited to the following two implementations.

In a possible implementation, when the proximity-based service anchor function network element does not store 5G ProSe service authorization information, the proximity-based service anchor function network element may obtain the 5GPRUK #1 and the SUPI of the first communication apparatus through local query based on the 5GPRUK ID #1 in the step S3031. Further, the proximity-based service anchor function network element may perform steps S3041 and S3042. That is, the proximity-based service anchor function network element requests a unified data management network element to perform an authorization check on the first communication apparatus.

S3041: The proximity-based service anchor function network element sends an authorization check request message to the unified data management network element.

Correspondingly, the unified data management network element receives the authorization check request message from the proximity-based service anchor function network element.

The authorization check request message includes the subscription permanent identifier of the first communication apparatus, namely, the SUPI of the first communication apparatus. Optionally, the authorization check request message may further carry the RSC.

Specifically, after receiving the subscription permanent identifier (for example, the subscription permanent identifier SUPI) of the first communication apparatus, the unified data management network element checks whether the first communication apparatus has permission to use a 5G ProSe service. For example, the unified data management network element determines, based on subscription data corresponding to the SUPI of the first communication apparatus, whether the first communication apparatus has permission to use the ProSe service. Optionally, when the authorization check request message carries the RSC, the unified data management network element determines, based on subscription data corresponding to the SUPI, whether the first communication apparatus has permission to use a 5G ProSe service corresponding to the RSC. For example, the unified data management network element determines, based on a servicization operation, to request to perform the authorization check on the first communication apparatus. For another example, the unified data management network element determines, based on indication information in a servicization operation, to request to perform the authorization check on the first communication apparatus.

S3042: The unified data management network element sends an authorization check response message to the proximity-based service anchor function network element.

Correspondingly, the proximity-based service anchor function network element receives the authorization check response message from the unified data management network element.

The authorization check response message carries an authorization result.

For example, the authorization result in the authorization check response message includes success or failure that indicates whether the authorization check on the first communication apparatus succeeds. It should be understood that the step S3042 is performed only when the authorization check on the first communication apparatus succeeds. In this case, the key query response message carries the first remote user key. Success represents that authorization succeeds, and a representation form of success may be one piece of indication information indicating that authentication succeeds or "200 OK" information. Failure represents that authorization fails, and a representation form of failure may be one piece of indication information indicating that authentication succeeds, "403 forbidden", or other information with code 403.

In another possible implementation, the proximity-based service anchor function network element obtains proximity-based service authorization information through local query based on the subscription permanent identifier of the first communication apparatus; and the proximity-based service anchor function network element determines, based on the proximity-based service authorization information, whether the first communication apparatus has permission to use a relay service.

That is, when the proximity-based service anchor function network element stores 5G ProSe service authorization information, the proximity-based service anchor function network element obtains the 5GPRUK #1 and the SUPI of the first communication apparatus through local query based on the 5GPRUK ID #1 and the RSC in the step S3031, queries the locally stored 5G ProSe service authorization information based on the SUPI, and performs an authorization check on the first communication apparatus based on the 5G ProSe service authorization information, to determine whether the first communication apparatus has permission to use a 5G ProSe service, namely, a relay service corresponding to the RSC. Further, when the proximity-based service anchor function network element determines that authorization on the first communication apparatus succeeds, the step S3032 is performed, and in this case, the key query response message carries the 5GPRUK #1. When the proximity-based service anchor function network element determines that authorization on the first communication apparatus fails, the step S3032 is performed, and in this case, the key query response message carries indication information, for example, a cause value 403 that represents an authorization check failure result.

It should be noted that the 5G ProSe service authorization information locally stored in the proximity-based service anchor function network element may be from the authentication server function network element. For example, in a process in which the first communication apparatus obtains the 5GPRUK #1, for example, in the step S208 of the method 200, the unified data management network element may further send 5G ProSe service authorization information corresponding to the first communication apparatus to the authentication server function network element, and the 5G ProSe service authorization information includes but is not limited to: subscription data, an authorization result, or authorization indication information of the 5G ProSe service authorization information. Further, in the step S216 of the method 200, the key storage request message further carries the 5G ProSe service authorization information. Correspondingly, after receiving the 5G ProSe service authorization information, the proximity-based service anchor function network element stores the 5G ProSe service authorization information.

In still another possible implementation, when the proximity-based service anchor function network element does not store 5G ProSe service authorization information, the proximity-based service anchor function network element may obtain the 5GPRUK #1 and the SUPI of the remote UE through local query based on the 5GPRUK ID #1 in the step S3031. In this case, the key query response message in the step S3042 includes the 5GPRUK #1 and the SUPI. In this case, the SUPI may be used as an input parameter, and is used by the authentication server function network element to request to the unified data management network element to perform an authorization check on the remote UE, that is, perform steps S3051 and S3052.

Optionally, the authentication server function network element sends an SUPI query message of the first communication apparatus to the proximity-based service anchor function network element, and after the proximity-based service anchor function network element performs local query, the proximity-based service anchor function network element returns the SUPI of the first communication apparatus to the authentication server function network element. In this application, the SUPI query message may be decoupled from a key query request message in S410 for use. This is not specifically limited in this application.

Optionally, after the step S303 is performed, the method may further include the following steps.

S305: The authentication server function network element determines whether the first communication apparatus has permission to use a relay service. This step specifically includes but is not limited to the following implementations.

In a possible implementation,

S3051: The authentication server function network element sends an authorization check request message to the unified data management network element.

Correspondingly, the unified data management network element receives the authorization check request message from the authentication server function network element.

The authorization check request message includes the subscription permanent identifier of the first communication apparatus. Optionally, the authorization check request message further includes the RSC.

For example, the authorization check request message may be a Nudm_ UEAuthorization_ProseCheck Request message. This is not specifically limited in this application.

S3052: The unified data management network element sends an authorization check response message to the authentication server function network element.

Correspondingly, the authentication server function network element receives the authorization check response message from the unified data management network element.

Specifically, before sending the authorization check response message to the authentication server function network element, the unified data management network element needs to check whether the first communication apparatus has permission to use a 5G ProSe service.

For example, the unified data management network element determines, based on subscription data corresponding to the subscription permanent identifier of the first communication apparatus, whether the first communication apparatus has permission to use the ProSe service.

Optionally, when the authorization check request message carries the RSC, the unified data management network element determines, based on the subscription data corresponding to the subscription permanent identifier, whether the first communication apparatus has permission to use a 5G ProSe service corresponding to the RSC.

In a possible implementation, the unified data management network element determines, based on a servicization operation, to request to perform an authorization check on the first communication apparatus.

In another possible implementation, the unified data management network element determines, based on indication information in a servicization operation, to request to perform an authorization check on the first communication apparatus.

For example, the authorization check response message may be a Nudm_ UEAuthorization_ProseCheck Response message. This is not specifically limited in this application.

The authorization check response message includes an authorization check result that includes success or failure, and the authorization check result indicates whether the authorization check on the first communication apparatus succeeds. It should be understood that the following step S425 is performed only when the authorization check on the first communication apparatus succeeds. Success represents that authorization succeeds, and a representation form of success may be one piece of indication information indicating that authentication succeeds or "200 OK" information. Failure represents that authorization fails, and a representation form of failure may be one piece of indication information indicating that authentication fails, "403 forbidden", or other information with code 403.

In this case, the authentication server function network element determines, based on the authorization check result, whether the first communication apparatus has permission to use the relay service.

It should be noted that the foregoing steps of determining whether the first communication apparatus has permission to use the relay service, namely, either steps S304 to S3042 or steps S305 to S3052 are performed. When the steps S304 to S3042 are performed, and the authentication server function network element receives the first remote user key, the authentication server function network element determines that the first communication apparatus has permission to use the relay service. In addition, in the method of S304 to S2042, the subscription permanent identifier may not be carried in the message in S3032.

S306: When determining that the first communication apparatus has permission to use the relay service, the authentication server function network element generates a first proximity-based service key based on the first remote user key, where the first proximity-based service key is used by the first communication apparatus to establish a security connection to the second communication apparatus.

S307: The first communication apparatus generates a first proximity-based service key.

For an implementation in which the authentication server function network element generates the first proximity-based service key in the step S306 and an implementation in which the first communication apparatus generates the first proximity-based service key in the step S307, refer to steps S220 and S224 in the foregoing method 200. For brevity, details are not described herein again.

In the solution provided in this application, for a PC5 security connection establishment process on a ProSe control plane, a mechanism for determining, by the first communication apparatus, whether the first remote user key needs to be updated is added, and when it is determined that the key does not need to be updated, an authorization check performed by the authentication server function network element or the proximity-based service anchor function network element to determine whether the first communication apparatus has permission to use a ProSe proximity-based service is added. In addition, the 5GPRUK may continue to be used in the PC5 security connection establishment process only after the check on the first communication apparatus succeeds. This can improve user experience when ensuring secure PC5 network communication.

In a current PC5 security connection establishment process on a ProSe control plane, a generated PC5 security key is a key used for a long time, and it is difficult to ensure use security of a 5GPRUK. This may cause a network security risk, such as key leakage and hacker attack. Therefore, the technical solutions of this application provide a 5GPRUK update mechanism, and each of remote UE, an AUSF, or a PAnF actively triggers to update the 5GPRUK key on the ProSe control plane, to improve user experience when ensuring D2D network security.

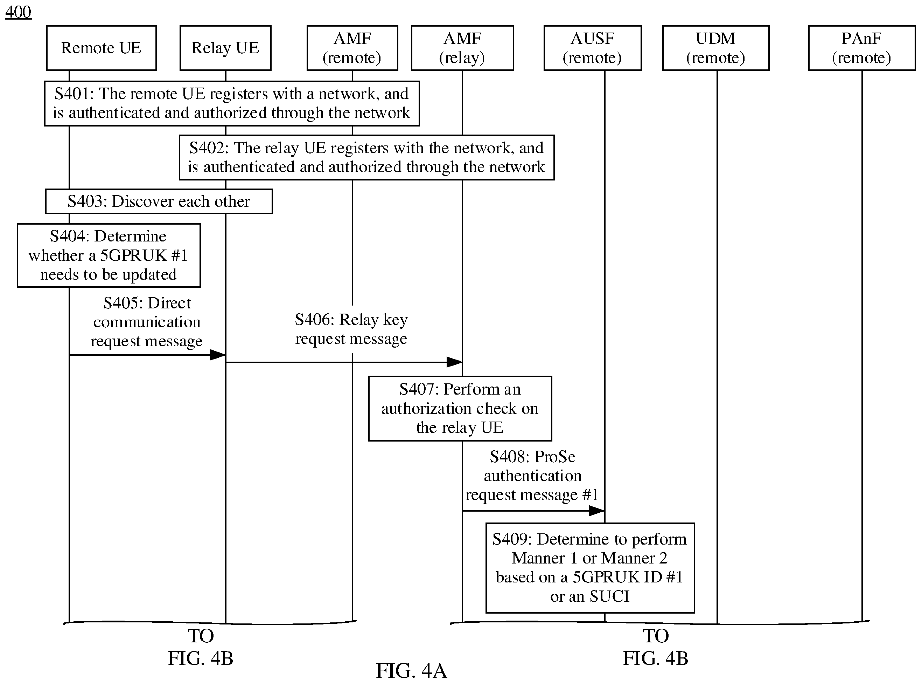

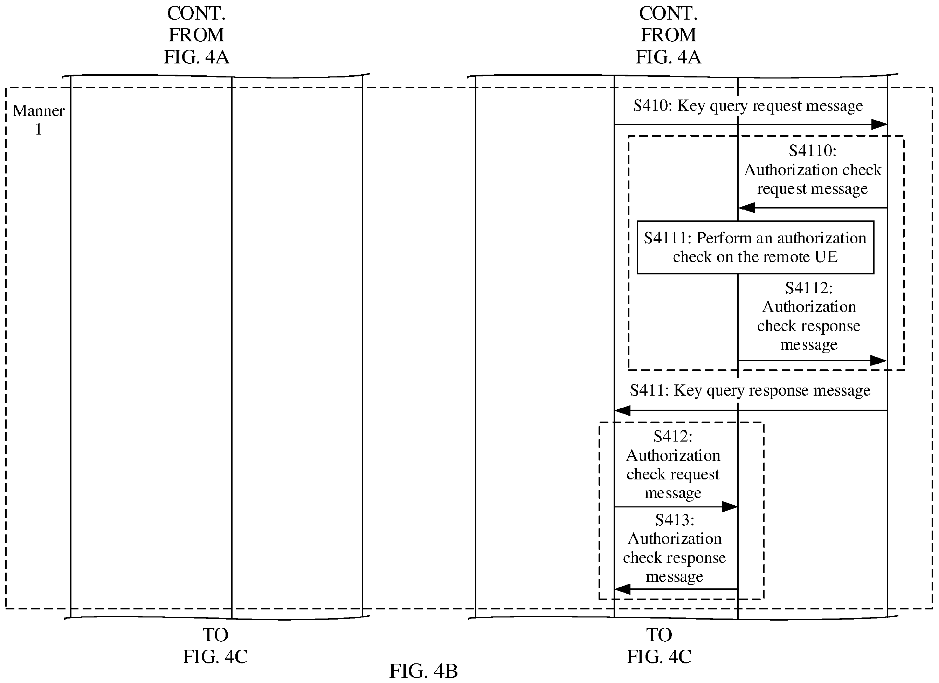

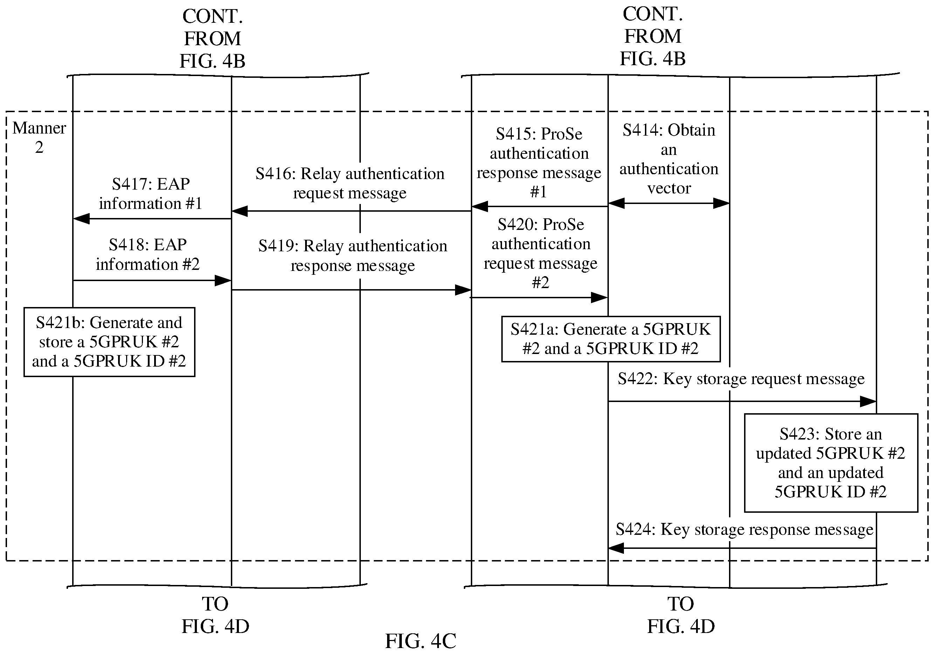

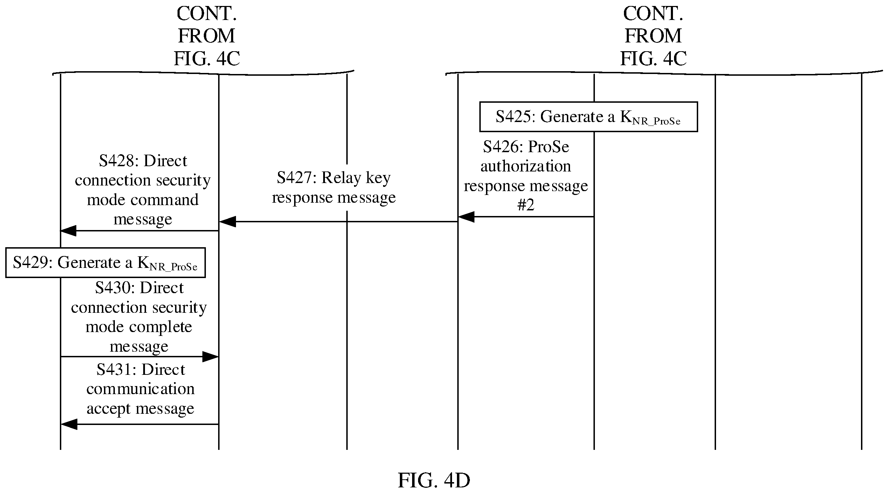

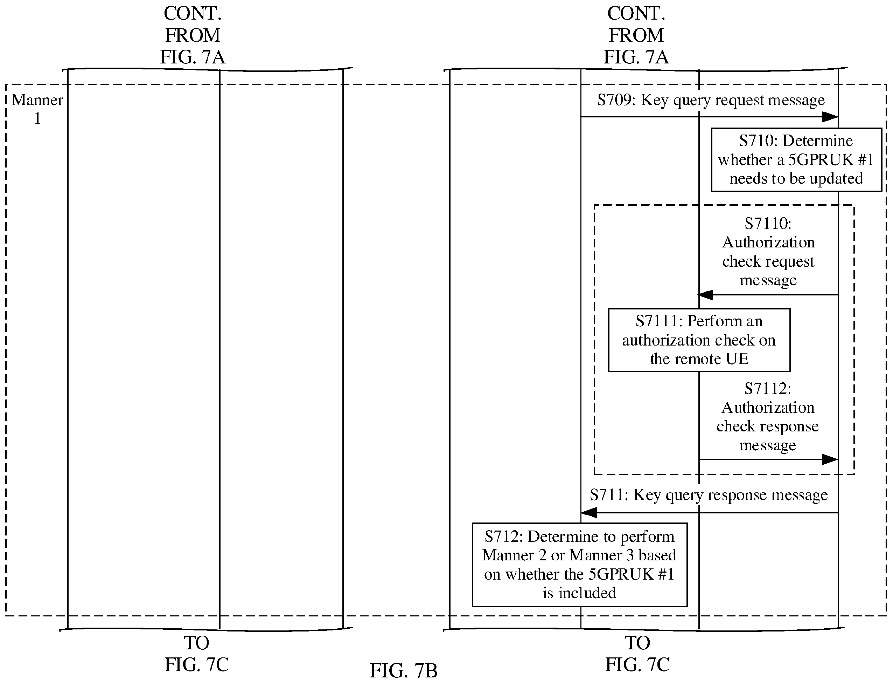

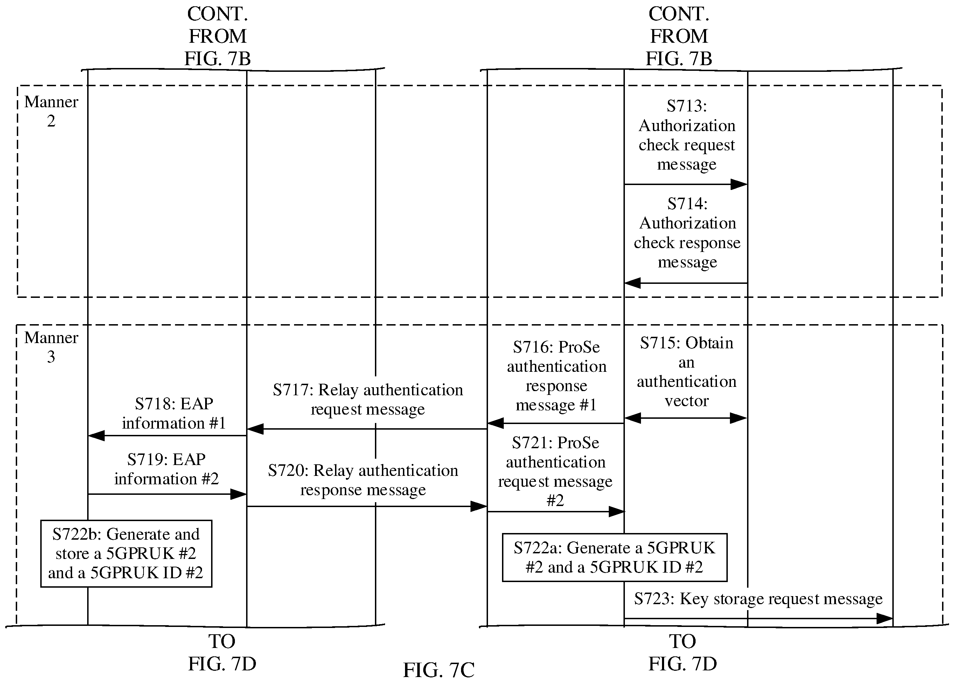

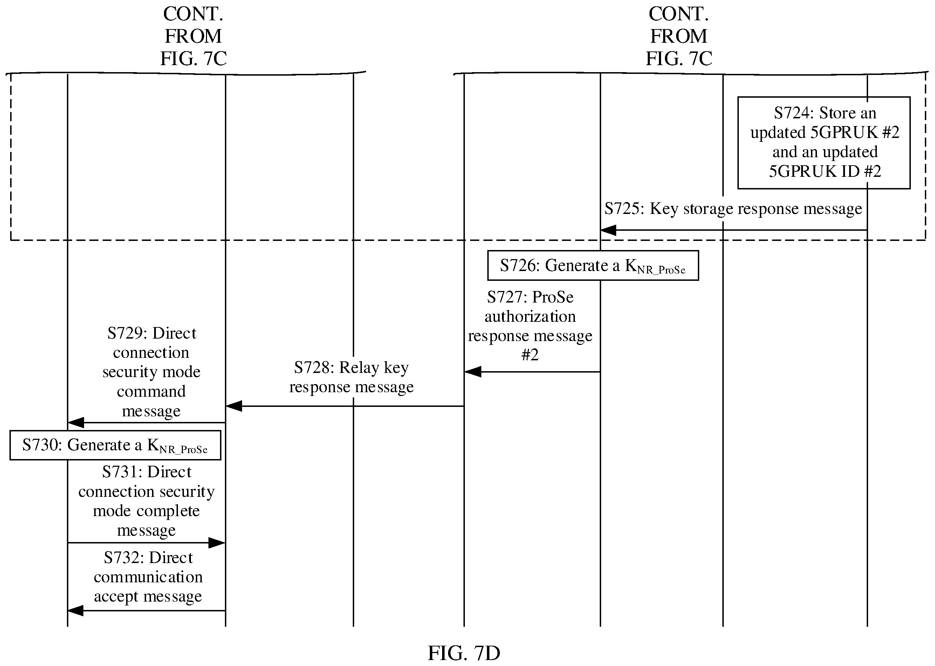

The following uses an example in which a first communication apparatus is remote UE, a second communication apparatus is relay UE, an authentication server function network element is an AUSF (remote), a unified data management network element is a UDM, and a proximity-based service anchor function network element is a PAnF (remote), to separately describe 5GPURK key update mechanisms used in a PC5 security connection establishment process on a control plane in detail with reference to FIG. 4A, FIG. 4B, FIG. 4C, and FIG. 4D to FIG. 7A, FIG. 7B, FIG. 7C, and FIG. 7D.

It should be noted that, in embodiments of this application, when the remote UE locally stores an old key 5GPRUK, the remote UE generates a new remote user key 5GPRUK, deletes the local old key, and stores the new key, which is referred to as "key updating"; or when the remote UE does not locally store a 5GPRUK, the remote UE needs to generate the key 5GPRUK, which is referred to as "key creating". A difference between "key updating" and "key creating" is that in "key updating", a new key is re-obtained when an old key is stored, while in "key creating", a key is obtained when no key is stored. Further, a KNR_ProSe is generated based on a newly generated remote user key 5GPRUK, to complete PC5 security connection establishment between the remote UE and relay UE.

For ease of differentiation, in this application, a 5GPRUK and a 5GPRUK ID before an update are denoted as a 5GPRUK #1 and a 5GPRUK ID #1, and an updated (or a newly generated) 5GPRUK and an updated 5GPRUK ID are denoted as a 5GPRUK #2 and a 5GPRUK ID #2. In addition, for ease of description, in this application, a 5GPRUK and a 5GPRUK ID that are obtained after "key creating" are also denoted as a 5GPRUK #2 and a 5GPRUK ID #2. Details are not described in the following related parts.

FIG. 4A, FIG. 4B, FIG. 4C, and FIG. 4D are an example flowchart of a communication method 400 according to an embodiment of this application. The method is a solution in which remote UE determines whether a 5GPRUK #1 needs to be updated, and triggers an update mechanism. In addition, a check on whether the remote UE has permission to use a 5G ProSe relay service is added when it is determined to continue to use the 5GPRUK #1. As shown in FIG. 4A, FIG. 4B, FIG. 4C, and FIG. 4D, the method includes the following steps.

S401: The remote UE registers with a network, and is authenticated and authorized through the network.

The remote UE obtains a ProSe parameter of the remote UE from a network side, and the ProSe parameter includes a discovery parameter, an access relay UE parameter, and the like.

S402: Relay UE registers with the network, and is authenticated and authorized through the network.

S403: The remote UE and the relay UE discover each other.

It should be noted that for specific implementations of the foregoing steps S401 to S403 and specific names or meanings of interaction messages, refer to steps S201 to S203 in the foregoing method 200. For brevity, details are not described herein again.

S404: The remote UE determines whether a 5GPRUK #1 needs to be updated.

In this implementation, the remote UE first needs to locally query whether the 5GPRUK #1 is stored, when determining that the 5GPRUK #1 is stored, the remote UE further determines whether the 5GPRUK #1 needs to be updated, and when determining that the 5GPRUK #1 needs to be updated, the remote UE regenerates a 5GPRUK #2.

In a possible implementation, the remote UE determines, according to a local policy, whether the 5GPRUK #1 needs to be updated. For example, the local policy is a local timer. After the timer expires or returns to zero, the remote UE needs to update the 5GPRUK #1. For another example, the local policy includes: When an RSC-related configuration changes, the remote UE needs to update the 5GPRUK #1. The RSC-related configuration may be from the network side, and the RSC-related configuration may be content such as QoS information. It should be understood that RSC corresponds to a remote user key 5GPRUK.

In another possible implementation, when the remote UE locally stores the 5GPRUK #1, the remote UE determines, according to a security policy received from the network side and local information (for example, location information, cell ID information, and PLMN information) of the remote UE, whether the locally stored 5GPRUK #1 needs to be updated, that is, whether a 5GPRUK #2 needs to be regenerated.

For example, the security policy indicates whether the remote UE needs to update the locally stored 5GPRUK #1 when one or more of the location information, the PLMN information, or the cell ID information of the remote UE changes. For example, when a cell ID of the UE changes, the 5GPRUK #1 needs to be updated. For another example, when PLMN information of the relay UE changes, the key does not need to be updated.

In still another possible implementation, when receiving an RSC-related configuration from the network side, the remote UE needs to delete content of a related configuration of RSC corresponding to the old key 5GPRUK #1, and the remote UE further deletes the 5GPRUK #1 or sets the 5GPRUK #1 to invalid. For example, when determining to set the 5GPRUK #1 to invalid, the remote UE determines to update the 5GPRUK #1. It should be noted that deleting of the 5GPRUK #1 by the remote UE due to an RSC-related configuration update may also be considered as a key update determining manner. A difference lies in that the method is "non-real-time". To be specific, when the 5GPRUK #1 is deleted, the remote UE may not establish a connection to the relay UE. In this case, because the key is deleted, no key can be used when the remote UE subsequently establishes a connection to the relay UE by using RSC, and the remote UE needs to send an SUCI to obtain a new key. However, other possible implementations may be "real-time", that is, the remote UE determines whether to update a key each time a new connection is established.

In other words, based on the foregoing determining process, if the remote UE determines that the 5GPRUK #2 does not need to be regenerated, the remote UE continues to use the old 5GPRUK #1, and a 5GPRUK ID #1 is carried in a step S405; and if the remote UE determines that the 5GPRUK #1 needs to be updated, the remote UE adds an SUCI to the step S405.

S405: The remote UE sends a direct communication request message to the relay UE.

Correspondingly, the relay UE receives the direct communication request message from the remote UE.

The direct communication request message carries the SUCI or the 5GPRUK ID #1 of the remote UE, the RSC, Nounce_1, and the like.

For example, based on the foregoing step S404, if the remote UE determines that the 5GPRUK #1 needs to be updated, the direct communication request message carries the SUCI; or if the remote UE determines that the 5GPRUK #1 does not need to be updated, the direct communication request message carries the 5GPRUK ID #1.

S406: The relay UE sends a relay key request message to an AMF (relay).

Correspondingly, the AMF (relay) receives the relay key request message from the relay UE.

The relay key request message is a NAS message, and the relay key request message includes the SUCI or the 5GPRUK ID #1 of the remote UE, the RSC, Nounce_1, a transaction identifier, and the like.

S407: The AMF (relay) performs an authorization check on the relay UE.

S408: The AMF (relay) sends a ProSe authentication request message #1 to an AUSF (remote).

Correspondingly, the AUSF (remote) receives the ProSe authentication request message #1 from the AMF (relay).

The ProSe authentication request message #1 carries the SUCI or the 5GPRUK ID #1 of the remote UE, the RSC, Nounce_1, and the like.

It should be noted that for specific implementations of the foregoing steps S405 to S408 and specific names or meanings of interaction messages, refer to steps S204 to S207 in the foregoing method 200. For brevity, details are not described herein again.

S409: The AUSF (remote) determines to perform Manner 1 or Manner 2.

Optionally, the AUSF (remote) determines to perform Manner 1 based on the 5GPRUK ID #1 carried in the ProSe authentication request message #1. Alternatively, the AUSF (remote) determines to perform Manner 2 based on the SUCI carried in the ProSe authentication request message #1. After the AUSF performs Manner 1 or Manner 2, subsequent steps S425 to S431 are performed.

### Manner 1:

S410: The AUSF (remote) sends a key query request message to a PAnF (remote).

Correspondingly, the PAnF (remote) receives the key query request message from the AUSF (remote).

The key query message includes the 5GPRUK ID #1 and the RSC.

S411: The PAnF (remote) sends a key query response message to the AUSF (remote).

Correspondingly, the AUSF (remote) receives the key query response message from the PAnF (remote).

Optionally, before performing the step S411, the PAnF may determine whether to perform an authorization check on the remote UE and how to perform the authorization check on the remote UE.

In a possible implementation, before the PAnF performs the step S411, and when the PAnF stores 5G ProSe service authorization information, the PAnF obtains the 5GPRUK #1 and the SUPI of the remote UE through local query based on the 5GPRUK ID #1 and the RSC in the step S410, queries the locally stored 5G ProSe service authorization information based on the SUPI, and performs the authorization check on the remote UE based on the 5G ProSe service authorization information, to determine whether the remote UE has permission to use a 5G ProSe service, namely, a relay service corresponding to the RSC. Further, when the PAnF determines that authorization on the remote UE succeeds, the step S411 is performed, and in this case, the key query response message carries the 5GPRUK #1. When the PAnF determines that authorization on the remote UE fails, the step S411 is performed, and in this case, the key query response message carries indication information, for example, a cause value 403 that represents an authorization check failure result.

It should be noted that the 5G ProSe service authorization information locally stored in the PAnF may be from the AUSF. For example, in a process in which the remote UE obtains the 5GPRUK #1, for example, in the step S208 of the method 200, the UDM may further send 5G ProSe service authorization information corresponding to the remote UE to the AUSF, and the 5G ProSe service authorization information includes but is not limited to: subscription data, an authorization result, or authorization indication information of the 5G ProSe service authorization information. Further, in the step S216 of the method 200, the key storage request message further carries the 5G ProSe service authorization information. Correspondingly, after receiving the 5G ProSe service authorization information, the PAnF stores the 5G ProSe service authorization information.

In another possible implementation, before the step S411 is performed, and when the PAnF does not store 5G ProSe service authorization information, the PAnF may obtain the 5GPRUK #1 and the SUPI of the remote UE through local query based on the 5GPRUK ID #1 in the step S410. In this case, the key query response message in the step S411 includes the 5GPRUK #1 and the SUPI. In this case, the SUPI may be used as an input parameter, and is used by the AUSF to request a UDM to perform the authorization check on the remote UE, that is, perform steps S412 and S413.

Optionally, the AUSF (remote) sends an SUPI query message of the remote UE to the PAnF (remote), and the PAnF (remote) returns the SUPI of the remote UE to the AUSF (remote) after local query. It should be understood that the SUPI of the remote UE is used as an input parameter in a subsequent step S412. In this application, the SUPI query message may be decoupled from a key query request message in S410 for use. This is not specifically limited in this application.

In still another possible implementation, before the step S411 is performed, and when the PAnF does not store 5G ProSe service authorization information, the PAnF may obtain the 5GPRUK #1 and the SUPI of the remote UE through local query based on the 5GPRUK ID #1 in the step S410. Further, the PAnF may perform steps S4110 and S4112, that is, the PAnF requests a UDM to perform the authorization check on the remote UE.

S4110: The PAnF (remote) sends an authorization check request message to the UDM (remote).

Correspondingly, the UDM (remote) receives the authorization check request message from the PAnF (remote).

The authorization check request message carries the SUPI of the remote UE.

Optionally, the authorization check request message may further carry the RSC.

S4111: The UDM checks whether the remote UE has permission to use a 5G ProSe service.

For example, the UDM determines, based on subscription data corresponding to the SUPI of the remote UE, whether the remote UE has permission to use the ProSe service.

Optionally, when the authorization check request message carries the RSC, the UDM determines, based on subscription data corresponding to the SUPI, whether the UE has permission to use a 5G ProSe service corresponding to the RSC.

In a possible implementation, the UDM determines, based on a servicization operation, to request to perform the authorization check on the remote UE.

In another possible implementation, the UDM determines, based on indication information in a servicization operation, to request to perform the authorization check on the remote UE.

S4112: The UDM (remote) sends an authorization check response message to the PAnF (remote).

Correspondingly, the PAnF (remote) receives the authorization check response message from the UDM (remote).

The authorization check response message carries an authorization result.

For example, the authorization result in the authorization check response message includes success or failure that indicates whether the authorization check on the remote UE succeeds. It should be understood that the step S411 is performed only when the authorization check on the remote UE succeeds. Success represents that authorization succeeds, and a representation form of success may be one piece of indication information indicating that authentication succeeds or "200 OK" information. Failure represents that authorization fails, and a representation form of failure may be one piece of indication information indicating that authentication succeeds, "403 forbidden", or other information with code 403.

It should be particularly noted that the foregoing steps S4110 to S4112 are a process in which the PAnF requests the UDM to perform the authorization check on the remote UE. When the process is performed, steps S412 and S413 do not need to be performed. When the steps S4110 to S4112 are performed, the SUPI may not be carried in the step S411. The AUSF determines, based on the 5GPRUK #1 carried in the message in S411, that the UE has permission to use a 5G ProSe service. When the process is not performed, the steps S412 and S413 need to be performed.

S412: The AUSF (remote) sends an authorization check request message to the UDM (remote).

Correspondingly, the UDM (remote) receives the authorization check request message from the AUSF (remote).

The authorization check request message is used to request the UDM (remote) to check whether the remote UE is authorized to use a 5G ProSe relay service, and the authorization check request message includes the SUPI of the remote UE. Optionally, the authorization check request message further includes the RSC.

For example, the authorization check request message may be a Nudm_ UEAuthorization_ProseCheck Request message. This is not specifically limited in this application.

S413: The UDM (remote) sends an authorization check response message to the AUSF (remote).

Correspondingly, the AUSF (remote) receives the authorization check response message from the UDM (remote).

Specifically, before the UDM (remote) sends the authorization check response message to the AUSF (remote), the UDM checks whether the remote UE has permission to use the 5G ProSe service.

For example, the UDM determines, based on subscription data corresponding to the SUPI of the remote UE, whether the remote UE has permission to use the ProSe service.

Optionally, when the authorization check request message carries the RSC, the UDM determines, based on subscription data corresponding to the SUPI, whether the UE has permission to use a 5G ProSe service corresponding to the RSC.

In a possible implementation, the UDM determines, based on a servicization operation, to request to perform the authorization check on the remote UE.

In another possible implementation, the UDM determines, based on indication information in a servicization operation, to request to perform the authorization check on the remote UE.

The authorization check response message includes an authorization result that includes success or failure, and the authorization result indicates whether the authorization check on the remote UE succeeds. It should be understood that the following step S425 is performed only when the authorization check on the remote UE succeeds. Success represents that authorization succeeds, and a representation form of success may be one piece of indication information indicating that authentication succeeds or "200 OK" information. Failure represents that authorization fails, and a representation form of failure may be one piece of indication information indicating that authentication succeeds, "403 forbidden", or other information with code 403.

For example, the authorization check response message may be a Nudm_ UEAuthorization_ProseCheck Response message. This is not specifically limited in this application.

### Manner 2:

S414: The AUSF (remote) obtains an authentication vector through a UDM (remote).

For example, the AUSF uses the SUCI carried in the ProSe authentication request message #1 in S408 as an input parameter, and sends an authentication vector request message to the UDM, to request to obtain the authentication vector. Correspondingly, the UDM returns the authentication vector and the SUPI of the remote UE to the AUSF based on the request of the AUSF. The authentication vector carries KAUSF_P, and the SUPI of the remote UE may be used as an input parameter for generating a 5GPRUK ID #2 in a step S421a.

In this step, the UDM (remote) needs to check whether the remote UE is authorized to use a 5G ProSe relay service. A subsequent ProSe authentication procedure, that is, steps S415 to S420, is performed only when the authorization check on the remote UE succeeds.

In addition, the AUSF (remote) sends the SUCI of the remote UE to the UDM (remote), and the UDM (remote) converts the SUCI into an SUPI and returns the SUPI to the AUSF (remote).

S415: The AUSF (remote) sends a ProSe authentication response message #1 to the AMF (relay).

Correspondingly, the AMF (relay) receives the ProSe authentication response message #1 from the AUSF (remote).

The ProSe authentication response message #1 includes an EAP message #1, and the EAP message #1 carries the authentication vector.

S416: The AMF (relay) sends a relay authentication request message to the relay UE.

Correspondingly, the relay UE receives the relay authentication request message from the AMF (relay).

The relay authentication request message is a NAS message, and the relay authentication request message includes the EAP message #1 and the transaction identifier.

S417: The relay UE sends the EAP information #1 to the remote UE.

Correspondingly, the remote UE receives the EAP information #1 from the relay UE.

S418: The remote UE sends EAP information #2 to the relay UE.

Correspondingly, the relay UE receives the EAP information #2 from the remote UE.

S419: The relay UE sends a relay authentication response message to the AMF (relay).

Correspondingly, the AMF (relay) receives the relay authentication response message from the relay UE.

The relay authentication response message is a NAS message, and the relay authentication response message includes the EAP information #2 and the transaction identifier.

S420: The AMF (relay) sends a ProSe authentication request message #2 to the AUSF (remote).

Correspondingly, the AUSF (remote) receives the ProSe authentication request message #2 from the AMF (relay).

The ProSe authentication request message #2 includes the EAP information #2.

It should be understood that the AUSF (remote) performs the following step S421a only when ProSe authentication succeeds.

S421a: The AUSF (remote) generates a 5GPRUK #2 and a 5GPRUK ID #2.

Specifically, the AUSF (remote) may generate, through derivation, the 5GPRUK #2 and the 5GPRUK ID #2 by using the RSC (refer to the step S408), the SUPI (refer to the step S411 or S414), and KAUSF_P as input parameters.

S421b: The remote UE generates and stores a 5GPRUK #2 and a 5GPRUK ID #2.

A specific implementation is similar to that in the step S421a. Details are not described herein again.

That is, after generating the new 5GPRUK #2 and the new 5GPRUK ID #2, the remote UE locally stores the 5GPRUK #2 and the 5GPRUK ID #2 for subsequently generating a KNR_ProSe, so that a PC5 security connection is established between the remote UE and the relay UE.

Optionally, if the remote UE locally stores an old 5GPRUK #1 and an old 5GPRUK ID #1 before performing the step S421b, after performing the step S412b, the remote UE deletes the locally stored old 5GPRUK #1 and the old 5GPRUK ID #1, and stores the regenerated 5GPRUK #2 and the regenerated 5GPRUK ID #2. That is, the remote UE replaces the 5GPRUK #1 and the 5GPRUK ID #1 with the 5GPRUK #2 and the 5GPRUK ID #2.

It should be understood that input parameters for generating a 5GPRUK are KAUSF_P, the RSC, and the SUPI. It should be particularly noted that a 5GPRUK #1 is different from a 5GPRUK #2 because KAUSF _P for generating the 5GPRUK #1 and KAUSF_P for generating the 5GPRUK #2 are different, and KAUSF is generated by the UDM based on a random number. Before each time of ProSe authentication, because random numbers for generating KAUSF_P in the authentication vector requested to be obtained in the step S414 are different, KAUSF_P correspondingly generated by the UDM is also different. The generated 5GPRUK #1 and 5GPRUK #2 are naturally different.

S422: The AUSF (remote) sends a key storage request message to a PAnF (remote).

Correspondingly, the PAnF (remote) receives the key storage request message from the AUSF (remote).

The key storage request message includes the SUPI, the RSC, the 5GPRUK #2, and the 5GPRUK ID #2.

S423: The PAnF (remote) stores the updated 5GPRUK #2 and the updated 5GPRUK ID #2.

Optionally, if the PAnF (remote) locally stores an old 5GPRUK #1 and an old 5GPRUK ID #1 before performing the step S422, after performing the step S422, the PAnF (remote) deletes the locally stored old 5GPRUK #1 and the locally stored old 5GPRUK ID #1, and stores the regenerated 5GPRUK #2 and the regenerated 5GPRUK ID #2. That is, the PAnF (remote) replaces the 5GPRUK #1 and the 5GPRUK ID #1 with the 5GPRUK #2 and the 5GPRUK ID #2.

S424: The PAnF (remote) sends a key storage response message to the AUSF (remote).

Correspondingly, the AUSF (remote) receives the key storage response message from the PAnF (remote).

It should be noted that for specific implementations of the foregoing steps S414 to S422 and S424 and specific names or meanings of interaction messages, refer to steps S208 to S217 in the foregoing method 200. For brevity, details are not described herein again.

S425: The AUSF (remote) generates a key KNR_ProSe.

For example, the AUSF (remote) generates the key KNR_ProSe based on the 5GPRUK #2 obtained in the step S421a or the 5GPRUK #1 obtained in S411, randomly generated Nonce_2, and Nonce_1 (refer to the step S408) sent from a UE side.

In other words, the KNR_ProSe is a key generated based on the updated 5GPRUK #2, and may be denoted as a KNR_ProSe #2. Alternatively, the KNR_ProSe may be a key generated based on the 5GPRUK #1 locally stored in the remote UE, and may be denoted as a KNR_ProSe #1.

S426: The AUSF (remote) sends a ProSe authorization response message #2 to the AMF (relay).

Correspondingly, the AMF (relay) receives the ProSe authorization response message #2 from the AUSF (remote).

The ProSe authorization response message #2 includes Nounce_2, the KNR_ProSe, and the like.

Optionally, the ProSe authorization response message #2 further includes EAP success.

S427: The AMF (relay) sends a relay key response message to the relay UE.

Correspondingly, the relay UE receives the relay key response message from the AMF (relay).

The relay key response message includes the KNR_ProSe, Nounce_2, and the like.

Optionally, the relay key response message further includes the EAP success.

S428: The relay UE sends a direct connection security mode command message to the remote UE.

Correspondingly, the remote UE receives the direct connection security mode command message from the relay UE.

The direct connection security mode command message includes Nounce_2 and the like. It should be understood that, before performing the step S428, the relay UE locally stores the KNR_ProSe regenerated by the AUSF (remote).

Optionally, the direct connection security mode command message further includes the EAP success.

S429: The remote UE generates the KNR_ProSe.

A specific implementation is similar to that in the step S425. Details are not described herein again. It should be noted that the KNR_ProSe generated in the step S429 is the same as the KNR_ProSe generated in the step S425, and the KNR_ProSe is used to perform PC5 security communication between the remote UE and the relay UE.

S430: The remote UE sends a direct connection security mode complete message to the relay UE.

Correspondingly, the relay UE receives the direct connection security mode complete message from the remote UE.

The direct connection security mode complete message is used to indicate that construction of a secure environment between the remote UE and the relay UE is completed.

S431: The relay UE sends a direct communication accept message to the remote UE.

Correspondingly, the remote UE receives the direct communication accept message from the relay UE.

It should be noted that for specific implementations of the foregoing steps S425 to S431 and specific names or meanings of interaction messages, refer to steps S220 to S226 in the foregoing method 200. For brevity, details are not described herein again.

According to the method disclosed in this application, when the remote UE establishes a PC5 security connection on a ProSe control plane, the remote UE determines whether to update the 5GPRUK #1, that is, a 5GPURK update procedure triggered by the remote UE is added, and the SUCI is sent to indicate to update the SGPRUK. In addition, in the technical solution of this application, when it is determined to continue to use the 5GPRUK #1, and the AUSF (remote) receives the 5GPRUK #1 or the PAnF (remote) receives the 5GPRUK ID #1, a check on whether the remote UE has permission to use a 5G ProSe relay service is added. In addition, the 5GPRUK #2 may continue to be used only after the check succeeds. This improves user experience when ensuring secure network communication.

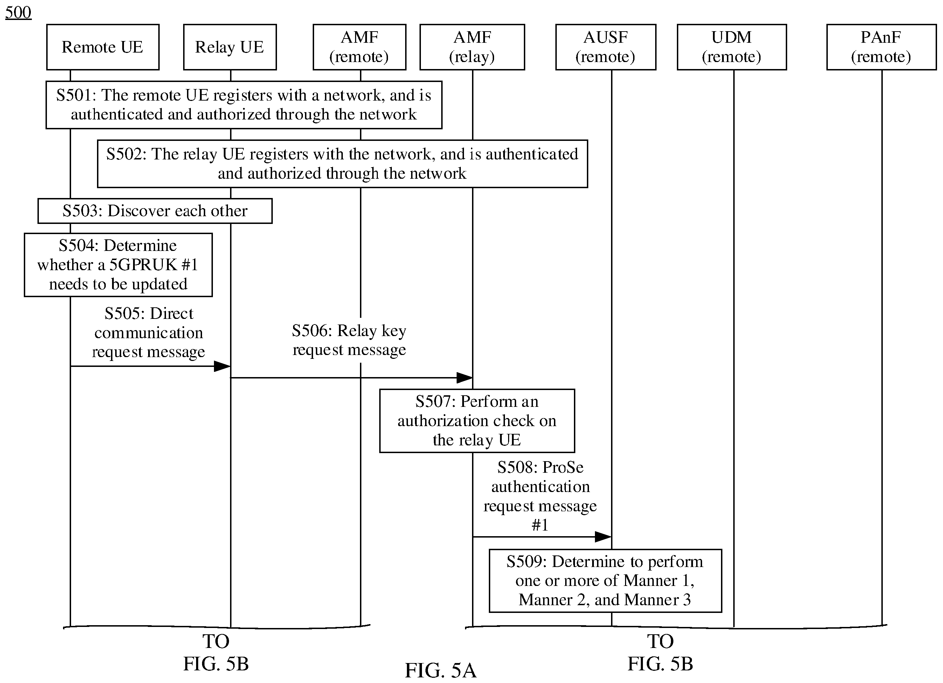

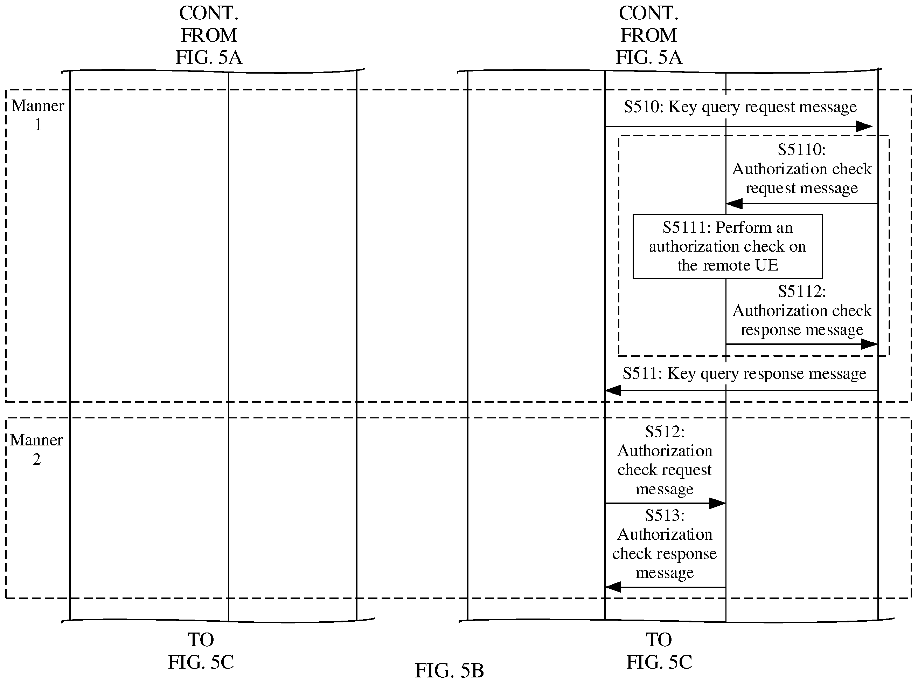

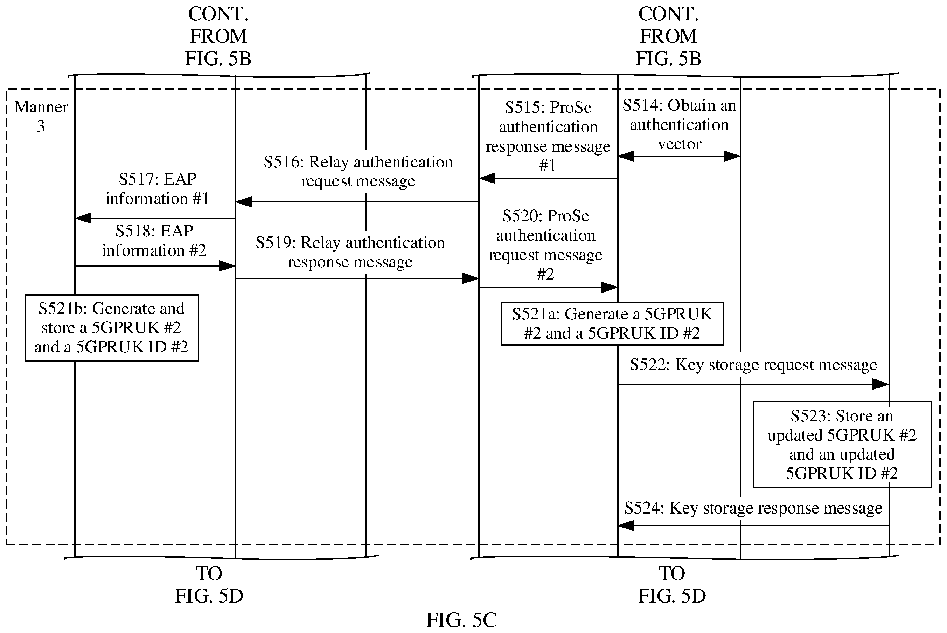

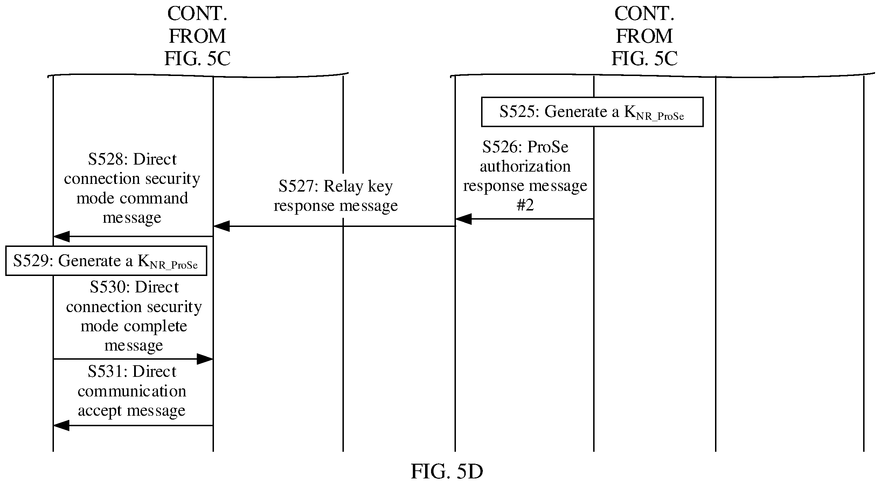

FIG. 5A, FIG. 5B, FIG. 5C, and FIG. 5D are an example flowchart of a communication method 500 according to an embodiment of this application. The method is a solution in which remote UE determines whether a 5GPRUK #1 key needs to be updated and triggers an update mechanism. In addition, a check on whether the remote UE has permission to use a 5G ProSe relay service is added when it is determined to continue to use the 5GPRUK #1. Compared with the method 400 in which an SUCI is sent to indicate to update a 5GPRUK in a subsequent process, in the method 500, a key update indication is sent to indicate to update a 5GPRUK in a subsequent process. As shown in FIG. 5A, FIG. 5B, FIG. 5C, and FIG. 5D, the method includes the following steps.

S501: Remote UE registers with a network, and is authenticated and authorized through the network.

S502: Relay UE registers with the network, and is authenticated and authorized through the network.

S503: The remote UE and the relay UE discover each other.

S504: The remote UE determines whether a 5GPRUK #1 needs to be updated.

It should be noted that for specific implementations of the foregoing steps S501 to S504 and specific names or meanings of interaction messages, refer to steps S401 to S404 in the foregoing method 400. For brevity, details are not described herein again.

S505: The remote UE sends a direct communication request message to the relay UE.

Correspondingly, the relay UE receives the direct communication request message from the remote UE.

The direct communication request message carries a 5GPRUK ID #1 of the remote UE, or the 5GPRUK ID #1 and a key update indication, RSC, Nounce_1, and the like.

For example, based on the foregoing step S504, if the remote UE determines that the 5GPRUK #1 needs to be updated, the direct communication request message carries an SUCI, or the 5GPRUK ID #1 and the key update indication; and if the remote UE determines that the 5GPRUK #1 does not need to be updated, the direct communication request message carries the 5GPRUK ID #1.

Optionally, the key update indication may be a bit value. For example, "0" indicates that the 5GPRUK #1 needs to be updated, and "1" indicates that the 5GPRUK #1 does not need to be updated, that is, the 5GPRUK #1 continues to be used to establish a PC5 security connection. Alternatively, the key update indication may be a cause value indicating that a network side needs to update the 5GPRUK #1. This is not specifically limited in this application.

S506: The relay UE sends a relay key request message to an AMF (relay).

Correspondingly, the AMF (relay) receives the relay key request message from the relay UE.

The relay key request message is a NAS message, and the relay key request message includes the RSC, Nounce_1, a transaction identifier, and the 5GPRUK ID #1 of the remote UE and the key update indication, or the 5GPRUK ID #1, or the SUCI.

S507: The AMF (relay) performs an authorization check on the relay UE.

S508: The AMF (relay) sends a ProSe authentication request message #1 to an AUSF (remote).

Correspondingly, the AUSF (remote) receives the ProSe authentication request message #1 from the AMF (relay).

The ProSe authentication request message #1 carries the RSC, Nounce_1, the 5GPRUK ID #1 of the remote UE and the key update indication, or the 5GPRUK ID #1.

S509: The AUSF (remote) determines to perform one or more of Manner 1, Manner 2, or Manner 3.

Optionally, the AUSF (remote) determines, based on the 5GPRUK ID #1 carried in the ProSe authentication request message #1, to perform Manner 1 and Manner 2 (Either steps S5110 to S5112 in Manner 1 or steps S512 and S513 in Manner 2 need to be performed). Alternatively, the AUSF (remote) determines, based on the 5GPRUK ID #1 and the key update indication that are carried in the ProSe authentication request message #1, to perform Manner 1 and Manner 3 (Steps S5110 to S5112 in Manner 1 are not performed). Alternatively, the AUSF (remote) determines, based on the SUCI carried in the ProSe authentication request message #1, to perform Manner 3. After the AUSF performs Manner 1 or Manner 2, subsequent steps S525 to S531 are performed.

### Manner 1:

S510: The AUSF (remote) sends a key query request message to a PAnF (remote).

Correspondingly, the PAnF (remote) receives the key query request message from the AUSF (remote).

The key query message includes the 5GPRUK ID #1 and the RSC.

S511: The PAnF (remote) sends a key query response message to the AUSF (remote). Correspondingly, the AUSF (remote) receives the key query response message from the PAnF (remote).

Optionally, before performing the step S511, the PAnF may determine whether to perform an authorization check on the remote UE and how to perform the authorization check on the remote UE.

In a possible implementation, before the PAnF performs the step S511, and when the PAnF stores 5G ProSe service authorization information, the PAnF obtains the 5GPRUK #1 and the SUPI of the remote UE through local query based on the 5GPRUK ID #1 and the RSC in the step S510, queries the locally stored 5G ProSe service authorization information based on the SUPI, and performs the authorization check on the remote UE based on the 5G ProSe service authorization information, to determine whether the remote UE has permission to use a 5G ProSe service, namely, a relay service corresponding to the RSC. Further, when the PAnF determines that authorization on the remote UE succeeds, the step S511 is performed, and in this case, the key query response message carries the 5GPRUK #1. When the PAnF determines that authorization on the remote UE fails, the step S511 is performed, and in this case, the key query response message carries indication information, for example, a cause value 403 that represents an authorization check failure result.

It should be noted that the 5G ProSe service authorization information locally stored in the PAnF may be from the AUSF. For example, in a process in which the remote UE obtains the 5GPRUK #1, for example, in the step S208 of the method 200, the UDM may further send 5G ProSe service authorization information corresponding to the remote UE to the AUSF, and the 5G ProSe service authorization information includes but is not limited to: subscription data, an authorization result, or authorization indication information of the 5G ProSe service authorization information. Further, in the step S216 of the method 200, the key storage request message may further carry the 5G ProSe service authorization information. Correspondingly, after receiving the 5G ProSe service authorization information, the PAnF stores the 5G ProSe service authorization information.

In another possible implementation, before the PAnF performs the step S511, and when the PAnF does not store 5G ProSe service authorization information, the PAnF may obtain the 5GPRUK #1 and the SUPI of the remote UE through local query based on the 5GPRUK ID #1 in the step S510. In this case, the key query response message in the step S511 includes the 5GPRUK #1 and the SUPI. In this case, the SUPI may be used as an input parameter, and is used by the AUSF to request a UDM to perform the authorization check on the remote UE, that is, perform steps S512 and S513.

In still another possible implementation, before the PAnF performs the step S511, and when the PAnF does not store 5G ProSe service authorization information, the PAnF may obtain the 5GPRUK #1 and the SUPI of the remote UE through local query based on the 5GPRUK ID #1 in the step S510. Further, the PAnF may further perform steps S5110 and S5112, that is, the PAnF requests a UDM to perform the authorization check on the remote UE.

S5110: The PAnF (remote) sends an authorization check request message to the UDM (remote).

Correspondingly, the UDM (remote) receives the authorization check request message from the PAnF (remote).

The authorization check request message carries the SUPI of the remote UE.

Optionally, the authorization check request message may further carry the RSC.

S5111: The UDM checks whether the remote UE has permission to use a 5G ProSe service.

For example, the UDM determines, based on subscription data corresponding to the SUPI of the remote UE, whether the remote UE has permission to use the ProSe service.

Optionally, when the authorization check request message carries the RSC, the UDM determines, based on subscription data corresponding to the SUPI, whether the UE has permission to use a 5G ProSe service corresponding to the RSC.

In a possible implementation, the UDM determines, based on a servicization operation, to request to perform the authorization check on the remote UE.

In another possible implementation, the UDM determines, based on indication information in a servicization operation, to request to perform the authorization check on the remote UE.

S5112: The UDM (remote) sends an authorization check response message to the PAnF (remote).

Correspondingly, the PAnF (remote) receives the authorization check response message from the UDM (remote).

The authorization check response message carries an authorization result.

For example, the authorization result in the authorization check response message includes success or failure that indicates whether the authorization check on the remote UE succeeds. It should be understood that the step S511 is performed only when the authorization check on the remote UE succeeds. Success represents that authorization succeeds, and a representation form of success may be one piece of indication information indicating that authentication succeeds or "200 OK" information. Failure represents that authorization fails, and a representation form of failure may be one piece of indication information indicating that authentication succeeds, "403 forbidden", or other information with code 403.

It should be particularly noted that the foregoing steps S5110 to S5112 are a process in which the PAnF requests the UDM to perform the authorization check on the remote UE. When the process is performed, steps S512 and S513 do not need to be performed. When the process is not performed, the steps S512 and S513 need to be performed.

Optionally, the AUSF (remote) sends an SUPI query message of the remote UE to the PAnF (remote), and the PAnF (remote) returns the SUPI of the remote UE to the AUSF (remote) after local query. It should be understood that the SUPI of the remote UE is used as an input parameter in a subsequent step S512. In addition, for a case in which the ProSe authentication request message #1 carries the 5GPRUK ID #1 and the key update indication, the SUPI of the remote UE is further used in steps S514 and S521a. In this application, the SUPI query message may be decoupled from the key query request message in S510 for use. This is not specifically limited in this application.

It should be noted that for specific implementations of the foregoing steps S505 to S511 and specific names or meanings of interaction messages, refer to steps S405 to S411 in the foregoing method 400. For brevity, details are not described herein again.

### Manner 2:

S512: The AUSF (remote) sends an authorization check request message to a UDM (remote).

Correspondingly, the UDM (remote) receives the authorization check request message from the AUSF (remote).

The authorization check request message is used to request the UDM (remote) to check whether the remote UE is authorized to use a 5G ProSe relay service, and the authorization check request message includes the SUPI of the remote UE. Optionally, the authorization check request message further includes the RSC.

For example, the authorization check request message may be a Nudm_ UEAuthorization_ProseCheck Request message. This is not specifically limited in this application.

S513: The UDM (remote) sends an authorization check response message to the AUSF (remote).

Correspondingly, the AUSF (remote) receives the authorization check response message from the UDM (remote).

Specifically, before the UDM (remote) sends the authorization check response message to the AUSF (remote), the UDM checks whether the remote UE has permission to use the 5G ProSe service.

For example, the UDM determines, based on subscription data corresponding to the SUPI of the remote UE, whether the remote UE has permission to use the ProSe service.

Optionally, when the authorization check request message carries the RSC, the UDM determines, based on subscription data corresponding to the SUPI, whether the UE has permission to use a 5G ProSe service corresponding to the RSC.

In a possible implementation, the UDM determines, based on a servicization operation, to request to perform the authorization check on the remote UE.

In another possible implementation, the UDM determines, based on indication information in a servicization operation, to request to perform the authorization check on the remote UE.

The authorization check response message includes an authorization result that includes success or failure, and the authorization result indicates whether the authorization check on the remote UE succeeds. It should be understood that the following step S525 is performed only when the authorization check on the remote UE succeeds. Success represents that authorization succeeds, and a representation form of success may be one piece of indication information indicating that authentication succeeds or "200 OK" information. Failure represents that authorization fails, and a representation form of failure may be one piece of indication information indicating that authentication succeeds, "403 forbidden", or other information with code 403.

For example, the authorization check response message may be a Nudm_ UEAuthorization_ProseCheck Response message. This is not specifically limited in this application.

### Manner 3

S514: The AUSF (remote) obtains an authentication vector through a UDM (remote).

For example, the AUSF sends an authentication vector request message to the UDM, to request to obtain the authentication vector. Correspondingly, the UDM returns the authentication vector to the AUSF based on the request of the AUSF. The authentication vector carries KAUSF_P.

If the ProSe authentication request message #1 carries the 5GPRUK ID #1 and the key update indication, the authentication vector request message carries the SUPI that is of the remote UE and that is obtained in the step S511, and the AUSF uses the SUPI as an input parameter and obtains the authentication vector from the UDM. If the ProSe authentication request message #1 carries the SUCI, the authentication vector request message carries the SUCI of the remote UE, and the AUSF uses the SUCI of the remote UE as an input parameter to obtain the SUPI of the remote UE and obtains the authentication vector from the UDM, and uses the SUPI as an input parameter for generating a 5GPRUK ID #2 in a step S521a.

In this step, the UDM (remote) needs to check whether the remote UE is authorized to use a 5G ProSe relay service. A subsequent ProSe authentication procedure, that is, steps S515 to S520, is performed only when the authorization check on the remote UE succeeds.

S515: The AUSF (remote) sends a ProSe authentication response message #1 to the AMF (relay).

Correspondingly, the AMF (relay) receives the ProSe authentication response message #1 from the AUSF (remote).

The ProSe authentication response message #1 includes an EAP message #1.

S516: The AMF (relay) sends a relay authentication request message to the relay UE.

Correspondingly, the relay UE receives the relay authentication request message from the AMF (relay).

The relay authentication request message is a NAS message, and the relay authentication request message includes the EAP message #1 and the transaction identifier.

S517: The relay UE sends the EAP information #1 to the remote UE.

Correspondingly, the remote UE receives the EAP information #1 from the relay UE.

S518: The remote UE sends EAP information #2 to the relay UE.

Correspondingly, the relay UE receives the EAP information #2 from the remote UE.

S519: The relay UE sends a relay authentication response message to the AMF (relay).

Correspondingly, the AMF (relay) receives the relay authentication response message from the relay UE.

The relay authentication response message is a NAS message, and the relay authentication response message includes the EAP information #2 and the transaction identifier.

S520: The AMF (relay) sends a ProSe authentication request message #2 to the AUSF (remote).

Correspondingly, the AUSF (remote) receives the ProSe authentication request message #2 from the AMF (relay).

The ProSe authentication request message #2 includes the EAP information #2.

It should be understood that the AUSF (remote) performs the following step S521a only when ProSe authentication succeeds.

S521a: The AUSF (remote) generates a 5GPRUK #2 and a 5GPRUK ID #2.

Specifically, the AUSF (remote) may generate, through derivation, the 5GPRUK #2 and the 5GPRUK ID #2 by using the RSC (refer to the step S508), the SUPI (refer to the step S511 or S514), and KAUSF_P as input parameters.

S521b: The remote UE generates and stores a newly generated 5GPRUK #2 and a newly generated 5GPRUK ID #2.

A specific implementation is similar to that in the step S521a. Details are not described herein again.

That is, after generating the new 5GPRUK #2 and the new 5GPRUK ID #2, the remote UE locally stores the 5GPRUK #2 and the 5GPRUK ID #2 for subsequently generating a KNR_ProSe, so that a PC5 security connection is established between the remote UE and the relay UE.

Optionally, if the remote UE locally stores an old 5GPRUK #1 and an old 5GPRUK ID #1 before performing the step S521b, after performing the step S512b, the remote UE deletes the locally stored old 5GPRUK #1 and the old 5GPRUK ID #1, and stores the regenerated 5GPRUK #2 and the regenerated 5GPRUK ID #2. That is, the remote UE replaces the 5GPRUK #1 and the 5GPRUK ID #1 with the 5GPRUK #2 and the 5GPRUK ID #2.

S522: The AUSF (remote) sends a key storage request message to a PAnF (remote).

Correspondingly, the PAnF (remote) receives the key storage request message from the AUSF (remote).

The key storage request message includes the SUPI, the RSC, the 5GPRUK #2, and the 5GPRUK ID #2.

S523: The PAnF (remote) stores the 5GPRUK #2 and the 5GPRUK ID #2.

Optionally, if the PAnF (remote) locally stores an old 5GPRUK #1 and an old 5GPRUK ID #1 before the step S522 is performed, after the step S522 is performed, the PAnF (remote) deletes the locally stored old 5GPRUK #1 and the locally stored old 5GPRUK ID #1, and stores the newly generated 5GPRUK #2 and the newly generated 5GPRUK ID #2. That is, the PAnF (remote) replaces the 5GPRUK #1 and the 5GPRUK ID #1 with the 5GPRUK #2 and the 5GPRUK ID #2.

S524: The PAnF (remote) sends a key storage response message to the AUSF (remote).

Correspondingly, the AUSF (remote) receives the key storage response message from the PAnF (remote).

It should be noted that for specific implementations of the foregoing steps S514 to S524 and specific names or meanings of interaction messages, refer to steps S414 to S424 in the foregoing method 400. For brevity, details are not described herein again.

S525: The AUSF (remote) generates a key KNR_ProSe.

For example, the AUSF (remote) generates the key KNR_ProSe based on the 5GPRUK #2 obtained in the step S521a or the 5GPRUK #1 obtained in S511, randomly generated Nonce_2, and Nonce_1 (refer to the step S508) sent from a UE side.

In other words, the KNR_ProSe is a key generated based on the new 5GPRUK #2, and may be denoted as a KNR_ProSe #2. Alternatively, the KNR_ProSe may be a key generated based on the 5GPRUK #1 locally stored in the remote UE, and may be denoted as a KNR_ProSe #1.

S526: The AUSF (remote) sends a ProSe authorization response message #2 to the AMF (relay).

Correspondingly, the AMF (relay) receives the ProSe authorization response message #2 from the AUSF (remote).

The ProSe authorization response message #2 includes Nounce_2, the KNR_ProSe, and the like.

Optionally, the ProSe authorization response message #2 further includes EAP success.

S527: The AMF (relay) sends a relay key response message to the relay UE.

Correspondingly, the relay UE receives the relay key response message from the AMF (relay).

The relay key response message includes the KNR_ProSe, Nounce_2, and the like.

Optionally, the relay key response message further includes the EAP success.

S528: The relay UE sends a direct connection security mode command message to the remote UE.

Correspondingly, the remote UE receives the direct connection security mode command message from the relay UE.

The direct connection security mode command message includes Nounce_2 and the like. It should be understood that, before performing the step S528, the relay UE locally stores the KNR_ProSe regenerated by the AUSF (remote).

Optionally, the direct connection security mode command message further includes the EAP success.

S529: The remote UE generates a KNR_ProSe.

A specific implementation is similar to that in the step S525. Details are not described herein again. It should be noted that the KNR_ProSe generated in the step S529 is the same as the KNR_ProSe generated in the step S525, and the KNR_ProSe is used to perform PC5 security communication between the remote UE and the relay UE.

S530: The remote UE sends a direct connection security mode complete message to the relay UE.

Correspondingly, the relay UE receives the direct connection security mode complete message from the remote UE.

The direct connection security mode complete message is used to indicate that construction of a secure environment between the remote UE and the relay UE is completed.

S531: The relay UE sends a direct communication accept message to the remote UE.

Correspondingly, the remote UE receives the direct communication accept message from the relay UE.

It should be noted that for specific implementations of the foregoing steps S525 to S531 and specific names or meanings of interaction messages, refer to steps S425 to S431 in the foregoing method 400. For brevity, details are not described herein again.

According to the method disclosed in this application, when the remote UE establishes a ProSe PC5 control plane security connection, the remote UE determines whether to update the 5GPRUK #1, that is, a 5GPURK update procedure triggered by the remote UE is added, and the key update indication is sent to indicate to update the 5GPRUK in a subsequent procedure. In addition, in the technical solution of this application, when it is determined to continue to use the 5GPRUK #1, and the AUSF (remote) receives the 5GPRUK #1 or the PAnF (remote) receives the 5GPRUK ID #1, a check on whether the remote UE has permission to use a 5G ProSe relay service is added. In addition, the 5GPRUK #1 may continue to be used only after the check succeeds. This improves user experience when ensuring secure network communication.

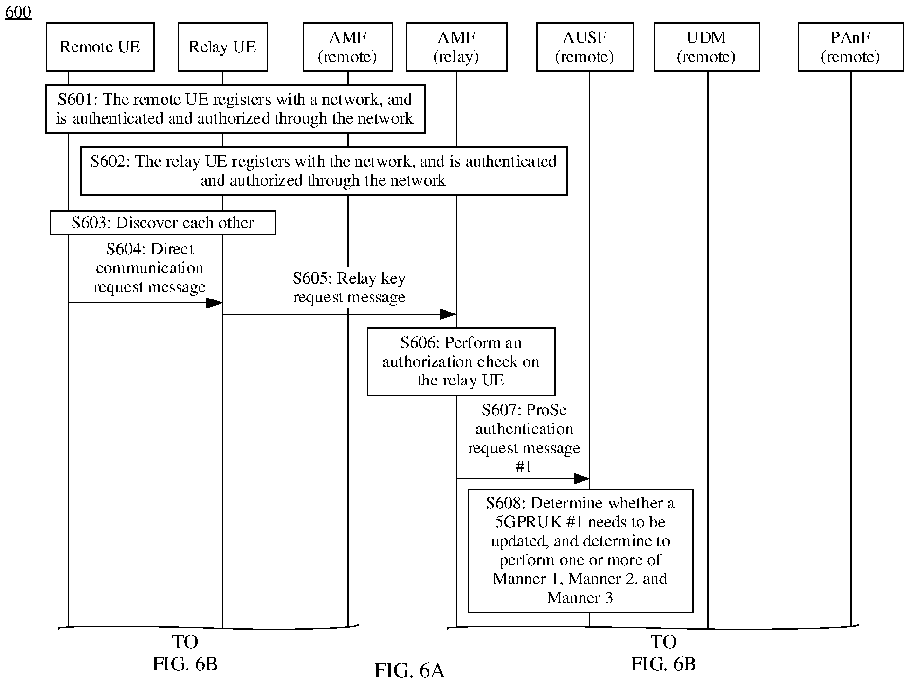

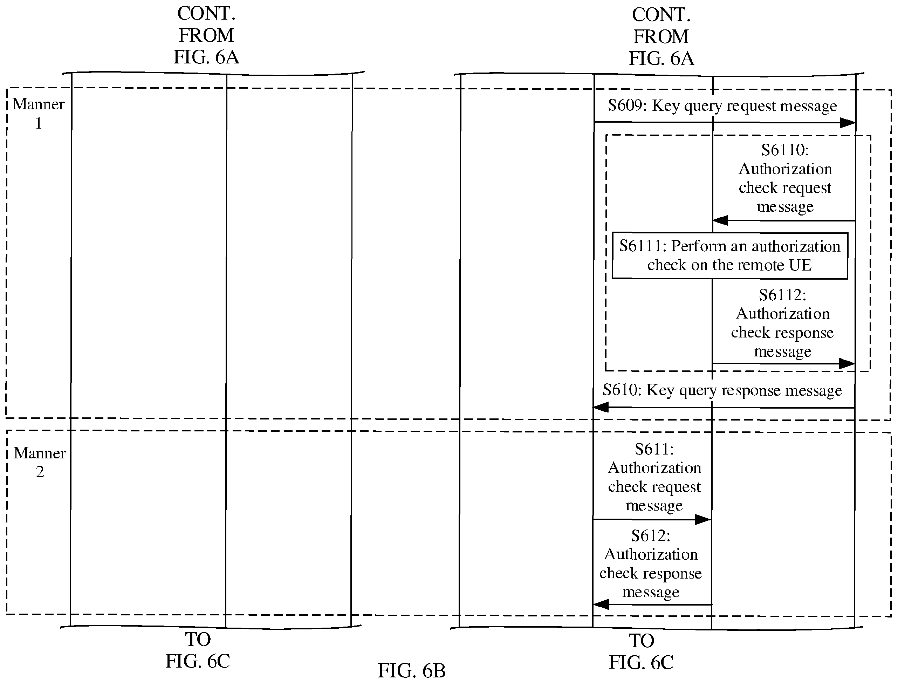

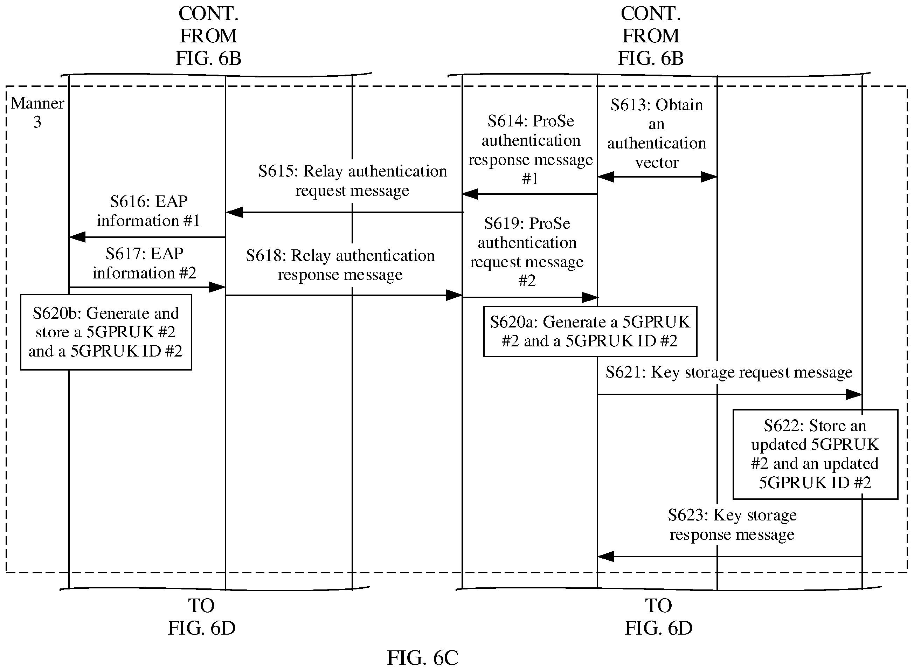

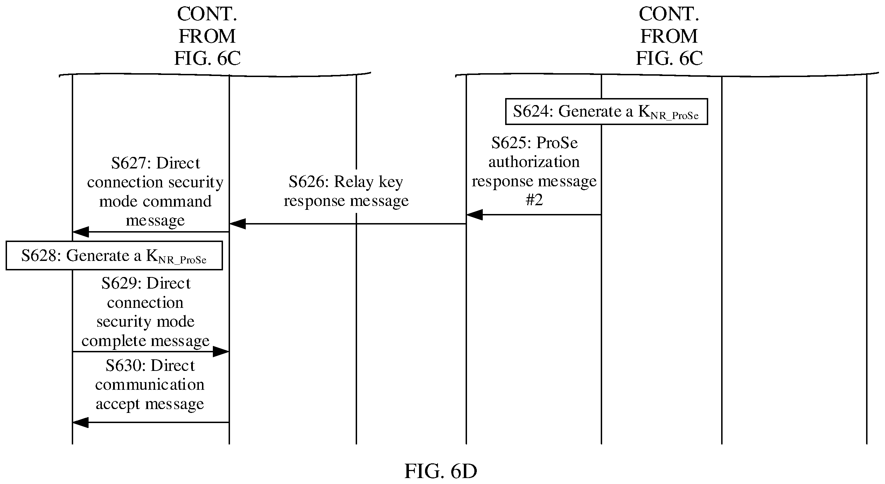

FIG. 6A, FIG. 6B, FIG. 6C, and FIG. 6D are an example flowchart of a communication method 600 according to an embodiment of this application. Compared with methods 400 and 500, the method 600 is a solution in which an AUSF (remote) determines whether a 5GPRUK #1 needs to be updated and triggers an update mechanism. In addition, a check on whether the remote UE has permission to use a 5G ProSe relay service is added when it is determined to continue to use the 5GPRUK #1. As shown in FIG. 6A, FIG. 6B, FIG. 6C, and FIG. 6D, the method includes the following steps.

S601: Remote UE registers with a network, and is authenticated and authorized through the network.

S602: Relay UE registers with the network, and is authenticated and authorized through the network.

S603: The remote UE and the relay UE discover each other.

S604: The remote UE sends a direct communication request message to the relay UE.

Correspondingly, the relay UE receives the direct communication request message from the remote UE.

The direct communication request message carries a 5GPRUK ID #1 of the remote UE, RSC, Nounce_1, and the like.

For example, if the remote UE finds through local query that the 5GPRUK #1 is stored, the direct communication request message carries the 5GPRUK ID #1.

S605: The relay UE sends a relay key request message to an AMF (relay).

Correspondingly, the AMF (relay) receives the relay key request message from the relay UE.

The relay key request message is a NAS message, and the relay key request message includes the RSC, Nounce_1, a transaction identifier, the 5GPRUK ID #1 of the remote UE, and the like.

S606: The AMF (relay) performs an authorization check on the relay UE.

S607: The AMF (relay) sends a ProSe authentication request message #1 to an AUSF (remote).

Correspondingly, the AUSF (remote) receives the ProSe authentication request message #1 from the AMF (relay).

The ProSe authentication request message #1 carries the RSC, Nounce_1, the 5GPRUK ID #1 of the remote UE, and the like.

It should be noted that for specific implementations of the foregoing steps S601 to S607 and specific names or meanings of interaction messages, refer to steps S201 to S207 in the foregoing method 200. For brevity, details are not described herein again.

S608: The AUSF (remote) determines whether the 5GPRUK #1 needs to be updated, and determines to perform one or more of Manner 1, Manner 2, and Manner 3.

In a possible implementation, when the ProSe authentication request message #1 carries the 5GPRUK ID #1, it indicates that the remote UE locally stores an old key 5GPRUK #1. Further, in the step S608, the AUSF (remote) may determine, according to a preconfigured local policy, whether to update the 5GPRUK #1, that is, the AUSF (remote) triggers a key update mechanism.

For example, the local policy indicates that when a PLMN ID of the AMF (relay) or a local configuration file of the AUSF (remote) changes, the AUSF (remote) determines that the 5GPRUK #1 needs to be updated.

Optionally, the step S608 may alternatively be performed after Manner 1 is performed, that is, performed after a step S610.

For example, when the step S608 is performed before a step S609 (that is, the step S608 is performed before Manner 1 is performed), and the AUSF (remote) determines not to update the 5GPRUK #1, Manner 1 and Manner 2 are performed (in this case, steps S6110 to S6112 in Manner 1 are not performed), or Manner 1 is performed (in this case, steps S6110 to S6112 in Manner 1 are performed); or when the AUSF (remote) determines that the 5GPRUK #1 needs to be updated, Manner 1 and Manner 3 are performed (where in this case, steps S6110 to S6112 in Manner 1 are not performed).

For example, when the step S608 is performed after the step S610 and before a step S611 (that is, the step S608 is performed after Manner 1 is performed), the AUSF (remote) may determine, according to a local policy, whether to update the 5GPRUK #1, and the 5GPRUK #1 is obtained in the step S610. When the AUSF (remote) determines that the 5GPRUK #1 does not need to be updated, Manner 2 is performed. Optionally, if steps S6110 to S6112 have been performed in Manner 1, or an authorization check has been performed on the remote UE in Manner 1, the AUSF (remote) does not need to perform Manner 2, and then performs a step S624 when it is determined that the 5GPRUK #1 does not need to be updated and the authorization check of the remote UE succeeds. When the AUSF (remote) determines that the 5GPRUK #1 needs to be updated, Manner 3 is performed.

That is, for the authorization check on the remote UE, when steps S6110 to S6113 are performed in Manner 1, Manner 2 does not need to be performed; and when steps S6110 to S6113 are not performed in Manner 1, Manner 2 needs to be performed.

### Manner 1:

S609: The AUSF (remote) sends a key query request message to a PAnF (remote).

Correspondingly, the PAnF (remote) receives the key query request message from the AUSF (remote).

The key query message includes the 5GPRUK ID #1 and the RSC.

S610: The PAnF (remote) sends a key query response message to the AUSF (remote). Correspondingly, the AUSF (remote) receives the key query response message from the PAnF (remote).

Optionally, before performing the step S610, the PAnF may determine whether to perform an authorization check on the remote UE and how to perform the authorization check on the remote UE.

In a possible implementation, before the PAnF performs the step S610, and when the PAnF stores 5G ProSe service authorization information, the PAnF obtains the 5GPRUK #1 and the SUPI of the remote UE through local query based on the 5GPRUK ID #1 and the RSC in the step S609, queries the locally stored 5G ProSe service authorization information based on the SUPI, and performs the authorization check on the remote UE based on the 5G ProSe service authorization information, to determine whether the remote UE has permission to use a 5G ProSe service, namely, a relay service corresponding to the RSC. Further, when the PAnF determines that authorization on the remote UE succeeds, the PAnF performs the step S610, and in this case, the key query response message carries the 5GPRUK #1. When the PAnF determines that authorization on the remote UE fails, the PAnF performs the step S610, and in this case, the key query response message carries indication information, for example, a cause value 403 that represents an authorization check failure result.

It should be noted that the 5G ProSe service authorization information locally stored in the PAnF may be from the AUSF. For example, in a process in which the remote UE obtains the 5GPRUK #1, for example, in the step S208 of the method 200, the UDM may further send 5G ProSe service authorization information corresponding to the remote UE to the AUSF, and the 5G ProSe service authorization information includes but is not limited to: subscription data, an authorization result, or authorization indication information of the 5G ProSe service authorization information. Further, in the step S216 of the method 200, the key storage request message further carries the 5G ProSe service authorization information. Correspondingly, after receiving the 5G ProSe service authorization information, the PAnF stores the 5G ProSe service authorization information.

In another possible implementation, before the step S610 is performed, and when the PAnF does not store 5G ProSe service authorization information, the PAnF may obtain the 5GPRUK #1 and the SUPI of the remote UE through local query based on the 5GPRUK ID #1. In this case, the key query response message in the step S610 includes the 5GPRUK #1 and the SUPI.

Optionally, the AUSF (remote) sends an SUPI query message of the remote UE to the PAnF (remote), and the PAnF (remote) returns the SUPI of the remote UE to the AUSF (remote) after local query. It should be understood that the SUPI of the remote UE is used as an input parameter in a subsequent step S611 or S613. In this application, the SUPI query message may be decoupled from a key query request message in S609 for use. This is not specifically limited in this application.

In still another possible implementation, before the step S610 is performed, and when the PAnF does not store 5G ProSe service authorization information, optionally, the PAnF may obtain the 5GPRUK #1 and the SUPI of the remote UE through local query based on the 5GPRUK ID #1 in the step S609. Further, the PAnF may further perform steps S6110 and S6112, that is, the PAnF requests a UDM to perform an authorization check on the remote UE.

S6110: The PAnF (remote) sends an authorization check request message to the UDM (remote).

Correspondingly, the UDM (remote) receives the authorization check request message from the PAnF (remote).

The authorization check request message carries the SUPI of the remote UE.

Optionally, the authorization check request message further carries the RSC.

S6111: The UDM performs authorization verification on the remote UE.

That is, the UDM checks whether the remote UE has permission to use a 5G ProSe service.

For example, the UDM determines, based on subscription data corresponding to the SUPI of the remote UE, whether the remote UE has permission to use the ProSe service.

Optionally, when the authorization check request message carries the RSC, the UDM determines, based on subscription data corresponding to the SUPI, whether the UE has permission to use a 5G ProSe service corresponding to the RSC.

In a possible implementation, the UDM determines, based on a servicization operation, to request to perform the authorization check on the remote UE.

In another possible implementation, the UDM determines, based on indication information in a servicization operation, to request to perform the authorization check on the remote UE.

S6112: The UDM (remote) sends an authorization check response message to the PAnF (remote).

Correspondingly, the PAnF (remote) receives the authorization check response message from the UDM (remote).

The authorization check response message carries an authorization result.

For example, the authorization result in the authorization check response message includes success or failure that indicates whether the authorization check on the remote UE succeeds. It should be understood that the step S610 is performed only when the authorization check on the remote UE succeeds. Success represents that authorization succeeds, and a representation form of success may be one piece of indication information indicating that authentication succeeds or "200 OK" information. Failure represents that authorization fails, and a representation form of failure may be one piece of indication information indicating that authentication succeeds, "403 forbidden", or other information with code 403.

It should be particularly noted that the foregoing steps S6110 to S6112 are a process in which the PAnF requests the UDM to perform the authorization check on the remote UE. When the process is performed, steps S611 and S612 do not need to be performed. When the process is not performed, the steps S611 and S612 need to be performed.

It should be noted that for specific implementations of the foregoing steps S609 and S610 and specific names or meanings of interaction messages, refer to steps S410 and S411 in the foregoing method 400. For brevity, details are not described herein again.

### Manner 2:

S611: The AUSF (remote) sends an authorization check request message to a UDM (remote).

Correspondingly, the UDM (remote) receives the authorization check request message from the AUSF (remote).

The authorization check request message is used to request the UDM (remote) to check whether the remote UE is authorized to use a 5G ProSe relay service, and the authorization check request message includes the SUPI of the remote UE. Optionally, the authorization check request message further includes the RSC.

For example, the authorization check request message may be a Nudm_ UEAuthorization_ProseCheck Request message. This is not specifically limited in this application.

S612: The UDM (remote) sends an authorization check response message to the AUSF (remote).

Correspondingly, the AUSF (remote) receives the authorization check response message from the UDM (remote).

Specifically, before the UDM (remote) sends the authorization check response message to the AUSF (remote), the UDM checks whether the remote UE has permission to use the 5G ProSe service.

For example, the UDM determines, based on subscription data corresponding to the SUPI of the remote UE, whether the remote UE has permission to use the ProSe service.

Optionally, when the authorization check request message carries the RSC, the UDM determines, based on subscription data corresponding to the SUPI, whether the UE has permission to use a 5G ProSe service corresponding to the RSC.

In a possible implementation, the UDM determines, based on a servicization operation, to request to perform the authorization check on the remote UE.

In another possible implementation, the UDM determines, based on indication information in a servicization operation, to request to perform the authorization check on the remote UE.

The authorization check response message includes an authorization result that includes success or failure, and the authorization result indicates whether the authorization check on the remote UE succeeds. It should be understood that the following step S624 is performed only when the authorization check on the remote UE succeeds. Success represents that authorization succeeds, and a representation form of success may be one piece of indication information indicating that authentication succeeds or "200 OK" information. Failure represents that authorization fails, and a representation form of failure may be one piece of indication information indicating that authentication succeeds, "403 forbidden", or other information with code 403.

For example, the authorization check response message may be a Nudm_ UEAuthorization_ProseCheck Response message. This is not specifically limited in this application.

It should be noted that for specific implementations of the foregoing steps S611 and S612 and specific names or meanings of interaction messages, refer to steps S412 and S413 in the foregoing method 400. For brevity, details are not described herein again.

### Manner 3

S613: The AUSF (remote) obtains an authentication vector through a UDM (remote).

For example, the AUSF uses the SUPI that is of the remote UE and that is obtained in the step S610 as an input parameter, and sends an authentication vector request message to the UDM, to request to obtain the authentication vector. Correspondingly, the UDM returns the authentication vector to the AUSF based on the request of the AUSF. The authentication vector carries KAUSF_P.

In this step, the UDM (remote) needs to check whether the remote UE is authorized to use a 5G ProSe relay service. A subsequent ProSe authentication procedure, that is, steps S614 to S619, is performed only when the authorization check on the remote UE succeeds.

S614: The AUSF (remote) sends a ProSe authentication response message #1 to the AMF (relay).

Correspondingly, the AMF (relay) receives the ProSe authentication response message #1 from the AUSF (remote).

The ProSe authentication response message #1 includes an EAP message #1.

S615: The AMF (relay) sends a relay authentication request message to the relay UE.

Correspondingly, the relay UE receives the relay authentication request message from the AMF (relay).

The relay authentication request message is a NAS message, and the relay authentication request message includes the EAP message #1 and the transaction identifier.

S616: The relay UE sends EAP information #1 (EAP message #1) to the remote UE.

Correspondingly, the remote UE receives the EAP information #1 from the relay UE.

S617: The remote UE sends EAP information #2 (EAP message #2) to the relay UE.

Correspondingly, the relay UE receives the EAP information #2 from the remote UE.

S618: The relay UE sends a relay authentication response message to the AMF (relay).

Correspondingly, the AMF (relay) receives the relay authentication response message from the relay UE.

The relay authentication response message is a NAS message, and the relay authentication response message includes the EAP information #2 and the transaction identifier.

S619: The AMF (relay) sends a ProSe authentication request message #2 to the AUSF (remote).

Correspondingly, the AUSF (remote) receives the ProSe authentication request message #2 from the AMF (relay).

The ProSe authentication request message #2 includes the EAP information #2.

It should be understood that the AUSF (remote) performs the following step S620a only when ProSe authentication succeeds.

S620a: The AUSF (remote) generates a 5GPRUK #2 and a 5GPRUK ID #2.

Specifically, the AUSF (remote) may generate, through derivation, the 5GPRUK #2 and the 5GPRUK ID #2 by using the RSC (refer to the step S607), the SUPI (refer to the step S610 or S613), and KAUSF_P as input parameters.

S620b: The remote UE generates and stores a newly generated 5GPRUK #2 and a newly generated 5GPRUK ID #2.

A specific implementation is similar to that in the step S620a. Details are not described herein again.

That is, after generating the new 5GPRUK #2 and the new 5GPRUK ID #2, the remote UE locally stores the 5GPRUK #2 and the 5GPRUK ID #2 for subsequently generating a KNR_ProSe, so that a PC5 security connection is established between the remote UE and the relay UE.

Optionally, if the remote UE locally stores an old 5GPRUK #1 and an old 5GPRUK ID #1 before performing the step S620b, after performing the step S620b, the remote UE deletes the locally stored old 5GPRUK #1 and the old 5GPRUK ID #1, and stores the regenerated 5GPRUK #2 and the regenerated 5GPRUK ID #2. That is, the remote UE replaces the 5GPRUK #1 and the 5GPRUK ID #1 with the 5GPRUK #2 and the 5GPRUK ID #2.

S621: The AUSF (remote) sends a key storage request message to a PAnF (remote).

Correspondingly, the PAnF (remote) receives the key storage request message from the AUSF (remote).

The key storage request message includes the SUPI, the RSC, the 5GPRUK #2, and the 5GPRUK ID #2.

S622: The PAnF (remote) stores the 5GPRUK #2 and the 5GPRUK ID #2.

Optionally, if the PAnF (remote) locally stores an old 5GPRUK #2 and an old 5GPRUK ID #2 before the step S621 is performed, after the step S621 is performed, the PAnF (remote) deletes the locally stored old SGPRUK#1 and the locally stored old 5GPRUK ID #1, and stores the newly generated 5GPRUK #2 and the newly generated 5GPRUK ID #2. That is, the PAnF (remote) replaces the 5GPRUK #1 and the 5GPRUK ID #1 with the 5GPRUK #2 and the 5GPRUK ID #2.

S623: The PAnF (remote) sends a key storage response message to the AUSF (remote).

Correspondingly, the AUSF (remote) receives the key storage response message from the PAnF (remote).

It should be noted that for specific implementations of the foregoing steps S609 to S623 and specific names or meanings of interaction messages, refer to steps S510 to S524 in the foregoing method 500. For brevity, details are not described herein again.

S624: The AUSF (remote) generates a key KNR_ProSe.

For example, the AUSF (remote) generates the key KNR_ProSe based on the 5GPRUK #2 obtained in the step S620a or the 5GPRUK #1 obtained in S610, randomly generated Nonce_2, and Nonce_1 (refer to the step S607) sent from a UE side.

S625: The AUSF (remote) sends a ProSe authorization response message #2 to the AMF (relay).

Correspondingly, the AMF (relay) receives the ProSe authorization response message #2 from the AUSF (remote).

The ProSe authorization response message #2 includes Nounce_2, the KNR_ProSe, and the like.

Optionally, the ProSe authorization response message #2 further includes EAP success.

S626: The AMF (relay) sends a relay key response message to the relay UE.

Correspondingly, the relay UE receives the relay key response message from the AMF (relay).

The relay key response message includes the KNR_ProSe, Nounce_2, and the like.

Optionally, the relay key response message further includes the EAP success.

S627: The relay UE sends a direct connection security mode command message to the remote UE.

Correspondingly, the remote UE receives the direct connection security mode command message from the relay UE.

The direct connection security mode command message includes Nounce_2 and the like. It should be understood that, before performing the step S627, the relay UE locally stores the KNR_ProSe regenerated by the AUSF (remote).

Optionally, the direct connection security mode command message further includes the EAP success.

S628: The remote UE generates a KNR_ProSe.

A specific implementation is similar to that in the step S624. Details are not described herein again. It should be noted that the KNR_ProSe generated in the step S628 is the same as the KNR_ProSe generated in the step S624, and the KNR_ProSe is used to perform PC5 security communication between the remote UE and the relay UE.

S629: The remote UE sends a direct connection security mode complete message to the relay UE.

Correspondingly, the relay UE receives the direct connection security mode complete message from the remote UE.

The direct connection security mode complete message is used to indicate that construction of a secure environment between the remote UE and the relay UE is completed.

S630: The relay UE sends a direct communication accept message to the remote UE.

Correspondingly, the remote UE receives the direct communication accept message from the relay UE.

It should be noted that for specific implementations of the foregoing steps S624 to S630 and specific names or meanings of interaction messages, refer to steps S525 to S531 in the foregoing method 500. For brevity, details are not described herein again.

According to the method disclosed in this application, when the remote UE establishes a ProSe PC5 control plane security connection, the AUSF (remote) determines whether to update the 5GPRUK #1, that is, a 5GPURK update procedure triggered by the AUSF (remote) is added. In addition, in the technical solution of this application, when it is determined to continue to use the 5GPRUK #1, and the AUSF (remote) receives the 5GPRUK #1 or the PAnF (remote) receives the 5GPRUK ID #1, a check on whether the remote UE has permission to use a 5G ProSe relay service is added. In addition, the 5GPRUK #1 may continue to be used only after the check succeeds. This improves user experience when ensuring secure network communication.

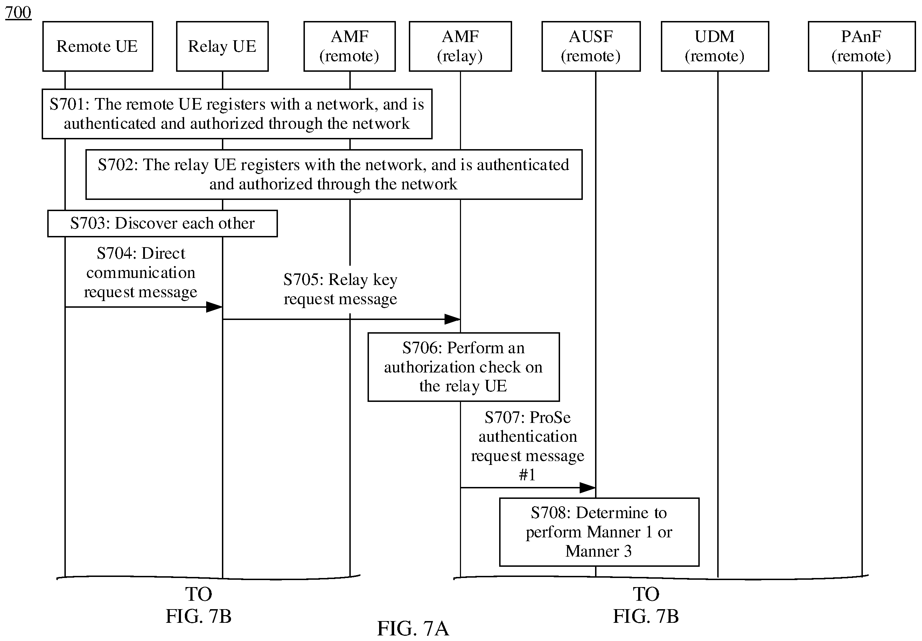

FIG. 7A, FIG. 7B, FIG. 7C, and FIG. 7D are an example flowchart of a communication method 700 according to an embodiment of this application. Compared with methods 400 to 600, the method 700 is a solution in which a PAnF (remote) determines whether a 5GPRUK #1 needs to be updated and triggers an update mechanism. In addition, a check on whether the remote UE has permission to use a 5G ProSe relay service is added when it is determined to continue to use the 5GPRUK #1. As shown in FIG. 7A, FIG. 7B, FIG. 7C, and FIG. 7D, the method includes the following steps.

S701: Remote UE registers with a network, and is authenticated and authorized through the network.

S702: Relay UE registers with the network, and is authenticated and authorized through the network.

S703: The remote UE and the relay UE discover each other.

S704: The remote UE sends a direct communication request message to the relay UE.

Correspondingly, the relay UE receives the direct communication request message from the remote UE.

The direct communication request message carries a 5GPRUK ID #1 of the remote UE, RSC, Nounce_1, and the like.

S705: The relay UE sends a relay key request message to an AMF (relay).

Correspondingly, the AMF (relay) receives the relay key request message from the relay UE.

The relay key request message is a NAS message, and the relay key request message includes the RSC, Nounce_1, a transaction identifier, the 5GPRUK ID #1 of the remote UE, and the like.

S706: The AMF (relay) performs an authorization check on the relay UE.

S707: The AMF (relay) sends a ProSe authentication request message #1 to the AUSF (remote).

Correspondingly, the AUSF (remote) receives the ProSe authentication request message #1 from the AMF (relay).

The ProSe authentication request message #1 carries the RSC, Nounce_1, the 5GPRUK ID #1 of the remote UE, and the like.

It should be noted that for specific implementations of the foregoing steps S701 to S707 and specific names or meanings of interaction messages, refer to steps S601 to S607 in the foregoing method 600. For brevity, details are not described herein again.

S708: The AUSF (remote) determines to perform Manner 1 or Manner 3.

For example, if the ProSe authentication request message #1 carries the 5GPRUK ID #1, it is determined to perform Manner 1 and Manner 2. Either steps S71110 to S71112 in Manner 1 or steps S713 and S714 in Manner 2 may be performed.

Optionally, if the ProSe authentication request message #1 carries the SUCI of the remote UE, it is determined to perform Manner 3.

### Manner 1:

S709: The AUSF (remote) sends a key query request message to a PAnF (remote).

Correspondingly, the PAnF (remote) receives the key query request message from the AUSF (remote).

The key query message includes the 5GPRUK ID #1 and the RSC.

S710: The PAnF (remote) determines whether the 5GPRUK #1 needs to be updated.

In a possible implementation, when the 5GPRUK ID #1 is received, the PAnF (remote) may determine, according to a preconfigured local policy (for example, use time of the 5GPRUK #1 and an update indication received by the PAnF (remote) from other network elements such as the AUSF or a UDM), whether the 5GPRUK #1 needs to be updated.

For example, the preconfigured local policy indicates that the use time (or a validity period) of the 5GPRUK #1 is 24 hours. If the key query request message further indicates that the use time of the 5GPRUK #1 is 18 hours, it indicates that a key 5GPRUK #2 is currently still valid, and the PAnF (remote) determines that the 5GPRUK #1 does not need to be updated. In this case, a step S710 carries the 5GPRUK #1.

For example, the preconfigured local policy indicates that expiration time of the validity period of the 5GPRUK #1 is 18:00. If time at which the PAnF (remote) receives the key query request message is 20:00, it indicates that the key 5GPRUK #1 has expired. In this case, the PAnF (remote) determines that the 5GPRUK #1 needs to be updated, and a step S710 does not carry the 5GPRUK #1.

In another possible implementation, when the 5GPRUK ID #1 is received, the PAnF (remote) locally queries whether RSC #1 corresponding to the 5GPRUK #1 is stored. If the RSC #1 is not stored locally (or the PAnF (remote) deletes the RSC #1 according to a received instruction from the UDM), the PAnF (remote) determines that the 5GPRUK #1 needs to be updated.

Optionally, after determining that the 5GPRUK #1 does not need to be updated, the PAnF may perform an authorization check on the remote UE.

In a possible implementation, before the PAnF performs a step S711, and when the PAnF stores 5G ProSe service authorization information, the PAnF queries the locally stored 5G ProSe service authorization information based on the SUPI of the remote UE, and performs the authorization check on the remote UE based on the 5G ProSe service authorization information, to determine whether the remote UE has permission to use a 5G ProSe service, namely, a relay service corresponding to the RSC. Further, when the PAnF determines that authorization on the remote UE succeeds, the PAnF performs the step S711, and in this case, the key query response message carries the 5GPRUK #1. When the PAnF determines that authorization on the remote UE fails, the PAnF performs the step S711, and in this case, the key query response message carries indication information, for example, a cause value 403 that represents an authorization check failure result.

It should be noted that the 5G ProSe service authorization information locally stored in the PAnF may be from the AUSF. For example, in a process in which the remote UE obtains the 5GPRUK #1, for example, in the step S208 of the method 200, the UDM may further send 5G ProSe service authorization information corresponding to the remote UE to the AUSF, and the 5G ProSe service authorization information includes but is not limited to: subscription data, an authorization result, or authorization indication information of the 5G ProSe service authorization information. Further, in the step S216 of the method 200, the key storage request message further carries the 5G ProSe service authorization information. Correspondingly, after receiving the 5G ProSe service authorization information, the PAnF stores the 5G ProSe service authorization information.

In another possible implementation, before the step S711 is performed, and when the PAnF does not store 5G ProSe service authorization information, the PAnF may obtain the 5GPRUK #1 and the SUPI of the remote UE through local query based on the 5GPRUK ID #1. In this case, the key query response message in the step S711 includes the 5GPRUK #1 and the SUPI.

Optionally, the AUSF (remote) sends an SUPI query message of the remote UE to the PAnF (remote), and the PAnF (remote) returns the SUPI of the remote UE to the AUSF (remote) after local query. It should be understood that the SUPI of the remote UE is used as an input parameter in a subsequent step S713 or S715. In this application, the SUPI query message may be decoupled from a key query request message in S709 for use. This is not specifically limited in this application.

In still another possible implementation, after the PAnF determines that the 5GPRUK #1 does not need to be updated, and when the PAnF does not store 5G ProSe service authorization information, optionally, the PAnF may obtain the 5GPRUK #1 and the SUPI of the remote UE through local query based on the 5GPRUK ID #1 in the step S710. Further, the PAnF may further perform steps S7110 and S7112. That is, the PAnF requests the UDM to perform the authorization check on the remote UE.

S7110: The PAnF (remote) sends an authorization check request message to the UDM (remote).

Correspondingly, the UDM (remote) receives the authorization check request message from the PAnF (remote).

The authorization check request message carries the SUPI of the UE.

Optionally, the authorization check request message further carries the RSC.

S7111: The UDM performs authorization verification on the remote UE.

That is, the UDM checks whether the remote UE has permission to use a ProSe service.

For example, the UDM determines, based on subscription data corresponding to the SUPI of the remote UE, whether the remote UE has permission to use the ProSe service.

Optionally, when the authorization check request message carries the RSC, the UDM determines, based on subscription data corresponding to the SUPI, whether the UE has permission to use a 5G ProSe service corresponding to the RSC.

In a possible implementation, the UDM determines, based on a servicization operation, to request to perform the authorization check on the remote UE.

In another possible implementation, the UDM determines, based on indication information in a servicization operation, to request to perform the authorization check on the remote UE.

Optionally, the PAnF may first obtain the 5GPRUK #1 and the SUPI through local query based on the 5GPRUK ID #1, and then perform the authorization check on the remote UE. In addition, when the authorization on the remote UE succeeds, it is determined whether the 5GPRUK #1 needs to be updated. A specific implementation is not described herein again.

S7112: The UDM (remote) sends an authorization check response message to the PAnF (remote).

Correspondingly, the PAnF (remote) receives the authorization check response message from the UDM (remote).

The authorization check response message carries an authorization result.

In a possible implementation, the authorization result in the authorization check response message includes success or failure that indicates whether the authorization check on the remote UE succeeds. It should be understood that the step S711 is performed only when the authorization check on the remote UE succeeds. Success represents that authorization succeeds, and a representation form of success may be one piece of indication information indicating that authentication succeeds or "200 OK" information. Failure represents that authorization fails, and a representation form of failure may be one piece of indication information indicating that authentication succeeds, "403 forbidden", or other information with code 403.

It should be particularly noted that the foregoing steps S7110 to S7112 are a process in which the PAnF requests the UDM to perform the authorization check on the remote UE. When the process is performed, steps S713 and S714 do not need to be performed. When the process is not performed, the steps S713 and S714 need to be performed.

S711: The PAnF (remote) sends a key query response message to the AUSF (remote). Correspondingly, the AUSF (remote) receives the key query response message from the PAnF (remote).

For example, if the PAnF (remote) determines that the 5GPRUK #1 needs to be updated, the key query response message carries the SUPI. If the PAnF (remote) determines that the 5GPRUK #1 does not need to be updated, the key query response message carries the 5GPRUK #1 and the SUPI.

Optionally, the AUSF (remote) sends an SUPI query message of the remote UE to the PAnF (remote), and the PAnF (remote) returns the SUPI of the remote UE to the AUSF (remote) after local query. It should be understood that the SUPI of the remote UE is used as an input parameter in a subsequent step S713 or in a case in which the ProSe authentication request message #1 carries the 5GPRUK ID #1, the SUPI of the remote UE is further used as an input parameter in a step S715.

S712: The AUSF (remote) determines, based on whether the 5GPRUK #1 is received, to perform Manner 2 or Manner 3.

Optionally, if the key query response message includes the 5GPRUK #1, key query succeeds. This means that the 5GPRUK #1 does not need to be updated. If steps S7110 to S7112 in Manner 1 are not performed, or the PAnF does not perform the authorization check on the remote UE based on proximity-based service authorization information, the AUSF (remote) may perform Manner 2.

Optionally, when the PAnF determines that the remote UE has permission to use a 5G ProSe service, for example, the PAnF determines by performing steps S7110 to S7112, the PAnF feeds back the 5GPRUK #1 to the AUSF (remote). Further, the AUSF (remote) may determine, based on the 5GPRUK #1, that the remote UE has permission to use the 5G ProSe service. Then, the AUSF (remote) directly performs a step S726.

Optionally, if the key query response message does not include the 5GPRUK #1, key query fails. This means that the 5GPRUK #1 needs to be updated. In this case, the AUSF (remote) may perform a procedure in Manner 3, that is, create a 5GPRUK #2. Alternatively, if it is determined, by using steps S7110 to S7113 in Manner 1, that the remote UE has permission to use the 5G ProSe service, a service request of the remote UE may be rejected. In this case, a subsequent procedure is interrupted.

Optionally, a reason why the key query response message does not include the 5GPRUK #1 may alternatively be that a 5GPRUK ID #2 is an invalid or incorrect key identifier, the PAnF has a storage problem, or the like.

### Manner 2:

S713: The AUSF (remote) sends an authorization check request message to a UDM (remote).

Correspondingly, the UDM (remote) receives the authorization check request message from the AUSF (remote).

The authorization check request message is used to request the UDM (remote) to check whether the remote UE is authorized to use a 5G ProSe relay service, and the authorization check request message includes the SUPI of the remote UE. Optionally, the authorization check request message further includes the RSC.

For example, the authorization check request message may be a Nudm_RemoteUE_Authorization_Check Request message. This is not specifically limited in this application.

S714: The UDM (remote) sends an authorization check response message to the AUSF (remote).

Correspondingly, the AUSF (remote) receives the authorization check response message from the UDM (remote).

Specifically, before the UDM (remote) sends the authorization check response message to the AUSF (remote), the UDM checks whether the remote UE has permission to use the 5G ProSe service.

For example, the UDM determines, based on subscription data corresponding to the SUPI of the remote UE, whether the remote UE has permission to use the ProSe service.

Optionally, when the authorization check request message carries the RSC, the UDM determines, based on subscription data corresponding to the SUPI, whether the UE has permission to use a 5G ProSe service corresponding to the RSC.

In a possible implementation, the UDM determines, based on a servicization operation, to request to perform the authorization check on the remote UE.

In another possible implementation, the UDM determines, based on indication information in a servicization operation, to request to perform the authorization check on the remote UE.

The authorization check response message includes an authorization result that includes success or failure, and the authorization result indicates whether the authorization check on the remote UE succeeds. It should be understood that the following step S726 is performed only when the authorization check on the remote UE succeeds. Success represents that authorization succeeds, and a representation form of success may be one piece of indication information indicating that authentication succeeds or "200 OK" information. Failure represents that authorization fails, and a representation form of failure may be one piece of indication information indicating that authentication succeeds, "403 forbidden", or other information with code 403. It should be understood that the following step S726 is performed only when the authorization check on the remote UE succeeds.

For example, the authorization check response message may be a Nudm_RemoteUE_Authorization_Check Response message. This is not specifically limited in this application.

It should be noted that for specific implementations of the foregoing steps S713 and S714 and specific names or meanings of interaction messages, refer to steps S412 and S413 in the foregoing method 400. For brevity, details are not described herein again.

### Manner 3

S715: The AUSF (remote) obtains an authentication vector through a UDM (remote).

For example, the AUSF uses the SUPI that is of the remote UE and that is obtained in the step S711 as an input parameter, and sends an authentication vector request message to the UDM, to request to obtain the authentication vector. Correspondingly, the UDM returns the authentication vector to the AUSF based on the request of the AUSF. The authentication vector carries KAUSF_P.

In this step, the UDM (remote) needs to check whether the remote UE is authorized to use a 5G ProSe relay service. A subsequent ProSe authentication procedure, that is, steps S716 to S721, is performed only when the authorization check on the remote UE succeeds.

S716: The AUSF (remote) sends a ProSe authentication response message #1 to the AMF (relay).

Correspondingly, the AMF (relay) receives the ProSe authentication response message #1 from the AUSF (remote).

The ProSe authentication response message #1 includes an EAP message #1.

S717: The AMF (relay) sends a relay authentication request message to the relay UE.

Correspondingly, the relay UE receives the relay authentication request message from the AMF (relay).

The relay authentication request message is a NAS message, and the relay authentication request message includes the EAP message #1 and the transaction identifier.

S718: The relay UE sends the EAP information #1 to the remote UE.

Correspondingly, the remote UE receives the EAP information #1 from the relay UE.

S719: The remote UE sends EAP information #2 to the relay UE.

Correspondingly, the relay UE receives the EAP information #2 from the remote UE.

S720: The relay UE sends a relay authentication response message to the AMF (relay).

Correspondingly, the AMF (relay) receives the relay authentication response message from the relay UE.

The relay authentication response message is a NAS message, and the relay authentication response message includes the EAP information #2 and the transaction identifier.

S721: The AMF (relay) sends a ProSe authentication request message #2 to the AUSF (remote).

Correspondingly, the AUSF (remote) receives the ProSe authentication request message #2 from the AMF (relay).

The ProSe authentication request message #2 includes the EAP information #2.

It should be understood that the AUSF (remote) performs the following step S722a only when ProSe authentication succeeds.

S722a: The AUSF (remote) generates a 5GPRUK #2 and a 5GPRUK ID #2.

Specifically, the AUSF (remote) may generate, through derivation, the 5GPRUK #2 and the 5GPRUK ID #2 by using the RSC (refer to the step S707), the SUPI (refer to the step S711 or S715), and KAUSF_P as input parameters.

S722b: The remote UE generates and stores a newly generated 5GPRUK #2 and a newly generated 5GPRUK ID #2.

A specific implementation is similar to that in the step S722a. Details are not described herein again.

That is, after generating the new 5GPRUK #2 and the new 5GPRUK ID #2, the remote UE locally stores the 5GPRUK #2 and the 5GPRUK ID #2 for subsequently generating a KNR_ProSe, so that a PC5 security connection is established between the remote UE and the relay UE.

Optionally, if the remote UE locally stores an old 5GPRUK #2 and an old 5GPRUK ID #2 before performing the step S722b, after performing the step S722b, the remote UE stores the updated 5GPRUK #1 and the updated 5GPRUK ID #1. That is, the remote UE replaces the locally stored old 5GPRUK #2 and the locally stored old 5GPRUK ID #2 with the newly generated 5GPRUK #1 and the newly generated 5GPRUK ID #1.

S723: The AUSF (remote) sends a key storage request message to a PAnF (remote).

Correspondingly, the PAnF (remote) receives the key storage request message from the AUSF (remote).

The key storage request message includes the SUPI, the RSC, the 5GPRUK #1, and the 5GPRUK ID #1.

S724: The PAnF (remote) stores the 5GPRUK #1 and the 5GPRUK ID #1.

Optionally, if the PAnF (remote) locally stores an old 5GPRUK #1 and an old 5GPRUK ID #1 before the step S723 is performed, after the step S723 is performed, the PAnF (remote) deletes the locally stored old 5GPRUK #1 and the locally stored old 5GPRUK ID #1, and stores the newly generated 5GPRUK #2 and the newly generated 5GPRUK ID #2. That is, the PAnF (remote) replaces the 5GPRUK #1 and the 5GPRUK ID #1 with the 5GPRUK #2 and the 5GPRUK ID #2.

S725: The PAnF (remote) sends a key storage response message to the AUSF (remote).

Correspondingly, the AUSF (remote) receives the key storage response message from the PAnF (remote).

It should be noted that for specific implementations of the foregoing steps S713 to S725 and specific names or meanings of interaction messages, refer to steps S611 to S623 in the foregoing method 600. For brevity, details are not described herein again.

S726: The AUSF (remote) generates a key KNR_ProSe.

For example, the AUSF (remote) generates the key KNR_ProSe based on the 5GPRUK #2 obtained in the step S722a or the 5GPRUK #1 obtained in S711, randomly generated Nonce_2, and Nonce_1 (refer to the step S707) sent from a UE side.

S727: The AUSF (remote) sends a ProSe authorization response message #2 to the AMF (relay).

Correspondingly, the AMF (relay) receives the ProSe authorization response message #2 from the AUSF (remote).

The ProSe authorization response message #2 includes Nounce_2, the KNR_ProSe, and the like.

Optionally, the ProSe authorization response message #2 further includes EAP success.

S728: The AMF (relay) sends a relay key response message to the relay UE.

Correspondingly, the relay UE receives the relay key response message from the AMF (relay).

The relay key response message includes the KNR_ProSe, Nounce_2, and the like.

Optionally, the relay key response message further includes the EAP success.

S729: The relay UE sends a direct connection security mode command message to the remote UE.

Correspondingly, the remote UE receives the direct connection security mode command message from the relay UE.

The direct connection security mode command message includes Nounce_2 and the like. It should be understood that, before performing the step S729, the relay UE locally stores the KNR_ProSe regenerated by the AUSF (remote).

Optionally, the direct connection security mode command message further includes the EAP success.

S730: The remote UE generates a KNR_ProSe.

A specific implementation is similar to that in the step S726. Details are not described herein again. It should be noted that the KNR_ProSe generated in the step S730 is the same as the KNR_ProSe generated in the step S726, and the KNR_ProSe is used to perform PC5 security communication between the remote UE and the relay UE.

S731: The remote UE sends a direct connection security mode complete message to the relay UE.

Correspondingly, the relay UE receives the direct connection security mode complete message from the remote UE.

The direct connection security mode complete message is used to indicate that construction of a secure environment between the remote UE and the relay UE is completed.

S732: The relay UE sends a direct communication accept message to the remote UE.

Correspondingly, the remote UE receives the direct communication accept message from the relay UE.

It should be noted that for specific implementations of the foregoing steps S726 to S732 and specific names or meanings of interaction message, refer to steps S624 to S630 in the foregoing method 600. For brevity, details are not described herein again.

According to the method disclosed in this application, when the remote UE establishes a ProSe PC5 control plane security connection, the PAnF (remote) determines whether to update the 5GPRUK #1, that is, a 5GPURK update procedure triggered by the PAnF (remote) is added. In addition, in the technical solution of this application, when it is determined to continue to use the 5GPRUK #1, and the AUSF (remote) receives the 5GPRUK #1 or the PAnF (remote) receives the 5GPRUK ID #1, a check on whether the remote UE has permission to use a 5G ProSe relay service is added. In addition, the 5GPRUK #1 may continue to be used only after the check succeeds. This improves user experience when ensuring secure network communication.

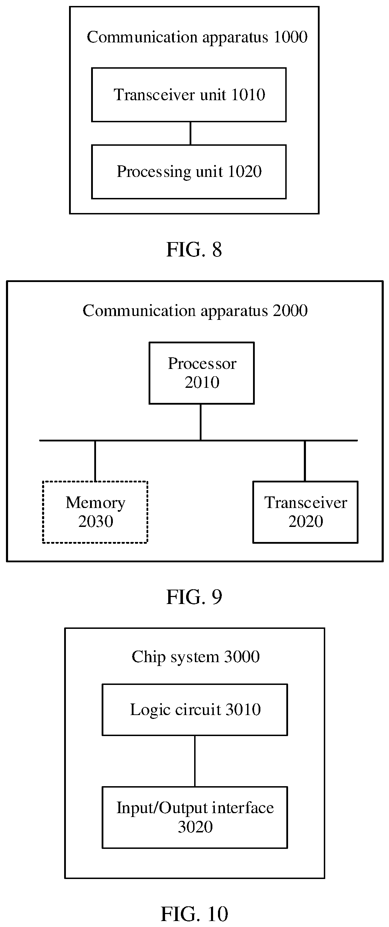

The foregoing describes in detail embodiments of this application in a communication method side with reference to FIG. 1 to FIG. 7A, FIG. 7B, FIG. 7C, and FIG. 7D. The following describes in detail embodiments of this application in a communication apparatus side with reference to FIG. 8 and FIG. 9. It should be understood that descriptions of the apparatus embodiment correspond to descriptions of the method embodiment. Therefore, for a part not described in detail, refer to the foregoing method embodiments.

FIG. 8 is a schematic block diagram of a communication apparatus according to an embodiment of this application. As shown in FIG. 8, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a communication unit.

In a possible design, the apparatus 1000 may implement steps or procedures performed by a first communication apparatus (remote UE) in the foregoing method embodiments. The processing unit 1020 is configured to perform processing-related operations performed by the remote UE in the foregoing method embodiments, and the transceiver unit 1010 is configured to perform sending/receiving-related operations performed by the remote UE in the foregoing method embodiments.

In another possible design, the apparatus 1000 may implement steps or procedures performed by an authentication server function network element AUSF (remote) in the foregoing method embodiments. The transceiver unit 1010 is configured to perform sending/receiving-related operations performed by the AUSF (remote) in the foregoing method embodiments, and the processing unit 1020 is configured to perform processing-related operations performed by the AUSF (remote) in the foregoing method embodiments.

In another possible design, the apparatus 1000 may implement steps or procedures performed by a proximity-based service anchor function network element PAnF (remote) in the foregoing method embodiments. The transceiver unit 1010 is configured to perform sending/receiving-related operations performed by the PAnF (remote) in the foregoing method embodiments, and the processing unit 1020 is configured to perform processing-related operations performed by the PAnF (remote) in the foregoing method embodiments.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1000 may be specifically a transmit end in the foregoing embodiments, and may be configured to perform procedures and/or steps corresponding to the transmit end in the foregoing method embodiments; or the apparatus 1000 may be specifically s receive end in the foregoing embodiments, and may be configured to perform procedures and/or steps corresponding to the receive end in the foregoing method embodiments. To avoid repetition, details are not described herein again.

The apparatus 1000 in the foregoing solutions has a function of implementing corresponding steps performed by the transmit end in the foregoing methods, or the apparatus 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver). Another unit, such as the processing unit, may be replaced by a processor to separately perform a sending and receiving operation and a processing-related operation in each method embodiment.

In addition, the transceiver unit may alternatively be a transceiver circuit (for example, may include a receiving circuit and a sending circuit), and the processing unit may be a processing circuit. In this embodiment of this application, the apparatus in FIG. 8 may be the receive end or the transmit end in the foregoing embodiments, or may be a chip or a chip system, for example, a system on chip (system on chip, SoC). The transceiver unit may be an input/output circuit or a communication interface. The processing unit is a processor a microprocessor or an integrated circuit integrated on the chip. This is not limited herein.

FIG. 9 shows a communication apparatus 2000 according to an embodiment of this application. As shown in FIG. 9, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030, and the memory 2030 communicates with the processor 2010 and the transceiver 2020 through an internal connection path. The memory 2030 is configured to store instructions, and the processor 2010 may execute the instructions stored in the memory 2030.

In a possible implementation, the apparatus 2000 is configured to implement procedures and steps corresponding to remote UE in the foregoing method embodiments.

In another possible implementation, the apparatus 2000 is configured to implement procedures and steps corresponding to an AUSF (remote) in the foregoing method embodiments.

In still another possible implementation, the apparatus 2000 is configured to implement procedures and steps corresponding to a PAnF (remote) in the foregoing method embodiments.

It should be understood that the apparatus 2000 may be specifically a transmit end or a receive end in the foregoing embodiments, or may be a chip or a chip system. Correspondingly, the transceiver 2020 may be a transceiver circuit of the chip. This is not limited herein. Specifically, the apparatus 2000 may be configured to perform steps and/or procedures corresponding to the transmit end or the receive end in the foregoing method embodiments.

Optionally, the memory 2030 may include a read-only memory and a random access memory, and provide instructions and data to the processor. A part of the memory may further include a non-volatile random access memory. For example, the memory may further store information about a device type. The processor 2010 may be configured to execute the instructions stored in the memory. When the processor 2010 executes the instructions stored in the memory, the processor 2010 is configured to perform the steps and/or the procedures corresponding to the transmit end or the receive end in the foregoing method embodiments.

In an implementation process, steps in the foregoing methods may be implemented by using a hardware integrated logical circuit in the processor or instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in this embodiment of this application may be an integrated circuit chip, and has a signal processing capability. In an implementation process, steps in the foregoing method embodiments may be implemented by using a hardware integrated logical circuit in the processor or instructions in a form of software. The processor may be a general-purpose processor, a digital signal processor, an application-specific integrated circuit, a field programmable gate array or another programmable logic device, a discrete gate or a transistor logic device, or a discrete hardware component. The processor in this embodiment of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitation, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory in the systems and methods described in this specification includes but is not limited to these and any memory of another proper type.

FIG. 10 is a schematic diagram of a chip system 3000 according to an embodiment of this application. The chip system 3000 (or may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, to enable the chip system 3000 to implement methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement operations performed by a remote terminal device (remote UE) (for example, remote UE in FIG. 2A, FIG. 2B, and FIG. 2C to FIG. 7A, FIG. 7B, FIG. 7C, and FIG. 7D) in the foregoing method embodiments.

For example, the logic circuit 3010 is configured to implement processing-related operations performed by the remote UE in the foregoing method embodiments, for example, processing-related operations performed by the remote UE in the embodiment shown in FIG. 2A, FIG. 2B, and FIG. 2C, or processing-related operations performed by the remote UE in any one of embodiments shown in FIG. 3A and FIG. 3B to FIG. 7A, FIG. 7B, FIG. 7C, and FIG. 7D. The input/output interface 3020 is configured to implement sending and/or receiving-related operations performed by a mobility management network element in the foregoing method embodiments, for example, sending and/or receiving-related operations performed by the remote UE in the embodiment shown in FIG. 2A, FIG. 2B, and FIG. 2C, or sending and/or receiving-related operations performed by the remote UE in any one of embodiments shown in FIG. 3A and FIG. 3B to FIG. 7A, FIG. 7B, FIG. 7C, and FIG. 7D.

In another solution, the chip system 3000 is configured to implement operations performed by an AUSF (remote) (for example, an AUSF (remote) in FIG. 2A, FIG. 2B, and FIG. 2C to FIG. 7A, FIG. 7B, FIG. 7C, and FIG. 7D) in the foregoing method embodiments.

For example, the logic circuit 3010 is configured to implement processing-related operations performed by the AUSF (remote) in the foregoing method embodiments, for example, processing-related operations performed by the AUSF (remote) in the embodiment shown in FIG. 2A, FIG. 2B, and FIG. 2C, or processing-related operations performed by the AUSF (remote) in any one of embodiments shown in FIG. 3A and FIG. 3B to FIG. 7A, FIG. 7B, FIG. 7C, and FIG. 7D. The input/output interface 3020 is configured to implement sending and/or receiving-related operations performed by the AUSF (remote) in the foregoing method embodiments, for example, sending and/or receiving-related operations performed by the AUSF (remote) in the embodiment shown in FIG. 2A, FIG. 2B, and FIG. 2C, or sending and/or receiving-related operations performed by the AUSF (remote) in any one of embodiments shown in FIG. 3A and FIG. 3B to FIG. 7A, FIG. 7B, FIG. 7C, and FIG. 7D.

In still another solution, the chip system 3000 is configured to implement operations performed by a PAnF (remote) (for example, a PAnF (remote) in FIG. 2A, FIG. 2B, and FIG. 2C to FIG. 7A, FIG. 7B, FIG. 7C, and FIG. 7D) in the foregoing method embodiments.

For example, the logic circuit 3010 is configured to implement processing-related operations performed by the PAnF (remote) in the foregoing method embodiments, for example, processing-related operations performed by the PAnF (remote) in the embodiment shown in FIG. 2A, FIG. 2B, and FIG. 2C, or processing-related operations performed by the PAnF (remote) in any one of embodiments shown in FIG. 3A and FIG. 3B to FIG. 7A, FIG. 7B, FIG. 7C, and FIG. 7D. The input/output interface 3020 is configured to implement sending and/or receiving-related operations performed by the PAnF (remote) in the foregoing method embodiments, for example, sending and/or receiving-related operations performed by the PAnF (remote) in the embodiment shown in FIG. 2A, FIG. 2B, and FIG. 2C, or sending and/or receiving-related operations performed by the PAnF (remote) in any one of embodiments shown in FIG. 3A and FIG. 3B to FIG. 7A, FIG. 7B, FIG. 7C, and FIG. 7D.

An embodiment of this application further provides a computer-readable storage medium, and the computer-readable storage medium stores computer instructions for implementing methods performed by devices (for example, a remote terminal device, a relay terminal device, an AUSF (remote), or a PAnF (remote)) in the foregoing method embodiments.

An embodiment of this application further provides a computer program product, including instructions. When the instructions are executed by a computer, methods performed by devices (for example, a remote terminal device, a relay terminal device, an AUSF (remote), or a PAnF (remote)) in the foregoing method embodiments are implemented.

An embodiment of this application further provides a communication system, including one or more of the foregoing remote terminal device, the relay terminal device, the AUSF (remote), and the PAnF (remote).

For explanations and beneficial effect of related content of any one of the apparatuses provided above, refer to the corresponding method embodiment provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by an authentication server function network element, a first remote user key of a first communication apparatus; and
when it is determined that the first communication apparatus has permission to use a relay service, generating, by the authentication server function network element, a first proximity-based service key based on the first remote user key, wherein the first proximity-based service key is used by the first communication apparatus to establish a security connection to a second communication apparatus.

2. The method according to claim 1, wherein the obtaining, by an authentication server function network element, a first remote user key comprises:
receiving, by the authentication server function network element, a proximity-based service authentication request message from the first communication apparatus through the second communication apparatus, wherein the proximity-based service authentication request message comprises an identifier of the first remote user key and relay service code, and the relay service code is used by the first communication apparatus to establish a security connection to the second communication apparatus;
sending, by the authentication server function network element, a key query request message to a proximity-based service anchor function network element, wherein the key query request message comprises the identifier of the first remote user key and the relay service code; and
receiving, by the authentication server function network element, a key query response message from the proximity-based service anchor function network element, wherein the key query response message comprises the first remote user key and a subscription permanent identifier of the first communication apparatus.

3. The method according to claim 1 or 2, wherein the method further comprises:
determining, by the authentication server function network element, whether the first communication apparatus has permission to use the relay service.

4. The method according to claim 3, wherein the determining, by the authentication server function network element, whether the first communication apparatus has permission to use the relay service comprises:
sending, by the authentication server function network element, an authorization check request message to a unified data management network element, wherein the authorization check request message comprises the subscription permanent identifier of the first communication apparatus;
receiving, by the authentication server function network element, an authorization check response message from the unified data management network element, wherein the authorization check response message indicates an authorization check result; and
determining, by the authentication server function network element based on the authorization check result, whether the first communication apparatus has permission to use the relay service.

5. The method according to any one of claims 2 to 4, wherein the receiving, by the authentication server function network element, a key query response message from the proximity-based service anchor function network element comprises:
when the proximity-based service anchor function network element determines that the first communication apparatus has permission to use the relay service, receiving, by the authentication server function network element, the key query response message from the proximity-based service anchor function network element; and
determining, by the authentication server function network element based on the first remote user key carried in the key query response message, that the first communication apparatus has permission to use the relay service.

6. A communication method, comprising:
obtaining, by a proximity-based service anchor function network element, a first remote user key of a first communication apparatus; and
when determining that the first communication apparatus has permission to use a relay service, sending, by the proximity-based service anchor function network element, the first remote user key to an authentication server function network element.

7. The method according to claim 6, wherein the obtaining, by a proximity-based service anchor function network element, a first remote user key comprises:
receiving, by the proximity-based service anchor function network element, a key query request message from the authentication server function network element, wherein the key query request message comprises an identifier of the first remote user key and relay service code; and
obtaining, by the proximity-based service anchor function network element through local query based on the identifier of the first remote user key and the relay service code, the first remote user key and a subscription permanent identifier of the first communication apparatus.

8. The method according to claim 6 or 7, wherein the method further comprises:
determining, by the proximity-based service anchor function network element, whether the first communication apparatus has permission to use the relay service.

9. The method according to claim 8, wherein the determining, by the proximity-based service anchor function network element, whether the first communication apparatus has permission to use the relay service comprises:
sending, by the proximity-based service anchor function network element, an authorization check request message to a unified data management network element, wherein the authorization check request message comprises the subscription permanent identifier of the first communication apparatus;
receiving, by the proximity-based service anchor function network element, an authorization check response message from the unified data management network element, wherein the authorization check response message indicates an authorization check result; and
determining, by the proximity-based service anchor function network element based on the authorization check result, whether the first communication apparatus has permission to use the relay service.

10. The method according to claim 8, wherein the determining, by the proximity-based service anchor function network element, whether the first communication apparatus has permission to use the relay service comprises:
obtaining, by the proximity-based service anchor function network element, proximity-based service authorization information through local query based on the subscription permanent identifier of the first communication apparatus; and
determining, by the proximity-based service anchor function network element based on the proximity-based service authorization information, whether the first communication apparatus has permission to use the relay service.

11. The method according to claim 10, wherein the method further comprises:
receiving, by the proximity-based service anchor function network element, the proximity-based service authorization information from the authentication server function network element.

12. A communication method, comprising:
determining, by a first communication apparatus, whether a first remote user key needs to be updated;
when determining that the first remote user key needs to be updated, sending, by the first communication apparatus, a second proximity-based service authentication request message to an authentication server function network element through a second communication apparatus, wherein the second proximity-based service authentication request message comprises a subscription concealed identifier of the first communication apparatus and relay service code, and the relay service code is used by the first communication apparatus to establish a security connection to the second communication apparatus; and
generating, by the first communication apparatus, a second remote user key.

13. The method according to claim 12, wherein the method further comprises:
when determining that the first remote user key does not need to be updated, sending, by the first communication apparatus, a first proximity-based service authentication request message to the authentication server function network element through the second communication apparatus, wherein the first proximity-based service authentication request message comprises an identifier of the first remote user key and the relay service code; and
generating, by the first communication apparatus, a first proximity-based service key based on the first remote user key, wherein the first proximity-based service key is used by the first communication apparatus to establish a security connection to the second communication apparatus.

14. The method according to claim 12 or 13, wherein the determining, by a first communication apparatus, whether a first remote user key needs to be updated comprises:
determining, by the first communication apparatus according to a local policy, whether the first remote user key needs to be updated.

15. The method according to any one of claims 12 to 14, wherein the generating, by the first communication apparatus, a second remote user key comprises:
generating, by the first communication apparatus, the second remote user key based on a subscription permanent identifier of the first communication apparatus, the relay service code, and a root key of the authentication server function network element.

16. A communication method, comprising:
determining, by a first communication apparatus, whether a first remote user key needs to be updated;
when determining that the first remote user key does not need to be updated, sending, by the first communication apparatus, a first proximity-based service authentication request message to an authentication server function network element through a second communication apparatus, wherein the first proximity-based service authentication request message comprises an identifier of the first remote user key and relay service code, and the relay service code indicates the first communication apparatus to establish a security connection to the second communication apparatus;
receiving, by the authentication server function network element, the first proximity-based service authentication request message from the first communication apparatus, and obtaining, by the authentication server function network element, the first remote user key and a subscription permanent identifier of the first communication apparatus based on the identifier of the first remote user key; and
when determining that the first communication apparatus has permission to use a relay service, generating, by the authentication server function network element, a first proximity-based service key based on the first remote user key, wherein the first proximity-based service key is used by the first communication apparatus to establish a security connection to the second communication apparatus.

17. The method according to claim 16, wherein the obtaining, by the authentication server function network element, the first remote user key and a subscription permanent identifier of the first communication apparatus based on the identifier of the first remote user key comprises:
sending, by the authentication server function network element, a key query request message to a proximity-based service anchor function network element, wherein the key query request message comprises the identifier of the first remote user key and the relay service code;
receiving, by the proximity-based service anchor function network element, the key query request message from the authentication server function network element, and obtaining, by the proximity-based service anchor function network element through local query based on the identifier of the first remote user key and the relay service code, the first remote user key and the subscription permanent identifier of the first communication apparatus;
sending, by the proximity-based service anchor function network element, a key query response message to the authentication server function network element, wherein the key query response message comprises the first remote user key and the subscription permanent identifier of the first communication apparatus; and
receiving, by the authentication server function network element, the key query response message from the proximity-based service anchor function network element.

18. The method according to claim 16 or 17, wherein the method further comprises:
determining, by the authentication server function network element, whether the first communication apparatus has permission to use the relay service.

19. The method according to claim 18, wherein the determining, by the authentication server function network element, whether the first communication apparatus has permission to use the relay service comprises:
sending, by the authentication server function network element, an authorization check request message to a unified data management network element, wherein the authorization check request message comprises the subscription permanent identifier of the first communication apparatus;
receiving, by the unified data management network element, the authorization check request message from the authentication server function network element, and performing, by the unified data management network element, an authorization check on the first communication apparatus based on the subscription permanent identifier of the first communication apparatus;
sending, by the unified data management network element, an authorization check response message to the authentication server function network element, wherein the authorization check response message indicates an authorization check result; and
receiving, by the authentication server function network element, the authorization check response message from the unified data management network element, and determining, by the authentication server function network element based on the authorization check result, whether the first communication apparatus has permission to use the relay service.

20. The method according to any one of claims 17 to 19, wherein before the sending, by the proximity-based service anchor function network element, the key query response message to the authentication server function network element, the method further comprises:
obtaining, by the proximity-based service anchor function network element, proximity-based service authorization information through local query based on the subscription permanent identifier of the first communication apparatus; and
determining, by the proximity-based service anchor function network element based on the proximity-based service authorization information, whether the first communication apparatus has permission to use the relay service.

21. The method according to any one of claims 17 to 19, wherein before the sending, by the proximity-based service anchor function network element, the key query response message to the authentication server function network element, the method further comprises:
sending, by the proximity-based service anchor function network element, the authorization check request message to the unified data management network element, wherein the authorization check request message comprises the subscription permanent identifier of the first communication apparatus;
receiving, by the unified data management network element, the authorization check request message from the proximity-based service anchor function network element, and performing, by the unified data management network element, the authorization check on the first communication apparatus based on the subscription permanent identifier of the first communication apparatus;
sending, by the unified data management network element, the authorization check response message to the proximity-based service anchor function network element, wherein the authorization check response message indicates the authorization check result; and
receiving, by the proximity-based service anchor function network element, the authorization check response message from the unified data management network element, and determining, by the proximity-based service anchor function network element based on the authorization check result, whether the first communication apparatus has permission to use the relay service.

22. The method according to any one of claims 17 to 21, wherein the sending, by the proximity-based service anchor function network element, the key query response message to the authentication server function network element comprises:
when determining that the first communication apparatus has permission to use the relay service, sending, by the proximity-based service anchor function network element, the key query response message to the authentication server function network element; and
receiving, by the authentication server function network element, the key query response message from the proximity-based service anchor function network element, wherein
the determining, by the authentication server function network element, whether the first communication apparatus has permission to use the relay service comprises:
determining, by the authentication server function network element based on the first remote user key, that the first communication apparatus has permission to use the relay service.

23. The method according to any one of claims 16 to 22, wherein the method further comprises:
when determining that the first remote user key needs to be updated, sending, by the first communication apparatus, a second proximity-based service authentication request message to the authentication server function network element through the second communication apparatus, wherein the second proximity-based service authentication request message comprises a subscription concealed identifier of the first communication apparatus and the relay service code;
receiving, by the authentication server function network element, the second proximity-based service authentication request message from the first communication apparatus, and performing, by the authentication server function network element, proximity-based service authentication on the first communication apparatus based on the subscription concealed identifier of the first communication apparatus; and
when determining that the proximity-based service authentication succeeds, generating, by the authentication server function network element, a second remote user key, and generating, by the first communication apparatus, the second remote user key.

24. A communication apparatus, comprising one or more functional modules, wherein the one or more functional modules or network elements are configured to perform the method according to any one of claims 1 to 5, configured to perform the method according to any one of claims 6 to 11, or configured to perform the method according to any one of claims 12 to 15.

25. A communication apparatus, comprising a processor, wherein the processor is coupled to a memory, and the processor is configured to execute a computer program stored in the memory, to enable the apparatus to perform the method according to any one of claims 1 to 5, to enable the apparatus to perform the method according to any one of claims 6 to 11, or to enable the apparatus to perform the method according to any one of claims 12 to 15.

26. A communication system, comprising: a first communication apparatus, an authentication server function network element, and a proximity-based service anchor function network element, wherein the authentication server function network element is configured to perform the method according to any one of claims 1 to 5, the proximity-based service anchor function network element is configured to perform the method according to any one of claims 6 to 11, and the first communication apparatus is configured to perform the method according to any one of claims 12 to 15.

27. A chip, comprising a processor, configured to: invoke a computer program from a memory and run the computer program, to enable an authentication server function network element on which the chip is installed to perform the method according to any one of claims 1 to 5, enable a proximity-based service anchor function network element on which the chip is installed to perform the method according to any one of claims 6 to 11, or enable a first communication apparatus on which the chip is installed to perform the method according to any one of claims 12 to 15.

28. A computer-readable storage medium, wherein the computer-readable storage medium stores a computer program, and when the computer program is run, a computer is enabled to perform the method according to any one of claims 1 to 5, the computer is enabled to perform the method according to any one of claims 6 to 11, or the computer is enabled to perform the method according to any one of claims 12 to 15.

29. A computer program, wherein when the computer program is executed by a communication apparatus, the method according to any one of claims 1 to 5 is implemented, the method according to any one of claims 6 to 11 is implemented, or the method according to any one of claims 12 to 15 is implemented.
